(19)

Europäisches Patentamt

European Patent Office

Office européen des brevets

(11) **EP 4 290 425 A1**

(12) **EUROPEAN PATENT APPLICATION**

(43) Date of publication:
**13.12.2023 Bulletin 2023/50**

(21) Application number: **23178301.0**

(22) Date of filing: **08.06.2023**

(51) International Patent Classification (IPC):
**G06N 10/60** (2022.01)       **G06N 10/20** (2022.01)
**G06N 10/40** (2022.01)

(52) Cooperative Patent Classification (CPC):
**G06N 10/60; G06N 10/20;** G06N 10/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.06.2022 GB 202208547
06.04.2023 GB 202305219**

(71) Applicant: **Phasecraft Limited
London Greater London W1T 4PW (GB)**

(72) Inventors:
• **CUBITT, Toby**
  **London, W1T 4PW (GB)**
• **ZHANG, Daniel**
  **London, W1T 4PW (GB)**
• **BOSSE, Jan Lukas**
  **London, W1T 4PW (GB)**

(74) Representative: **Cavanna, Edward Paul et al
Mathys & Squire
The Shard
32 London Bridge Street
London SE1 9SG (GB)**

(54) **APPARATUS AND METHODS FOR PREPARING REPRESENTATIONS OF QUANTUM STATES ON QUANTUM COMPUTERS**

(57)     The present invention provides methods and apparatuses for approximating a ground state or a Gibbs state of a k-local Hamiltonian using a quantum computer system. The procedure begins by providing a set of local generalised measurements corresponding to the terms of the k-local Hamiltonian. A set of data qudits is initialised into an initial state and a local generalised measurement is subsequently performed to perturb a subset of the data qudits from an initial state to a perturbed state. The perturbation is accepted or rejected based on a measurement outcome of the local generalised measurement. The perturbation and accept/reject steps are repeated unless or until a stopping condition is met. The result of the procedure is to provably drive the encoded Hamiltonian toward or even into a ground state or a Gibbs state, a useful starting point in many quantum algorithms, such as those relating to materials simulation.

Figure 4

EP 4 290 425 A1

## Description

### Field of Invention

The present invention relates to methods for approaching a ground state or a Gibbs state of a Hamiltonian represented on a quantum computer and to apparatuses for performing the method.

### Background

Finding ground states of quantum many-body systems is one of the most important and one of the most notoriously difficult-problems in physics, both in scientific research and in practical applications. Large amounts of computational resources in academia and industry are devoted to solving this or closely related problems in computational modelling of quantum chemistry, materials science and condensed matter physics. Meanwhile, in theoretical physics, many famous, long-standing open problems in condensed matter and in high-energy physics concern ground states of quantum many-body systems.

A number of successful classical variational algorithms for solving ground state problems have been developed over the last half century and are now routinely used in computational modelling. Ranging from density functional theory (DFT), widely used in quantum chemistry and materials modelling; to quantum Monte-Carlo, the method of choice for many condensed matter and high-energy physics problems; to tensor-network methods (of which the highly successful density matrix renormalisation group (DMRG) algorithm for 1D systems can be viewed as an example), increasingly seeing use in condensed matter theory.

However, although these methods are highly successful at solving ground state problems in certain cases, they fail to give meaningful results in others. Indeed, from a complexity-theoretic perspective all these methods must fail even for some classical systems. Even for simple 2D many-body spin-lattice systems with nearest-neighbour interactions, the ground state energy problem is NP-hard. I.e., it is in a precise sense at least as hard as every other problem in the complexity class NP. Despite the fact that these classical systems are guaranteed to be frustration-free and have a finite spectral gap by construction.

For quantum systems, the situation is more challenging still. The quantum ground state energy problem, usually called the "local Hamiltonian problem", is QMA-hard: a complexity class containing-and believed to be strictly larger than-the class NP. As in the classical setting, it is still QMA-hard for (apparently) very simple 2D quantum spin-lattice models with nearest-neighbour interactions, and even for 1D spin chains. (On the other hand, all QMA-hard many-body systems to date exhibit a spectral gap that decreases with system size.)

In the early 1980s, Feynman suggested that, if quantum many-body systems were so difficult to solve computationally, perhaps quantum mechanics had greater computational power than classical mechanics, therefore one should use quantum computers to solve these problems. However, the problem Feynman was targeting was not ground state problems, but the (also classically challenging) problem of simulating the time-dynamics of quantum many-body systems. Time-dynamics simulation is known to be tractable on quantum computers. (It is in the class BQP; whereas this is not known of any general sub-exponential-time classical algorithm.) However, the quantum ground state energy problem is QMA-hard, not in BQP. Even quantum computers are not expected to be able to solve ground state problems in sub-exponential time in general.

There are a number of ground state preparation algorithms which seek to find or approach a ground state of a given Hamiltonian.

However, these methods all either place a restriction on the Hamiltonian or do not always succeed in approaching the ground state. These methods are explained in more detail below.

### Phase estimation

The quantum phase estimation algorithm applied to the unitary time-evolution operator generated by the Hamiltonian collapses the state into a random eigenstate of the Hamiltonian, along with an estimate of its corresponding energy eigenvalue (modulo $2\pi$). If the Hamiltonian is suitably rescaled to ensure all eigenvalues are in the interval $[-\pi, \pi]$, and assuming the eigenvalues are estimated to sufficient precision to resolve the ground state energy, this allows one to rank the energy of the eigenstates produced, and with sufficiently (exponentially in the number of qudits) many repetitions, generate and identify the ground state with high probability.

However, knowing what precision in the energy estimate suffices requires prior knowledge of (a lower bound on) the spectral gap. Moreover, implementing each phase estimation repetition requires a complex (albeit polynomial-time) quantum computation, involving both the quantum Fourier transform and the Hamiltonian simulation algorithm. It is certainly beyond the reach of near-term hardware, requiring scalable, fault-tolerant quantum computers before it becomes feasible on systems of interest.

**Adiabatic state preparation**

Adiabatic state preparation, like its close cousin adiabatic quantum computation, is based on the adiabatic theorem in quantum mechanics. In adiabatic state preparation, the quantum system is initialised in the ground state of some simple Hamiltonian $H_0$ whose ground state is easy to prepare, e.g., the all $|0\rangle$ ground state of the Hamiltonian $H_0 = \sum_i |1\rangle\langle 1|_i$. By slowly transforming the Hamiltonian from $H_0$ to the Hamiltonian of interest, $H_1$ (e.g. by varying the parameter linearly t from 0 to 1 in $H(t)=(1-t)H_0 + tH_1$; more complex and sophisticated paths are also well-studied), the adiabatic theorem tells us that the state of the system will track the instantaneous ground state of H(t). Thus, at the end of the process, this will have prepared the ground state of $H_1$. The adiabatic theorem itself follows from solving the time-dependent Schrödinger equation and taking the adiabatic approximation, where the rate of change of the Hamiltonian is much slower than the instantaneous spectral gap of H(t). This gives the conditions under which adiabatic state preparation will succeed: the spectral gap along the entire adiabatic path must remain large relative to the speed at which the Hamiltonian is varied. In particular, this means that if the final Hamiltonian $H_1$ is in a different phase to the initial Hamiltonian He, so that the spectral gap vanishes at some point along the path, the adiabatic algorithm may fail. Moreover, the number of states within energy $E$ of the ground state (the density of states) must scale at most polynomially in $E$.

Whilst adiabatic state preparation provably succeeds if the conditions of the adiabatic theorem are fulfilled, in certain cases the spectral gap becomes exponentially small along the given path, and the algorithm is necessarily exponential-time. In other cases, the density of state scales exponentially (e.g. for NP-hard classical Hamiltonians). In many cases of interest, no bound is known on how fast the spectral gap closes, or even any proof that the spectral gap doesn't vanish along the path. (Indeed, in general, the spectral gap question is not just hard, it is provably unsolvable. Though to date this has only been shown for extremely artificial Hamiltonians.)

Fast quantum algorithms for traversing paths of eigenstates. 2010. arXiv: 1005.3034 [quant-ph] develops a digital version of adiabatic state preparation, which relaxes some of the requirements of the standard adiabatic theorem. But it still requires conditions on the eigenvalues and state overlaps along the whole discrete sequence of Hamiltonians.

Due to these limitations, in practice adiabatic state preparation is generally used as a heuristic algorithm. By trying different rates of adiabatic variation, if the final state is consistent when the rate of variation is low enough, it will hopefully be a good estimate of the ground state. Of course, due to the complexity theory results discussed above, this must fail for at least some cases. Moreover, determining which cases it will succeed and fail on, is as itself as hard as solving the original problem.

Even where it works, implementing adiabatic state preparation on a (digital) quantum computer requires significant overhead, since the continuous-time dynamics under the varying Hamiltonian H(t) must be approximated by a discretised time evolution (e.g. by Trotterisation or one of the other techniques for quantum time-dynamics simulation). This run-time overhead can be large, as the discretisation errors must be sufficiently small relative to the minimum spectral gap along the adiabatic path.

Furthermore, as in any unitary quantum computation, in the absence of error correction, any gate errors during the computation accumulate linearly with the run-time of the algorithm. Meanwhile, any dissipative errors and noise accumulate exponentially with run-time, unless fault-tolerant computation is used. For these reasons, adiabatic state preparation generally requires a fully scalable, fault-tolerant quantum computer before it is likely to produce good results for interesting classes of Hamiltonian.

**Variational Quantum Eigensolver (VQE)**

The VQE algorithm takes its inspiration partly from classical variational algorithms, partly from adiabatic quantum state preparation. Variational algorithms for finding ground states are based on the variational characterisation of the minimum eigenvalue of the Hamiltonian H: $E_{min} = min_{|\psi\rangle}\langle\psi|H|\psi\rangle$. Variational algorithms in general work by choosing some suitable class of states $\{|\psi_i\rangle\}$ that hopefully includes (a good approximation to) the ground state, then minimising the energy over this class of states using some minimisation algorithm. DMRG can be viewed as variational minimisation over the class of matrix product states, which are efficiently representable classically, using a minimisation algorithm that is efficiently (in practice or even provably) computable classically. DFT can be viewed as implicit variational minimisation over a class of states parameterised by the density functional, using an iterative self-consistent optimisation loop.

In VQE, rather than choosing states that are efficiently computable classically, one chooses a class of states that can be prepared efficiently quantumly, i.e., states generated by some class of polynomial-sized quantum circuits. The energy, which can be computed efficiently on a quantum computer, is then minimised over this class of circuits hopefully converges to a good approximation to the ground state. Various different classes of VQE circuits and various optimisation algorithms have been proposed and studied.

One promising class is the "Hamiltonian variational ansatz", where the class of circuits consists of layers of unitaries generated by the local interactions of the Hamiltonian of interest. The free parameters are the scalar coefficients, or "angles" multiplying the terms in each layer. For sufficiently small angles and sufficiently many layers, this class of the circuits includes the circuit implementing adiabatic state preparation for the Hamiltonian. Thus, under the same spectral gap and density of states assumptions as the adiabatic algorithm, there at least exists a VQE solution that achieves the correct ground state.

However, the idea in VQE is rather to choose a much smaller number of layers, and hope that the variational minimisation will find more efficient, lower-depth circuits with larger angles that reach the ground state much faster than the full adiabatic circuit. As the circuit depth is significantly lower and varying over the parameters may compensate for some portion of the errors in the computation-at least coherent gate errors-VQE may be somewhat less affected by errors and noise during the algorithm. On the other hand, VQE is an entirely heuristic algorithm. Whether it will work for any given Hamiltonian is unknowable without running it, and even then there is no way to be sure it has produced the correct state or energy at the output. Even if the variational class does include a good approximation to the ground state (which is rarely guaranteed or even knowable), the optimisation algorithm may fail to find it.

There is a difficult trade-off: the more free parameters in the variational class, the larger the class of states and the higher the chances it contains a good ground state approximation. However, generally, the larger the variational class of states, the more computationally expensive it is to optimise over them, and the lower the chance of the optimiser finding a good solution even if one in principle exists.

**Imaginary-time evolution**

Imaginary-time evolution is a successful classical computational method for certain many-body quantum problems. As it is a non-unitary evolution, it cannot be implemented directly on a quantum computer. But it can be approximated unitarily or probabilistically.

However, implementing this is similar to implementing real-time Hamiltonian dynamics simulation, which, although it can be implemented in polynomial time on a quantum computer, is a significantly more complex quantum algorithm than the simple local measurements needed for the dissipative state engineering algorithm described in e.g. *"Quantum computation, quantum state engineering, and quantum phase transitions driven by dissipation"* Frank Verstraete, Michael M. Wolf, J. Ignacio Cirac Nature Physics 5, 633 - 636 (2009) https://arxiv.org/abs/0803.1447 (Verstraete *et al*).

**Dissipative state engineering**

In 2009, [Verstraete *et al,* Barbara] proposed a new algorithm for preparing ground states of quantum many-body systems based on local dissipative dynamics rather than unitary evolution. (Verstraete *et al* also showed how this dissipative process could be used to implement quantum computation, whilst avoiding some of the "di Vincenzo" criteria generally considered at that time to be necessary for quantum computation.)

In its simplest form, the dissipative state engineering algorithm consists in measuring each local term of the Hamiltonian in turn, and if the result of a measurement is not the minimum eigenstate of that local term, "resampling" the qudits involved in that term by randomising their state (or otherwise replacing the state of those qubits according to some procedure). Verstraete *et al* proves that the algorithm developed therein succeeds in preparing the ground state of any frustration-free Hamiltonian: a Hamiltonian whose ground state simultaneously minimises the energy of all of its local terms. In the paper, they also claim that a version of this algorithm with a slightly more sophisticated resampling procedure can prepare any frustration-free ground state efficiently. Another variant can prepare any projected entangled pair state (PEPS), an important class of tensor network states which are equivalent to matrix product states (MPS) in 1D but generalise to arbitrary dimensions.

However, there is an important subtlety to this claim which means that this efficient version of the algorithm is not useful for solving ground state problems. Whilst it is true that it has been shown that, for any frustration-free ground state, there exists a local dissipative process that efficiently prepares that state, one can only construct this process if one already knows in advance the state being prepared.

To understand the crucial difference between preparing a known ground state and finding an unknown ground state, it is illustrative to consider the special case of classical Hamiltonians. Since ground states of classical Hamiltonians are always product states, it is trivially true that there is an efficient algorithm for preparing any known ground state: one can simply flip the state of each particle to match the ground state. However, note that finding the ground state of frustration-free classical Hamiltonians is already NP-hard. So, whilst any classical state can be prepared efficiently, finding the ground state in the first place is in general intractable. Since the publication of the Verstraete *et al,* there have been many follow-up papers inspired by their results. These can be divided into two classes:

    1. Algorithms for finding ground states;
    2. Algorithms for constructing tensor network states.

The latter build on the efficient dissipative state engineering algorithm of for preparing states with a known tensor-network description, so are not applicable to the Hamiltonian ground state problem for the reasons already discussed above.

The demon-like cooling algorithm of "Cooling and its Demon-like Algorithmic Quantum Cooling and its Realization with Quantum Optics. 2012. arXiv: 1208.2256 [quant-ph]" overcomes the restriction to frustration-free Hamiltonians of Verstraete *et al,* by combining Hamiltonian time-dynamics simulation with projective measurements to produce a dynamics closely related to imaginary-time evolution. (They also implement their algorithm experimentally using photons, on a toy single-qubit Hamiltonian.) This achieves some of the benefits of dissipative state engineering, such as iteratively applying the same quantum circuit repeatedly, leading to a simpler implementation than algorithms such as adiabatic state preparation, and immunity to errors in the initial state. (There is no analysis in "Cooling and its Demon-like Algorithmic Quantum Cooling and its Realization with Quantum Optics. 2012. arXiv: 1208.2256 [quant-ph]" Xu *et al,* analytical or numerical, of whether the algorithm is resilient to noise and faulty implementation, though as with Verstraete *et al* this may follow from results shown in this work.) However, as with imaginary-time evolution, this comes at the cost of requiring

(coherently controlled) Hamiltonian time-dynamics simulation. To guarantee it succeeds, the algorithm also still requires knowledge of (a lower-bound on) the spectral gap of the Hamiltonian.

The present invention aims to address some or all of the drawbacks described above with a view to providing an improved method for approaching/preparing a ground state of a Hamiltonian.

## Summary

The various methods and systems described below each allow a Hamiltonian encoded upon qubits of a quantum computer to converge toward a known state, specifically the ground state or a Gibbs state at a given temperature. As noted above a quantum computer in principle represents an excellent native environment for modelling the quantum mechanical interactions in solids, but quantum computers have limitations in both noise tolerance and number of available qubits (this is true both currently and is expected to remain so in at least the near-term). In performing any such modelling, it is useful to know the specific starting state in order to perform calculations and simulations on such a known state. Rather than allowing the limitations inherent in current and near term quantum computers to stifle the applicability, the present invention provides a robust set of procedures for provably arriving at a known quantum state (ground or Gibbs states specifically), from which further calculations can be implemented.

Many of specific solutions set out herein directly use both the form of the system to be simulated and the operational parameters of the quantum computer as inputs to the process. These inputs are used to tailor the mathematical description of the system to the operational capabilities of the quantum computer. In this way, the methods can be thought of, in part, as providing a bridge between a complex system to be simulated on the one hand and a limited capacity and robustness in the otherwise seemingly ideal environment for encoding Hamiltonians representative of quantum systems. The system to be encoded feeds in to the methods performed as described herein not just in the relatively trivial sense of setting the parameters of the problem to be solved (i.e. encoding the system such that a specific quantum state can be reached), but also in the sense that the specific quantum hardware used to perform the calculations can be chosen to optimise the performance of the calculations. Each of the contributions set out below can be thought of in a variety of ways. For example, although phrased generally as methods or systems for approximating a ground or Gibbs state, these may equally be thought of as being one or more of:

- A method of preparing control signals for operating a quantum computer to improve, and in some cases optimise, utilisation of the resources of the quantum computer. Or a method of control of a quantum computer to achieve these goals.
- A method of controlling a quantum computer in which encodings and qubit manipulations are selected by virtue of the steps of the methods set out below.
- A hybrid quantum-classical process and/or system for use in materials simulation, by way of enacting the methods set out below.
- A method or system for arriving at a known quantum state of an encoded Hamiltonian. There are a number of fundamental assumptions about the features of the specific quantum computing hardware which motivate the design choices in the methods set out in this application. The methods below are directly based on the features in order that the advantages of using these methods can be realised. Largely, this involves accounting for aspects such as limited size and, more pertinently, noise tolerance in quantum processing systems. The present disclosure therefore focusses on processes which can be iterated repeatedly to provably approach, and even sometimes arrive at, a known state (specifically a Gibbs or ground state). The algorithms set out herein address the typical problems of noise tolerance in an advantageous manner - they are inherently self-correcting because processing errors are discarded and the procedures set out herein only proceed to the next iteration if the result of a given step does in fact drive the system toward the desired, specific, known state.

Once the encoded Hamiltonian is in (an approximation to, or exactly) this known state, further calculations can be performed secure in the knowledge of the starting state. This finds uses in practically any system having a Hamiltonian, but in particular in the field of materials simulations in order to find the ground or a given Gibbs state for a particular material or chemical to identify the behaviour of such a system. This in turn can be used to design materials with particular electronic properties (magnetic materials, nanomaterials, solid state memory, superconductors, semiconductors, etc.) or chemical properties (pharmaceutical compounds, catalysts, batteries, etc.) and know in advance what their properties will be, thereby making the development process more efficient since synthesis of such systems can be a time-consuming task which benefits from a focussed approach where prior knowledge is used to inform the best candidates for actual synthesis.

Aspects and examples of the invention are set out in the claims and aim to address at least a part of the above described technical problem, and related problems.

Disclosed herein is a method of approaching/approximating a ground state or a Gibbs state of a k-local Hamiltonian using a quantum computer system comprising a set of data qudits. The method comprises:(a) providing a set of local generalised measurements corresponding to the terms of the k-local Hamiltonian, (b) initialising the set of data qudits into an initial state; (c) performing a local generalised measurement from the set of local generalised measurements, wherein step c) perturbs a subset of the data qudits from the initial state to a perturbed state; (d) accepting or rejecting the perturbation based on the measurement outcome of said local generalised measurement,(e) repeating steps (c) to (d) for another local generalised measurement unless or until a stopping condition has been met. Advantageously this method comprises of iterating the same simple local measurements repeatedly on a quantum computing system. The method can therefore be implemented in a straightforward manner on a number of different quantum computing systems. Furthermore, the use of local generalised measurements means that the method advantageously works for any k-local Hamiltonian. In particular it does not matter whether the k-local Hamiltonian is frustrated or frustration-free and the method does not rely on prior knowledge of the properties of the k-local Hamiltonian such as the spectral gap. The use cases discussed above illustrate that the provision of a representation of a system under consideration (such as e.g. simulation of the behaviour of complex systems) in its ground state is an important initial step in implementing meaningful calculations using quantum computers. Simply put, being able to reliably initialise the representation in its ground state (or a good approximation thereof) allows the power of quantum computation to be unlocked across a wide range of applications. It is therefore crucial for adoption of quantum information technology that methods are provided by which the ground state can be reliably approached so that the desired calculations on the system can be studied. This application provides a clear and consistent method of achieving this.

As used herein, the Gibbs state for a Hamiltonian H at temperature T is given by the density matrix:

$$\rho_G = \frac{e^{-H/T}}{tr(e^{-H/T})}$$

This describes the state that a system whose interactions are described by the Hamiltonian H will be in when at thermal equilibrium at temperature T. In effect, considering Gibbs states in addition to ground states (which are set out elsewhere in more detail), extends the method to specific states which exist at finite (particularly non-zero) temperatures. In other words, by selecting the stopping condition in an appropriate manner (discussed below in detail), a variety of useful states (i.e., the ground state as well as various Gibbs states) can be approached by the iterative processes discussed herein.

Physical systems at thermal equilibrium are expected to be in their Gibbs state. For quantum mechanical systems, this is the state given by the Boltzmann distribution over its energy eigenstates: $\rho_G = e^{-\beta H}/Z$ for a system with Hamiltonian H at inverse temperature $\beta = 1/T$, where T is the temperature and $Z = tr(e^{-\beta H})$ is the partition. Gibbs states therefore play an essential role in statistical mechanics. Hence significant research has been devoted to methods for computing or generating Gibbs states, in particular of many-body Hamiltonians $H = \sum_i h_i$ made up of local interactions.

Sampling from the Gibbs distribution of a many-body Hamiltonian, even classically, is #P-hard (a complexity class even harder than NP). So we do not expect to be able to generate Gibbs states efficiently in general; the run-time must scale exponentially in the number of particles $n$ for some H.

For classical statistical mechanics systems, an algorithm does exist for sampling from the Gibbs distribution. The Hamiltonian in this case is a real, scalar function H(x) of the (classical) many-body state $x = (x_i)$. In rough outline, the algorithm applied to many-body Gibbs distributions consists in starting from some arbitrary initial state, and then repeatedly:

(i) randomly flipping the state $x_i$ of a randomly chosen subsystem i to generate a new state x',
(ii) computing $p = e^{-\beta H(x')}/e^{-\beta H(x)}$, and
(iii) accepting the new state x' with probability min(p, 1).

This algorithm provably samples from the Gibbs state in the long-run: the fixed-point of this Markov chain is the Gibbs distribution, so that once the Markov chain has converged the states $x$ that it generates will be distributed as $\Pr(x) \propto e^{-\beta H}$, as required. The mixing time of this Markov chain (the time required to converge to the fixed-point) is in general exponential in the number of particles $n$, as it necessarily must be given the complexity-theoretic considerations discussed above. Nonetheless, in practice, the algorithm often converges faster than this. Sampling from *quantum* Gibbs states is harder. The key step in the above algorithm involves evaluating the energy $H(x)$ on a state $x$. For quantum states $|\psi\rangle$, this means measuring the energy $\langle\psi|H|\psi\rangle$ given only a single copy of $|\psi\rangle$. This can be done, but it requires quantum phase-estimation which is already a nontrivial quantum algorithm acting on the entire quantum state, not just locally on the $i^{th}$ particle. Moreover, the algorithm needs to probabilistically either accept the proposed new state $|\psi'\rangle$ or revert to the previous state $|\psi\rangle$. But measuring the energy using phase-estimation collapses the state to an energy eigenstate, so it is not obvious how to recover the state $|\psi'\rangle$ afterwards, nor how to revert to $|\psi\rangle$. A "rewinding trick" can be used to give the first quantum generalisation of the classical algorithm.

However, this rewinding trick comes at a price: whereas the classical algorithm is a simple Markov chain with local update rules, the quantum algorithm requires running a complex quantum circuit, likely requiring a large-scale, fault-tolerant quantum computer before it can be implemented in practice.

Attempts to improve on the original quantum Metropolis algorithm, and construct something closer to the simple, local Markov chain of the classical algorithm have been made. The novel quantum algorithms for approaching a ground state discussed elsewhere herein, based on a local quantum Markov process constructed from the local terms of the Hamiltonian, provably converge to the ground state of any quantum local Hamiltonian. Specifically, the algorithm (termed the "dissipative eigensolver" or DQE), proceeds by repeatedly performing weak measurements of the local terms in the Hamiltonian.

In order to approach the ground states, the key insight was not to run the Markov chain until it converges to its fixed point, but rather to select a stopping rule conditioned on the measurement outcomes, such that the stopped process generates (a good approximation to) the ground state at the stopping time. It is shown elsewhere herein that, despite the ground state not being generated as a fixed point, the DQE algorithm benefits from many of the same advantages as fixed-point Markov algorithms.

In order to instead approach a Gibbs state, the inventors have shown that a similar local quantum Markov process can be used to generate the Gibbs state. By choosing a suitable probabilistic stopping rule (and using the temperature of that ground state as an input), exactly the same family of algorithms that generates the ground state, can be adapted to instead produce (a good approximation to) the Gibbs state. This is referred to herein as the dissipative Gibbs sampler (DGS). As in the ground state case, the key insight that allows us to overcome previous obstacles to constructing a local quantum Markov process that samples from the Gibbs state is that the Gibbs state does not appear as the fixed-point of the process, but rather it is the state generated by a conditionally stopped process. The specific choice of probabilistic stopping procedures may be chosen to efficiently converge toward (and in some cases even arrive at) the Gibbs state.

As noted above, the ground state of the representation may not be easy to find. We note at this point that it is important to make the distinction between the ground state of the qudits of a quantum computer (i.e. the lowest energy state of the information storage system) which is trivial to find, and the representation of the ground state of a system encoded on those qudits. It is the second of these which the present application provides a method of identifying and indeed for altering the states of the qudits during the process to approach or even arrive at such a state. This is particularly important due to some of the limitations of quantum computing including fidelity of state preparation and noise tolerance since the preparation of even a known state is difficult to achieve with accuracy. The power of the methods set out herein is that they necessarily result in the ground state being approached when the method is iterated sufficiently many times. A string of accepted measurements corresponds to moving closer to the ground state. Similar comments apply to Gibbs states, in the sense that it is not apparent how to represent a Gibbs state of a system on a set of qudits. Consequently, the ability to reliably approach a good approximation of a given Gibbs state if of great value when investigating the behaviour of systems at non-zero temperatures. In general, "target state" is used to refer to the ground state or specific Gibbs state being converged upon by design and operation of the system in line with the protocols developed herein.

As noted in more detail elsewhere the choice of operators for the perturbation and the measurement are defined based on measurements of the energy of the system being considered, and so directly probe the relevant parameter for determining whether the target state is indeed being approached without requiring knowledge of that state configuration nor of how close the system is to that state. These operators are specifically selected to provide a yes/no output indicating whether the direction of travel is correct. A string of indications that the system is indeed moving toward the ground state is then a strong indication that the system is approaching the ground state or a Gibbs state, depending on the stopping condition being employed. Longer strings indicate the representation of the system being closer to the ground state representation.

This method results in a statistically provable (as set out below) convergence towards the ground state of the system. Since there is a correspondence between the terms of the Hamiltonian and the qudits of the quantum computer, it is evident that the method drives the state of the qudits of the quantum computer towards or even into a ground of Gibbs state of the Hamiltonian represented on the quantum computer. The longer the algorithm runs for, the closer (again, statistically speaking) the representation is driven towards the ground state or a Gibbs state, depending on the stopping condition being employed. Note that this is achieved even when the actual ground or relevant Gibbs state of the system is unknown. That is, the method allows for confidence that the qudit representation of the Hamiltonian system has approached (or even arrived at) a ground or Gibbs state configuration, whether or not it is known what the individual qudit states should be for representing that state. In some cases even a single iteration may be enough to guarantee (or be statistically highly likely) that the representation of the Hamiltonian has been perturbed closer to the target state.

The overall result of implementing this procedure is that a representation of a quantum system on a quantum computer is driven closer to the ground state or a Gibbs state, depending on the specific form of the stopping condition being employed. That is, the state of the qudits on the quantum computer are in a fundamentally different (and more useful) state than they were before.

Optionally, the stopping condition comprises repeating steps (c) to (d) until all of the local generalised measurements in the set have been performed. Such a stopping condition advantageously stops the method only when local generalised measurements corresponding to all the terms in the Hamiltonian have been performed thereby improving the approximation of the ground state achieved by the method.

Determining when an appropriate approximation of a ground state has been achieved is difficult. The following stopping conditions for the above described method provide stopping conditions that seek to address this problem.

Optionally, the stopping condition depends on at least one of the sequence of measurement outcomes and/or the terms in the Hamiltonian. An example of this would be to initialise a work stack with each of the measurements from the set (in e.g. a random or a predefined order). Then in each iteration, the measurement at the top of stack is performed perform and removed from the stack. Whenever a measurement is rejected, all measurements that overlap with the rejected one (i.e. act on at least one qudit in common) are pushed onto the work stack. The stopping condition in this case could be considered to be when the work stack is empty. In some cases, it may be beneficial to repeat this entire procedure a predetermined number of times, of course. The stopping condition in this example depends both on the history of the measurement outcomes and on the structure of the local terms in the Hamiltonian. This is because two measurements will act on overlapping sets of qudits if and only if the local Hamiltonian terms they were constructed from overlap.

Optionally, the stopping condition is dependent on the number of successive perturbations that are accepted. Such a stopping condition may comprise recording each instance in a first time period in which at least two consecutive perturbations have been accepted and the number of successive perturbations in each such instance; noting the number of consecutive accepted perturbations in the instance with the largest number of consecutive accepted perturbations; and stopping during a time after the first time period after the first subsequent instance of accepted perturbations that is as long as or longer than any one of the recorded instances.

Alternatively, the stopping condition may comprise: recording each instance in which at least two consecutive perturbations have been accepted and the number of successive perturbations in each such instance; noting the number of consecutive accepted perturbations in the instance with the largest number of consecutive accepted perturbations; and stopping after N*F number of instances at the first subsequent instance of accepted perturbations that is as long as or longer than any one of the recorded instances, wherein N is a user selected number of instances and F is a fraction for example $e^{-1}$.

A stopping condition dependent may alternatively comprise stopping once a number, n of consecutive perturbations have been accepted.

For example, such a stopping condition may comprise selecting a sequence of thresholds nt; recording each instance in which one or more consecutive perturbations have been accepted and the number of successive accepted perturbations in each such instance; and stopping on an accepted perturbation if the accepted perturbation occurred in a $t^{th}$ repetition of step (d) and the most recent number of consecutive accepted perturbations is at least as large as $n_t$. Alternatively, a stopping condition may comprise selecting a sequence of thresholds $s_i$ where i is a positive integer; recording each instance in which one or more consecutive perturbations have been accepted and the number of successive accepted perturbations in each such instance; and stopping on an accepted perturbation if the current instance of consecutive accepted perturbations is the $i^{th}$ such instance and the number of consecutive accepted perturbations in the current instance is the same length or shorter than at most $s_i - 1$ of the previously recorded such instances. The thresholds $s_i$ may be given by:

$$s_i = \lfloor \frac{i+1}{t+1} c_i \rfloor$$

$$c_i = \frac{1}{i+1}\left(\frac{t+1}{i+2}\frac{s_{i+1}(s_{i+1}+1)}{2} + (i+1-s_i)c_{i+1}\right)$$

$$c_t = t$$

An alternative stopping condition comprises, each time a perturbation is accepted after $n$ prior acceptances, stopping with a probability $0 < p < 1$ or repeating steps (c) and (d) for a further iteration with a probability $(1-p)$. The probability p may be selected, in cases where one or more consecutive perturbations have been accepted, to depend on the number $n$ of successive accepted perturbations in each such instance, in other words, $p = p(n)$. It may also be selected to depend on the measurement outcomes observed in the measurement string (i.e. sequence of results) leading up to the current iteration. The other stopping conditions discussed above have the property that they drive the system progressively toward (and eventually converge on) the ground state, which determines the physical properties of a system at zero (or low) temperature. This probabilistic stopping condition allows the state to converge to a non-zero temperature state. It may be necessary to study systems at non-zero temperatures and a probabilistically determined stopping condition can achieve this. Of particular interest, for the reasons given above, are Gibbs states, which is also a useful state because it describes the physical properties of a system at equilibrium at non-zero temperatures. These Gibbs states may be approached by allowing the probability for each round of measurement (i.e. whether or not to stop at a given iteration) to depend on the number of successive accepted perturbations in previous iterations (i.e. the length $n$ of a chain of previously accepted perturbations).

Optionally, the probability p(n) for a number $n$ of successive accepted perturbations for a local Hamiltonian $H = \sum_{i=1}^{m} h_i$ is selected according to the formula:

$$p(n) = \frac{\lambda^{2n}/(2n)!}{\cosh(\lambda) - \sum_{j=1}^{n-1}\lambda^{2j}/(2j)!}$$

$$\lambda = \frac{\beta\kappa}{\epsilon(1-\epsilon)^{2m-1}}$$

$$\kappa = \sum_{i=1}^{m}\|h_i\|$$

where $\varepsilon$ is a tuneable parameter and $\beta$ is inverse temperature, $1/k_B T$ (in some cases herein, natural units are used in which the Boltzmann constant, $k_B$ is defined equal to 1 - the two formulations are equivalent). It is shown below that this form of stopping condition in which the probability depends on the number of continuous previously accepted perturbations necessarily approaches a Gibbs state in thermal equilibrium at temperature $T = 1/k_B\beta$.

Note that this form is carefully chosen to cause this convergence. The overall probability of stopping on a run of length n is not given by p(n) alone; which is the probability of deciding to stop *given that a string containing n 0s has already arisen.* However, the overall probability of actually stopping on $n$ zeros is the product of this with the probability that one sees $n$ 0s in the first place. The stopping probability $p(n)$ (referred to elsewhere equivalently as $r_n$) is carefully chosen to compensate for this, so that the overall probabilities work out to be the Boltzmann factors for the corresponding energy eigenstates. This ensures that the Gibbs state is achieved.

The parameter $\varepsilon$ is used to tune the procedure by altering the strength of the perturbation, with $0 < \varepsilon < 1$, and selected depending on the specific criteria of the measurement (e.g. may be chosen iteratively by seeing what values provide the best results in terms of convergence and accuracy). Smaller values of $\varepsilon$ give rise to higher-accuracy approximations to the desired Gibbs state, but at the cost of the expected run-time being longer.

Optionally, the perturbation is tuneable. Tuning the perturbation can advantageously be used to improve the rate at which the ground state of the k-local Hamiltonian is approached and/or escape local non-ground state energy minima of the k-local Hamiltonian.

A tuneable perturbation may be implemented in the local generalised measurements by enacting a unitary matrix having terms dependent on a tuning parameter epsilon, $\varepsilon$. Optionally the unitary matrix may take the form:

$$R = \begin{pmatrix} 1 - \epsilon & -\sqrt{\epsilon(2 - \epsilon)} \\ \sqrt{(\epsilon(2 - \epsilon))} & 1 - \epsilon \end{pmatrix}.$$

In general a large value of $\varepsilon$ (in all cases where it is used as a tuning parameter herein) leads to a stronger perturbation, which is more likely to lead to a rejection, but which (if accepted) brings the state closer to the target state than a smaller $\varepsilon$ would have done.

Epsilon may be selected to be less than the spectral gap of the rescaled Hamiltonian, where the said rescaled Hamiltonian is the original Hamiltonian divided by a constant factor such that the operator norm of the rescaled Hamiltonian is less than 1.

Optionally, the value of epsilon may be changed after step (d) depending on whether the perturbation has been accepted or rejected.

Furthermore, tuning the perturbation may comprise variationally optimising a sequence of values of epsilon, by repeatedly running the method with an initial sequence of values of epsilon and measuring the energy of the output state with respect to the k-local Hamiltonian, and updating the sequence of values of epsilon to reduce the value of the energy. Optimising a sequence of tuning parameter for a particular k-local Hamiltonian can improve the efficiency of the method for finding an approximation of a ground state of that particular Hamiltonian. A simultaneous perturbation stochastic approximation (SPSA) may be used to optimise a sequence of values of epsilon. Machine learning techniques may also be used to optimise a sequence of values of epsilon.

There are a number of different methods by which to implement the local generalised measurements on a quantum computer system. The local generalised measurements can be performed for example using a projective measurement or could be performed directly in the hardware of the quantum computer system. Performing the local generalised measurement directly on the hardware could be implemented for example on qubit-based photonic quantum processing devices hardware. This is because the algorithm consists of repeatedly applying the same operations over and over. For photonic qubits, because the qubits are "flying qubits" encoded in photon states, it is in principle possible to implement the algorithm by literally sending the photons round and round the same photonic circuit due to the iterative nature of the algorithm. The majority of the quantum gates required to implement the algorithm (see below) are so-called Clifford gates, which are particularly easy to implement in photonic quantum computers. In particular, only Clifford 2-qubit gates are required for much of the process. Only a handful of single-qubit non-Clifford gates are required in each iteration of the algorithm (between 1 and 3 of these per iteration, depending on the Hamiltonian), and these single-qubit non-Clifford gates also happen to be particularly readily achievable for photonic quantum computers, as they happen to be exactly the gate provided by a non-uniform beam splitter. By contrast, for matter-based qubits (superconducting, ion traps, etc.) Clifford 2-qubit gates or the particular single-qubits gates required are no easier to implement than any other gate.

Ancilla qudit(s) can perform projective measurements and provide a convenient way with which to interact with/perform local generalised measurements on the data qudits of a quantum computing system. The initialising step (b) of the method may therefore optionally comprise initialising one or more ancilla qudit(s) and wherein the measuring step (c) comprises interacting each data qudit on which the local generalised measurement is to be performed with an ancilla qudit and measuring the state of the ancilla qudit. The ancilla qubit may be reinitialised as part of the repeating step (e).

The perturbing step (c) may comprise performing a unitary rotation on an ancilla qudit; interacting again each data qudit on which the local generalised measurement is to be performed with the ancilla qudit; performing an inverse of the unitary rotation on the ancilla. The unitary rotation may comprise comprises a $R^{-1/2}$ or $R^{1/2}$ operation on the ancilla qudit and the inverse of the unitary rotation comprises a $R^{-1/2}$ or $R^{1/2}$ operation on the ancilla qudit. The unitary rotation (and its inverse) is a convenient example of a perturbation, i.e. a weak measurement (in quantum mechanical terminology) to implement the interactions described above, which in turn drives the representation of the Hamiltonian system towards the representation of the ground state. Whilst the implementation of a unitary rotation and its inverse can be performed using an ancilla qudit, it is also possible to perform the perturbation directly on the subset of the data qudits without the use of an ancilla qudit for example by implementing the local generalised measurement directly on the hardware of the quantum computer system.

Optionally, step (a) of the method comprises the transformation from the terms of the k-local Hamiltonian into a set of local generalised measurements. The transformation may comprise computing a polynomial function of the matrices representing the terms in the k-local Hamiltonian and expanding the result into a sum of monomials; grouping the monomials into sets, such that the sum over all the monomials in any such set is a Hermitian matrix whose eigenvalues are greater than or equal to 0 and less than or equal to 1; and selecting the set of local generalised measurements to be the local generalised measurements represented by these Hermitian matrices. The polynomial may be a shifted and rescaled Chebyshev polynomial for example the polynomial f(x)=1-x/||h|| where ||h|| is the operator norm of the k-local Hamiltonian term h.

The provided local generalised measurements may be k'-local wherein the local generalised measurement of step (c) perturbs a subset of data qudits comprising no more than k' data qudits. In a general sense k' is related to the k of the k-local Hamiltonian of interest. k' is determined by the structure of the k-local Hamiltonian and the polynomial function used in the transformation from the k-local Hamiltonian to the set of local generalised measurements. This is explained in detail in the "Further Information" section below. Restricting the local generalised measurements in this way improves the localisation of the local generalised measurements thereby minimising undesirable perturbation of data qudits outside of the relevant corresponding subset.

Optionally, the k-local Hamiltonian represents a combinatorial optimisation problem. The above described method may be advantageously implemented on a quantum computing system to find approximate optimal solutions or to approach optimal solutions of mathematical problems for example a combinatorial optimisation problem. The method can of course be applied to any k-local Hamiltonian regardless of the system or problem that said Hamiltonian represents. For example, the method can be used to approach the ground state of a k-local Hamiltonian representative of a physical system or physical systems.

Optionally, if the perturbation is rejected a subset of the data qudits are reinitialised.

There are a number of different strategies that may be implemented if a perturbation is rejected in the above described method. The particular choice may depend on the quantum computing system used, for example the ease at with which data qudits can be reinitialised may vary and it may be beneficial to reduce the number of reinitializations that are enacted whilst performing the above described method. It may be difficult to reinitialise a particular subset of data qudits. Optionally, if the perturbation is rejected all the qudits of the quantum computing system are reinitialised.

Optionally, if the perturbation is rejected the state of the data qudits on which the local generalised measurement was performed is reinitialised.

Optionally, if the perturbation is rejected one or more data qudit is selected at random and the state of the selected qudit is reinitialised.

Optionally, reinitialised qudit(s) is/are reinitialised into a random computational basis state. Reinitialising into a random computation basis state advantageously does not place a particular requirement on the reinitialised data qudit making it easier to implement the above described method.

Optionally, if the perturbation is rejected the state of the data qudits is maintained. Maintaining the perturbation simplifies the reinitialization step in the above described method making it easier to implement.

Depending on the quantum computing system that the above described method is performed on it may be beneficial (e.g. improved data qudit utilisation) to perform the accepting or rejecting step (d) before the another local generalised measurement is performed or alternatively it may be beneficial to perform the accepting or rejecting step (d) after all local generalised measurements in the set have been performed.

Optionally, the two or more local generalised measurements are performed simultaneously on two or more subsets of data qudits, wherein the two or more subsets are disjoint. The efficiency of the method can be improved by performing the method in parallel on disjoint subsets of data qudits.

Also disclosed herein is a quantum computing system to perform the above described method. This particular quantum computer system has been found to be particularly suited to implementing the above described method. It is simple to implement and is particularly suited to implementation on a quantum computer system comprising photonic qudits.

Also disclosed herein is a quantum computing system in which each term of a k-local Hamiltonian is represented by a local generalised measurement on a subset comprising one or more data qudits of the quantum computer system, the quantum computer system comprises: at least one ancilla qudit arranged to interact with at least one subset in a quantum circuit which further includes at least one single-qudit rotations on the at least one ancilla qudit. Optionally the quantum computing system may comprise at least a first subset of data qudits and a second subset of data qudits, wherein the first and second subsets of data qudits are disjoint; a first ancilla qudit associated with the first subset of data qudits and a second ancilla qudit associated with the second subset of data qudits; wherein the first ancilla qudit is arranged to interact with the first subset of data qudits in a first quantum circuit at the same time as the second ancilla qudit is arranged to interact with the second subset of data qudits in a second quantum circuit; wherein each quantum circuit includes at least one single-qudit rotations on the ancilla qudit associated with that quantum circuit. Providing a second ancilla qudit in the quantum computing system allows the above described method to be enacted in parallel on disjoint data qudits. Whilst this quantum computing system describes a first and second ancilla qudits, further ancilla qudits can be used to further parallelise the above described method for further subsets of disjoint qudits.

Optionally, wherein each quantum circuit comprises at least one CNOT gates.

In some examples, the quantum circuit may preferably include at least two single qudit quantum rotations and/or at least two CNOT gates. As is understood in general, there are many different representations of quantum circuits which differ in the complexity required to implement them. in other words there is a trade-off between circuit depth and number of qudits operated on by each single gate. In some cases it may be preferable to compile the circuit such that it avoids doing two single-qudit rotations at a cost of a greater number of two-qudit operations. Alternatively, other circuits may be better implemented with a greater number of single-qudit rotations while reducing the number of (or eliminating entirely) two-qudit rotations. The qudits of the quantum computing system may be photonic qubits; ion trap qubits or superconducting qubits. Other quantum computing qubits may also be used.

As used in this document, qudit is a generalised description of (and includes) the more commonly used term "qubit". A qudit is similar to a qubit in that both are multi-level quantum systems which can be used in the storage and processing of data as part of a quantum computer. However, where a qubit is strictly a two-level system, qudits are generalised to n-level systems for integer values of n of two or more. Since qudits necessarily encompass the more limited concept of qubits, this document can be considered to relate specifically to qubits with no loss of generality. This may assist in understanding the application of the methods set out herein to quantum information processing systems in general, which tend (today at least) to use qubits as the fundamental unit of storage and processing.

In another aspect of the invention a non-transient computer readable medium is provided. The non-transient computer readable medium comprising instructions which cause a computer to enact the above described method.

## Brief Description of Drawings

Some practical implementations will now be described, by way of example only, with reference to the accompanying drawings in which:

Figure 1 shows a method of approximating a ground state of a k-local Hamiltonian using a quantum computer system;
Figure 2 shows a method for transforming the terms of a k-local Hamiltonian into a corresponding set of local generalised measurements;
Figure 3 shows a method for performing a local generalised measurement on a data qudit of a quantum computer system;
Figure 4 shows a quantum circuit diagram for performing a local generalised measurement on a data qudit of a quantum computer system;
Figure 5 shows a simulated plot of the method of Figure 1 performed on a 1D Heisenberg chain of length 10;
Figure 6 shows a simulated plot of the method of Figure 1 performed on a 3x3 spin Fermi-Hubbard model mapped to a 20-qubit local Hamiltonian;
Figure 7 illustrates a schematic of a quantum computer for implementing the methods described herein;
Figure 8 illustrates a probability tree useful in understanding the probabilistic stopping conditions and their relationship to preparing Gibbs states; and
Figures 9A to 9C show circuits specifically constructed to apply the method to a Heisenberg spin chain for the *XX, YY* and *ZZ* Hamiltonian terms respectively.

## Specific Description

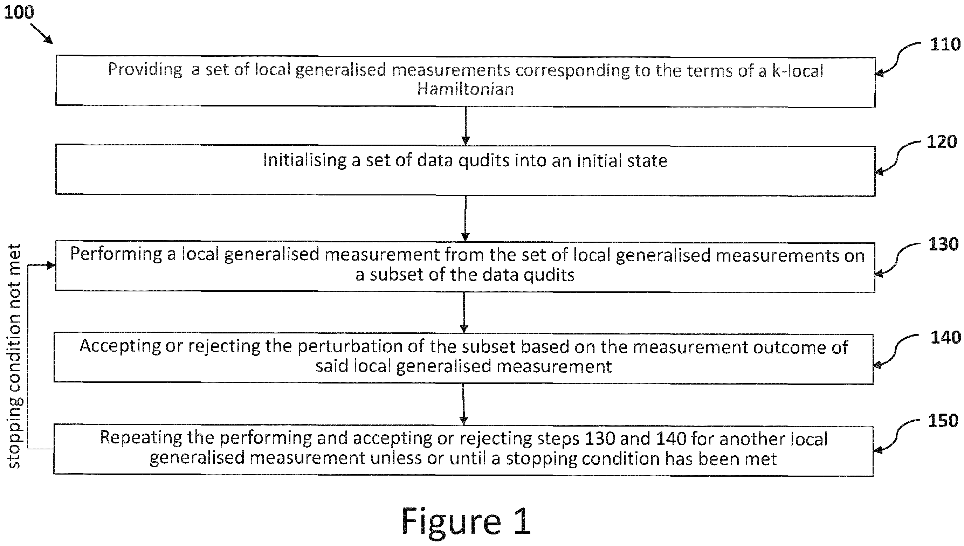

Figure 1 shows a method 100 of approximating a target (i.e. ground or a specific Gibbs) state of a k-local Hamiltonian using a quantum computer system having a plurality of qudits. As noted above, the term qudit is used here to generally encompass qubits as well as qudits of other dimensionality. The k-local Hamiltonian is not restricted to representing any particular system or mathematical problem. The k-local Hamiltonian could for example be a Hamiltonian representing a physical system such as a crystal lattice or particular molecule, or could be a k-local Hamiltonian having a ground or Gibbs state that is the solution to a particular mathematical problem for example it could be a Hamiltonian that represents a combinatorial optimisation problem.

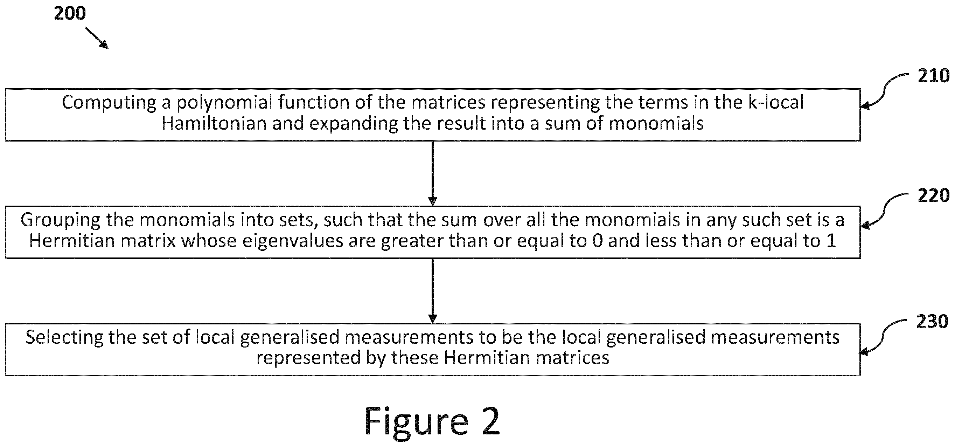

The initial step of method 100 is to provide the terms of the k-local Hamiltonian of interest as a set of corresponding local generalised measurements 110. The local generalised measurements are mapped onto a subset of the data qudits of the quantum computer system. The set of local generalised measurements can be obtained in a number of different ways. Figure 2 shows one way in which a set of local generalised measurements corresponding to the terms of the k-local Hamiltonian can be transformed from the k-local Hamiltonian.

In the example shown in method 200 the transformation can be performed by first computing 210 a polynomial function of the matrices representing the terms in the k-local Hamiltonian and expanding the result into a sum of monomials. The monomials are then grouped 220 into sets, such that the sum over all the monomials in any such set is a Hermitian matrix whose eigenvalues are greater than or equal to 0 and less than or equal to 1. From the sets of monomials a set of local generalised measurements is selected 230 to be the local generalised measurements represented by these Hermitian matrices. The "further information" section below provides a worked example of this procedure. The polynomial in method 200 can advantageously be a shifted and rescaled Chebyshev polynomial preferably where $f(x)$ = 1 - $x$/‖$h$‖ where ‖h‖ is the operator norm of the k-local Hamiltonian. The set of local generalised measurements being mapped onto (associated with) a subset of the qudits of the quantum computing system.

To prepare the quantum computer system, the qudits of the quantum computer are initialised into an initial state.

The initial state of each of the qudits is not restricted to any particular state, indeed it can be advantageous to select an initial state of the qudits that is easy to prepare on the quantum computer system. Alternatively the initialisation step may simply involve taking the state that the data qudits are currently (i.e. initially) in as the initial state.

A local generalised measurement from the set of local generalised measurements is performed 130 on the subset of the set of data qudits onto which the local generalised measurement has been mapped. Each local generalised measurement is assigned subset of data qudits on which it acts, which remains unchanged throughout method 100. In the simplest case, the subset of qudits involved in the local-generalised measurement is identical to the subset of k qudits which are involved in the corresponding local interaction term in the k-local Hamiltonian. For more general transformations from k-local Hamiltonian to local generalised measurements, the relationship is less direct. But the transformation will always assign a specific subset of qudits to each specific local generalised measurement.

Performing a local generalised measurement on a subset of the data qudits perturbs the subset of qudits from an initial state to a perturbed state.

In the case where the local generalised measurements correspond to non-interacting terms of the k-local Hamiltonian the local generalised measured will act on different subsets with no qudits in common.

Where there is interaction between terms of the k-local Hamiltonian the local generalised measurements corresponding to these terms may act on subsets of data qudits with one or more data qudits in common.

It can be particularly advantageous for the local generalised measurements to be k'-local. A k'-local generalised measurement is mapped to and perturbs a subset of qudits of size at most k' and preferably less than k'. In a general sense k' is related to the k of the k-local Hamiltonian of interest. K' is determined by the structure of the k-local Hamiltonian and the polynomial function used in the transformation from the k-local Hamiltonian to the set of local generalised measurements. A derivation for k' is set out in detail in the "Further Information" section below and in particular Lemma 7.

Restricting the subset of qudits in this way has the advantage of ensuring the local generalised measurements are "local" measurements of the quantum computing system.

In particular, this means that a local generalised measurement on a subset of the qudits will not, or will only weakly, perturb qudits outside of that subset.

The perturbation of the subset of data qudits resulting from the local generalised measurement is accepted or rejected based on a measurement outcome.

In general terms, the acceptance or rejection of a perturbation is based on the stochastic probability that a series of accepted perturbations approach a target state representation of the k-local Hamiltonian on the quantum computing system. A single or stochastically insignificant number of accepted perturbations may result in a representation of the k-local Hamiltonian system that is farther from a target state, however a stochastically significant series of accepted perturbations will result in the representation of the k-local Hamiltonian approaching a target state. Accepting a single or a stochastically insignificant number of perturbations that push the represented k-local Hamiltonian away from a target state is advantageous for escaping non-target state minima of the k-local Hamiltonian.

When performing the local generalised measurement each data qudit in the relevant subset is measured and a measurement outcome is determined for each of the perturbed data qudits in the subset.

The determination of a measurement outcome is discussed in detail in the "further information" section below in particular in Algorithm 24.

In the present example, a single rejected data qudit perturbation in the subset of qudits results in the rejection of the perturbations for all the data qudits in the subset. Alternative methods in which a plurality of rejections in the subset of data qudits is required for a rejection of the perturbations for all the data qudits in the subset is also envisaged, for example a majority of rejected perturbations in the subset could be used as the baseline for the rejection of the perturbed subset.

There are a number of different approaches that can be implemented when a perturbation of a subset of qudits is rejected. For example, the data qudits in the perturbed subset of qudits can be reinitialised; all the data qudits of the quantum computing system can be reinitialised; one or more data qudits of the quantum computing system in particular one or more data qudits from the perturbed subset can be reinitialised; or the subset of data qudits can be left in the perturbed state.

The data qudits can be reinitialised or reset into any state for example a random computational basis state or a state most convenient for the particular quantum computing system or qudit type.

The perturbation of the data qudits arising from the performed local generalised measurement is optionally tuneable. Tuning the perturbation can be used to approach the ground or Gibbs state of the k-local Hamiltonian and/or escape local non-ground (or non-Gibbs) state energy minima. There are a number of different ways in which such a tuneable local generalised measurement might be implemented. One example method enacts a unitary matrix, to perform the local generalised measurements. The unitary matrix can be tuned using a tuning parameter epsilon, in particular a unitary matrix (or near unitary matrix) having the following form:

$$R = \begin{pmatrix} 1 - \epsilon & -\sqrt{\epsilon(2 - \epsilon)} \\ \sqrt{(\epsilon(2 - \epsilon))} & 1 - \epsilon \end{pmatrix}.$$

Regardless of the specific implementation the tuning parameter (epsilon, $\varepsilon$, in the above matrix) may be selected to be less than the spectral gap of the rescaled k-local Hamiltonian. The rescaled k-local Hamiltonian being the original Hamiltonian divided by a constant factor such that the norm of the rescaled Hamiltonian is less than 1.

The perturbation resulting from the local generalised measurements can be tuned after accepting or rejecting a perturbation 140.

It can be beneficial to tune the local generalised measurement based on whether the perturbation has been accepted or rejected. In particular, it may be useful to tune the perturbation resulting from the local generalised measurement based on a particular sequence of results, for example a sequence of rejections may indict that the k-local Hamiltonian is not approaching the target state or is approaching the target state too slowly.

The perturbation affected by the local generalised measurement can be tuned to address this situation. Particularly for the unitary matrix R shown in equation, but also more generally in other similar implementations of a near-identity unitary matrix, reducing epsilon after the acceptance of a perturbation 140, so as to approach the identity matrix, has been found to aid in approaching a ground state of the k-local Hamiltonian.

For a k-local Hamiltonian a particular sequence of values of the tuning parameters might be used to efficiently approach a ground state. For example, after a number of local generalised measurements have been performed the tuning parameter may be changed before performing another number of local generalised measurements. This can be repeated for a sequence of tuning parameters until a stopping condition is met. It may be advantageous to change tuning parameter each time after all of the local generalised measurements in a set have been performed and before repeat (or another repeat of) the local generalised measurements in the set are performed.

Sophisticated sequences of tuning parameter can also be used, for example, the tuning parameter, in this case epsilon, can be variationally optimised to arrive at a particularly effective sequence of epsilons that could be implemented when performing method 100 on a particular k-local Hamiltonian. This might be achieved by for example, repeatedly running the method 100 with an initial sequence of values of epsilon and measuring the energy of the output state with respect to the k-local Hamiltonian, and updating the sequence of values of epsilon to reduce the value of the energy of the output state as determined by the k-local Hamiltonian.

There are a number of different possible ways to implement the local generalised measurements described above, the choice of implementation may depend on the quantum computing system on which method 100 is implemented.

One particular implementation that can be used with a number of different quantum computing technologies is the use of an ancilla qudit to perform the local generalised measurement on the data qudits of the quantum computing system and specifically on the subset of data qudits associated with that local generalised measurement.

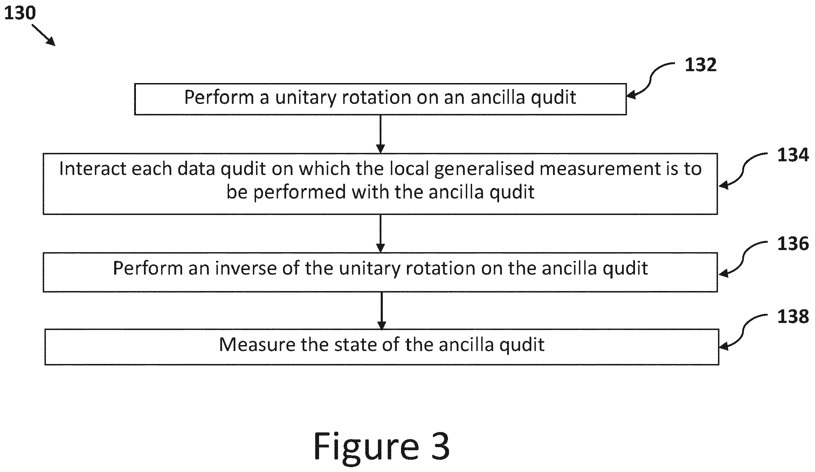

An example implementation of method 100 using an ancilla qudit is described in Figure 3. In particular step 130 may be implemented by interacting each data qudit in the subset that has been mapped to a local generalised measurement with an ancilla qudit and then measuring the state of the data qudits via the ancilla qudit after the interaction.

The specific implementation described in Figure 3 starts by performing a unitary rotation 132 on the ancilla qudit, for example the unitary rotation of the unitary matrix, R. The ancilla qudit is then interacted 134 with each data qudit in the subset corresponding to the local generalised measurement to be performed. An inverse of the unitary rotation is then performed on the ancilla 136 and the state of the ancilla qudit is measured 138.

The unitary rotation can be a $R^{-1/2}$ or $R^{1/2}$ operation on the ancilla qudit and the inverse of the unitary rotation can be a $R^{-1/2}$ or $R^{1/2}$ operation on the ancilla qudit.

The ancilla qudit can be initialised as part of the initialising step 120 and/or after step 150 before another local generalised measurement is made on a subset of qudits. The ancilla qudit can be initialised into any preferred state. The preferred state may depend on the quantum computing system.

Steps 130 to 140 of method 100 are repeated for another local generalised measurement unless or until a stopping condition is met 150.

It is possible to use a combination of reinitialization strategies when repeating steps of method 100.

Regardless of the approach followed, accepting or rejecting the perturbation can be implemented before another local generalised measurement is performed or after all the local generalised measurements in the set have been performed.

Method 100 is stopped when a stopping condition is met. There are a number of different stopping conditions that can be implemented either alone or in combination with one another. For method 100, a stochastically significant series of successive successful perturbation measurements is indicative that the k-local Hamiltonian is approaching the target state. In its simplest form a stopping condition may be dependent on the number of successive successful perturbation measurements that occur when repeating steps of method 100. For example, a sequence of n successive successful perturbation could be used as a stopping condition, where n is a positive integer for example 1000, 10000 etc. Using such a stopping condition method 100 would be stopped when a series of n successive successful perturbations had been measured.

A number of different stopping conditions will now be discussed, starting with ones which converge toward the ground state, then presenting a final one which leads instead to a Gibbs state.

A stopping condition that may be used in method 100 comprises recording each instance in a first time period in which at least two consecutive perturbations have been accepted. Specifically, the number of consecutive accepted perturbations in the instance with the largest number of consecutive accepted perturbations is recorded. For example, the method 100 might output a sequence of measurement outcomes such as "001000010001" wherein 0 denotes an accepted perturbation and 1 denotes a rejected perturbation. Note that this is an arbitrary classification, with 0 and 1 being used solely to denote whether the quantum system has been driven closer to the ground state or not (statistically speaking - that is, is it likely that the system has been perturbed in the correct "direction" or not). The example sequence contains three instances of accepted successive perturbations and the longest instance has four successive accepted perturbations. Under this stopping condition method 100 would be stopped during a time after the first time period after the first subsequent instance of accepted perturbations that is as long as or longer than any one of the recorded instances. For example, after the sequence "001000010001" recorded in the first time period, the method 100 may return a second sequence of "0001000100100000" in the time period following the first time period. In this particular example, the second sequence contains four instances, wherein the longest instance contains four accepted successive perturbations. According to the stopping condition method 100 is stopped after the instance of the second sequence that has four accepted perturbations because in this example, this instance is as long as or longer than any one of the recorded instances in the first sequence.

This provides a convenient method by which the probability space is sampled to determine the approximate length of successive accepted perturbations which might be expected given the statistical properties of the space during a sampling, or data collection, phase. This information is then applied to measurements in a measurement phase, by using the maximum value obtained in the sampling phase as a threshold above which that measurement string should be accepted (at which point the measurement phase is ended). This provides a "best expected" operation of the procedure and results in the ground state approximation being as good as possible within the constraints on running the process. Note that the number of successive accepted measurements is likely to be larger than ~4-5 discussed above, often by several orders of magnitude.

Another stopping condition comprises recording each instance in a first time period in which at least two consecutive perturbations have been accepted and the number of successive perturbations in each such instance and noting the number of consecutive accepted perturbations in the instance with the largest number of consecutive accepted perturbations as with the above stopping condition. However, the condition for stopping is different. Under this Stopping condition method 100 is stopped after N*F number of instances at the first subsequent instance of accepted perturbations that is as long as or longer than any one of the recorded instances, wherein N is a user selected number of instances and F is a fraction, for example F could be $e^{-1}$.

A further possible stopping condition is one in which method 100 is stopped once a number, n of consecutive perturbations have been accepted. In more detail, the stopping condition comprises selecting a sequence of thresholds $n_t$; recording each instance in which one or more consecutive perturbations have been accepted and the number of successive accepted perturbations in the instance; and stopping on an accepted perturbation if the accepted perturbation occurred in the $t^{th}$ repetition of step (d) and the most recent number of consecutive accepted perturbations is at least as large as $n_t$.

Another example stopping condition comprises: selecting a sequence of thresholds $s_i$ where i is a positive integer; recording each instance in which one or more consecutive perturbations have been accepted and the number of successive accepted perturbations in the instance; and stopping on an accepted perturbation if the current instance of consecutive accepted perturbations is the $i^{th}$ such instance and the number of consecutive accepted perturbations in the current instance is the same length or shorter than at most $s_i$ - 1 of the previously recorded such instances.

The threshold $s_i$ may be calculated using the following equations:

$$s_i = \lfloor \frac{i+1}{t+1} c_i \rfloor$$

$$c_i = \frac{1}{i+1}\left(\frac{t+1}{i+2}\frac{s_{i+1}(s_{i+1}+1)}{2} + (i+1-s_i)c_{i+1}\right)$$

$$c_t = t$$

This stopping condition is discussed in the "further information" section below.

Another example stopping condition is one that depends on at least one of: the sequence of measurement outcomes and/or the terms in the Hamiltonian.

For example, initialise a work stack with each of the local generalised measurements from the set. Then in each iteration of method 100, perform the local generalised measurement from the set that is at the top of stack and then remove it from the stack. Whenever a local generalised measurement is rejected, push all local generalised measurements that overlap with the rejected local generalised measurement (i.e. those that act on at least one qudit in common) onto the work stack. The stopping condition in this case is an empty work stack. One may also want to repeat this entire procedure a predetermined number of times. This stopping condition depends both on the history of the measurement outcomes and on the structure of the local terms in the Hamiltonian (because two measurements will act on overlapping sets of qudits if and only if the local Hamiltonian terms they were constructed from overlap.

Steps 130, 140, and 150 are repeated for another local generalised measurement unless or until the selected stopping condition has been met. In this manner, the set of local generalised measurements can, depending on the stopping condition, be iteratively performed on the data qudits of the quantum computer system and in doing the quantum computing system approaches a ground state of the k-local Hamiltonian of interest. As noted above this process can be aided by tuning the local generalised measurements during the iterative process using a tuning parameter. Note that the repeated iteration is performed irrespective of the acceptance or rejection of the perturbation. This is because what is important is the analysis of acceptance strings (consecutive 0s in the above example), rather than any given result as such. Therefore, when the result is accepted, a second measurement is performed, and this process repeats to identify strings of as many successes as possible. On the other hand when a measurement is rejected, another one is tried anyway, with the hope that this new measurement will be accepted, at which point the comments above apply in terms of finding successive accepted measurements from this starting point. The method 100 may repeat local generalised measurements. In some circumstances the same local generalised measurement may be repeated immediately after it has just been performed thereby forming the another local generalised measurement referred to in step 150. The sequence in which local generalised measurements are performed is not restricted however some sequences of local generalised measurements may approach a ground state solution faster than others. A sequence of local generalised measurements may be optimised in a similar way in which to the optimisation of the sequence of tuning parameters described above. Furthermore, performing all the local generalised measurements in the set before repeating any of the local generalised measurements may also improve the speed at which an approximation of a ground state is found.

The method 100 advantageously works for any k-local Hamiltonian, in particular it does not matter whether the k-local Hamiltonian is frustrated or frustration free and the method 100 does not rely on prior knowledge of the properties of the k-local Hamiltonian such as the spectral gap.

To prepare the Gibbs state at temperature T, the method is the same as those set out above, with a particular choice of stopping condition in step (d). In this particular stopping condition, when the length of the unbroken sequence of accepted measurements up to the current step is $n$ (which can be 0 or greater), the method stops with probability $p$. This probabilistic stopping leads to non-ground (i.e. thermal states). Where the probabilistic stopping condition depends on $n$, i.e. $p=p(n)$ such that the process halts with probability p(n) or continues to another iteration with probability 1- $p(n)$ the algorithm approaches a Gibbs state instead of the ground state (for detailed mathematical proofs, please see Theorem 46 to Proposition 56 below). In particular, stopping conditions in which the probability of stopping depends on the length of the string of prior acceptances is able to generate the Gibbs state to any desired precision. The particular form:

$$p(n) = \frac{\lambda^{2n}/(2n)!}{\cosh(\lambda) - \sum_{j=1}^{n-1}\lambda^{2j}/(2j)!}$$

$$\lambda = \frac{\beta\kappa}{\epsilon(1-\epsilon)^{2m-1}}$$

$$\kappa = \sum_{i=1}^{m} \|h_i\|$$

leads to a tuneable convergence to the Gibbs state, where the tuning parameter $0 \le \varepsilon \le 1$ is used to change the strength of the perturbation. These specific forms of history-dependent probabilities (specifically, dependent on the number of continuous acceptances up to the current iteration) necessarily lead to a Gibbs state as set out below. The use of $\beta = 1/k_B T$ allows the temperature of the Gibbs state which is desired (i.e. the target state) to be freely chosen.

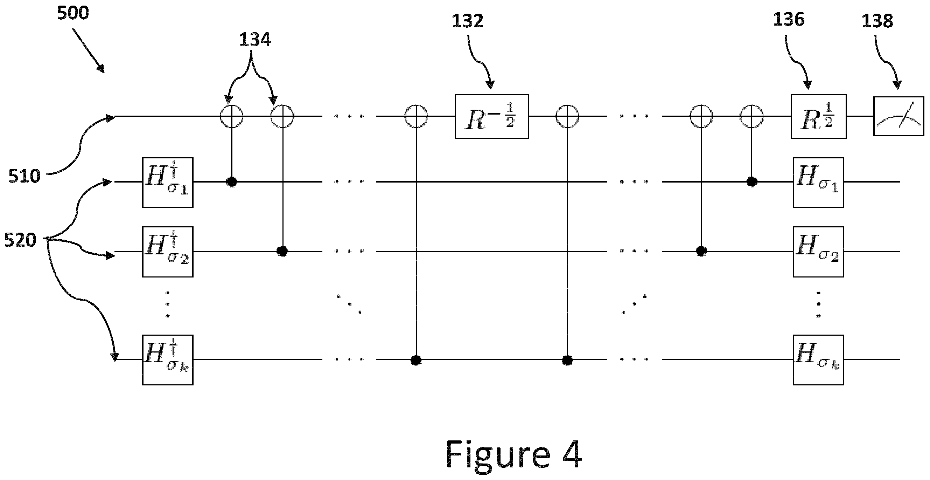

Figure 4 shows an example of a quantum circuit 500 forming part of a quantum computing system for performing method 100. The circuit 500 comprises an ancilla qudit 510 and a plurality of data qudits 520. The ancilla qudit 510 is configured to interact with and perform local generalised measurements on the data qudits 510 and specifically a subset of the data qudits that a local generalised measurement has been mapped to.

The terms of a Hamiltonian H for which an approximation of a target state is desired are transformed into a corresponding set of local generalised measurements. The set of local generalised measurements are mapped to the data qudits 520.

To perform the local generalised measurements the quantum circuit 500 interacts 134 the ancilla qudit 510 with the subset of data qudits 520. After this interaction, a unitary rotation 132 is performed on the ancilla qudit 510. The interaction 134 of the ancilla qudit with the subset data qudits means that the unitary rotation 132 is also performed on the subset of data qudits 520 via the ancilla qudit 510.

An inverse of the rotation 132 is then performed 136 on the ancilla qudit 510. As with the previous rotation 132 this also performs the rotation on the subset of data qudits 520 via the ancilla qudit 510.

The rotations 132 and 134 perturb the data qudits 520 and the perturbations are recorded on the ancilla qudit 510. In this example, the rotation is the tuneable unitary matrix R described above.

The ancilla qudit 510 is measured and based on the measurement outcome the perturbation of the data qudits 520 is accepted or rejected 140. The details of determining whether a measurement outcome should be accepted or rejected are provided in the further information and mathematical proofs section below. In this example circuit, if the perturbation is accepted the subsets of data qudits 520 remain in the perturbed state and if the perturbation is rejected the subset of data qudits 520 are reinitialised into a random state. As noted above there are a number of other approaches that could be implemented instead, for example on rejection all the data qudits of the quantum computing system could be reinitialised (not just those in the perturbed subset); one or more data qudits of the quantum computing system in particular one or more data qudits from the perturbed subset can be reinitialised; or the subset of data qudits can be left in the perturbed state. In the case where the subset of data qudits is left in the perturbed state on rejection, the rejection may then simply be informing a particular stopping condition that has been chosen. The consequence of a rejection may be enacted before another local generalised measurement is performed or after all the local generalised measurements have been performed.

The quantum circuit 500 or similar quantum circuits are used to perform another local generalised measurements until a chosen stopping condition is met 150. Any of the stopping conditions described above can be used in the implementation of method 100 on quantum circuit 500 or a plurality of quantum circuits 500.

The quantum circuit 500 implements a single local generalised measurement from the set of local generalised measurements. A quantum circuit of this form can be replicated for each local generalised measurement in the set so as to perform all local generalised measurements from the set of local generalised measurements. Performing all local generalised measurements in the set means that method 100 has been performed local generalised measurements that as a set correspond to all the terms in the k-local Hamiltonian of interest.

In cases where quantum circuits 500 have been configured to perform local generalised measurements on disjoint subsets of data qudits 520, these quantum circuits 500 can be implemented in parallel so as to improve efficiency.

Once a stopping condition has been met, having performed method 100 on at least one quantum circuit 500, the data qudits 520 of the quantum computing system provide an approximation of a target state of the Hamiltonian.

The quantum computer system may be any quantum computing system, and the method is not limited to any particular physical realisation of the qudits. For example, the method can be used to approach a target state of a trapped ion qudit based quantum computer, a superconducting qudit based quantum computer, a quantum dot qudit based quantum computer etc.

The use of photonic qudits is however particularly advantageous because repeatedly cycling photonic qubits through the same quantum circuit module (i.e. performing the method described above repeatedly changing only the measurement being performed) is a natural part of photonic quantum computing hardware.

Figure 4 performs method 100 using an ancilla qudit, however as noted above method 100 can be performed without the use of an ancilla qudit. A quantum circuit for performing method 100 without an ancilla qudit would be very simple. The circuit might comprise a "gate" configured to perform a given local generalised measurement and extending across all the qudits involved in a given local generalised measurement. Separate but similar gates would be implemented for each local generalised measurement in the set across the relevant subsets of data qudits.

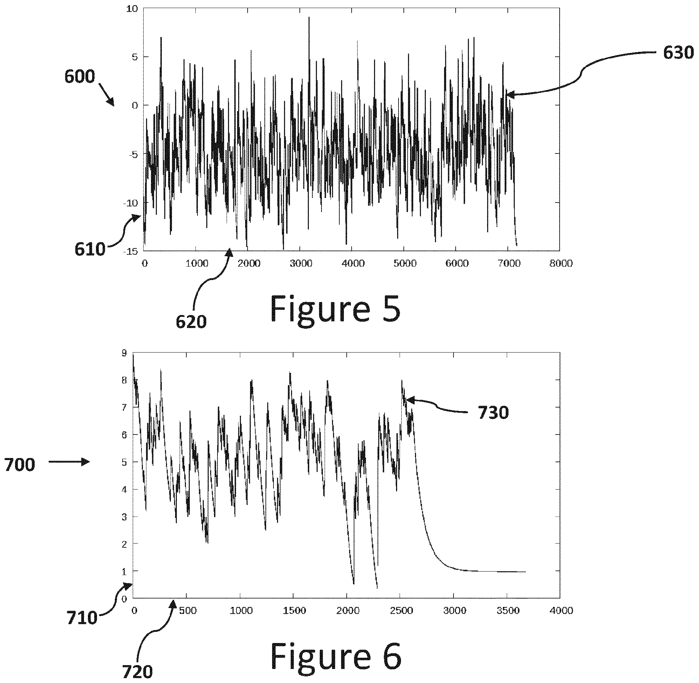

Figure 5 shows a plot 600 having a trace 630 of the evolution of energy during a simulation of method 100 on a 1D Heisenberg chain of length 10. The stopping condition is that described in Theorem 18 below (in which the maximum run time was set to 1000 iterations).

On rejection of a measurement outcome the perturbed data qudits were reinitialized into a random state. Numerical values of e=0.1 and r=1/9 were used in the implementation of Theorem 19 described below. The true known (normalised) ground state energy for this system is -17.032. The tuning parameter of the local generalised measurements was kept constant throughout the simulation but could have been tuned as described in this application so as to approach a ground state faster and/or more efficiently.

The x-axis 620 plots the number of iterations (or time steps) of method 100. The y-axis 610 plots the energy of the 1D Heisenberg chain.

The trace 630 shows an oscillation in the energy of the system as iterations of method 100 are performed. This corresponds to the perturbations performed on the simulated data qudits as the method 100 is performed. At the end of the trace 630 before the simulation (method 100) is terminated by the stopping condition the trace 630 can be seen to be approaching a minimum energy value or approximate ground state of the simulated 1d Heisenberg chain. Figure 6 shows a similar plot 700 to the plot 600 of Figure 5. Figure 6 shows a plot 700 having a trace 730 of the evolution of energy during a simulation of method 100 on a 3x3 spin Fermi-Hubbard model, mapped to a 20-qubit local Hamiltonian using the Compact Encoding described in. The stopping condition is that described in Theorem 18 below (in which the maximum run time was set to 10000 iterations).

On rejection of a measurement outcome the perturbed data qudits were reinitialized into a random state. Numerical values of e=0.1 and r=1/9 were used in the implementation of Theorem 18. The tuning parameter of the local generalised measurements was kept constant throughout the simulation but could have been tuned as described in this application so as to approach a ground state faster and/or more efficiently.

The x-axis 720 depicts iterations (or time steps) of method 100. The y-axis 710 plots the energy of the 20-qubit local Hamiltonian.

The trace 730 shows an oscillation in the energy of the system as iterations of method 100 are performed. This corresponds to the perturbations performed on the simulated data qudits as the method 100 is performed. At the end of the trace 730 before the simulation (method 100) is terminated by the stopping condition the trace 730 can be seen to be approaching a minimum energy value (approximate ground state) of the simulated 20-qubit local Hamiltonian. Method 100 was used to approximate a ground state of a local Hamiltonian on a simulated quantum computing system.

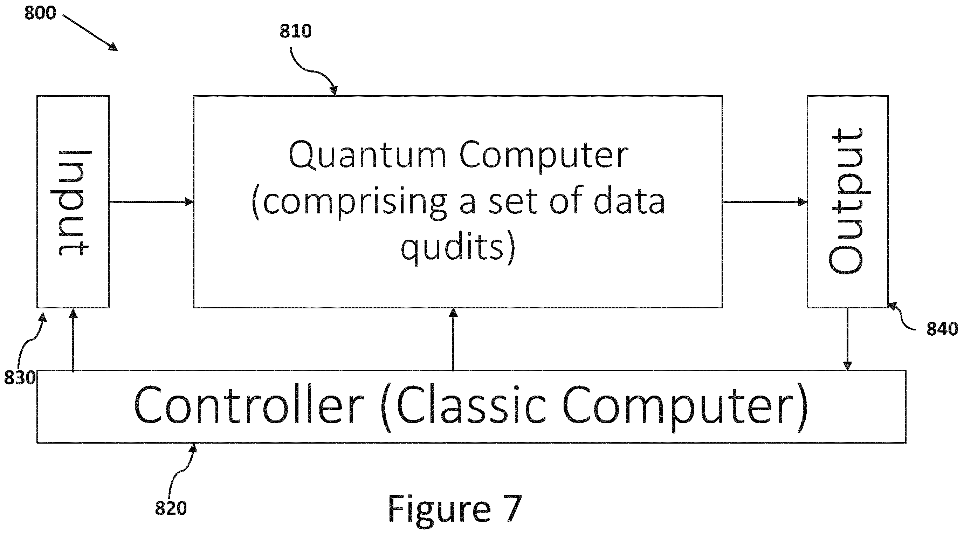

Figure 7 illustrates an example schematic of a quantum computer system 800 for implementing the methods described herein. The quantum computer system 800 comprises a controller 810 for example a "classical" computer; an input 830; a quantum computer 810 comprising a set of data qudits such as the set of data qudits described above; and an output 840. The controller 820 can be used to control the input 830 for inputting parameters into the quantum computer 810, for example the input 830 may be an ancilla qubit which the classical computer 820 controls to perform the local generalised measurements described above. The output 840, outputs information measured from the data qudits of the quantum computer 810 and transmits the information to the controller 820 where it can be displayed to a user. The output 840 and input 830 may be the same, for example the ancilla qudit described above could be implemented as both the input and output in quantum computer system 800. Quantum computer system 800 is one example of a quantum computer system that could be used to perform the methods described herein. The quantum computer 810 may comprise photonic qubits; ion trap qubits or superconducting qubits. Other quantum computing qubits may also be used, the methods described herein are not restricted to any one particular quantum technology.

**Specific example: the Heisenberg spin chain**

The following is an example of an implementation of the quantum instrument used in both the DQE and DGS algorithms, for the Heisenberg spin chain (containing *n* spins indexed by *i*). The Hamiltonian is given by:

$$H = -\frac{1}{2}\sum_{i=1}^{n} X_i X_{i+1} + Y_i Y_{i+1} + Z_i Z_{i+1}$$

For each *XX, YY* and *ZZ* term in the Hamiltonian above, the circuits which acts on the system combined with a single ancilla qubit are defined.

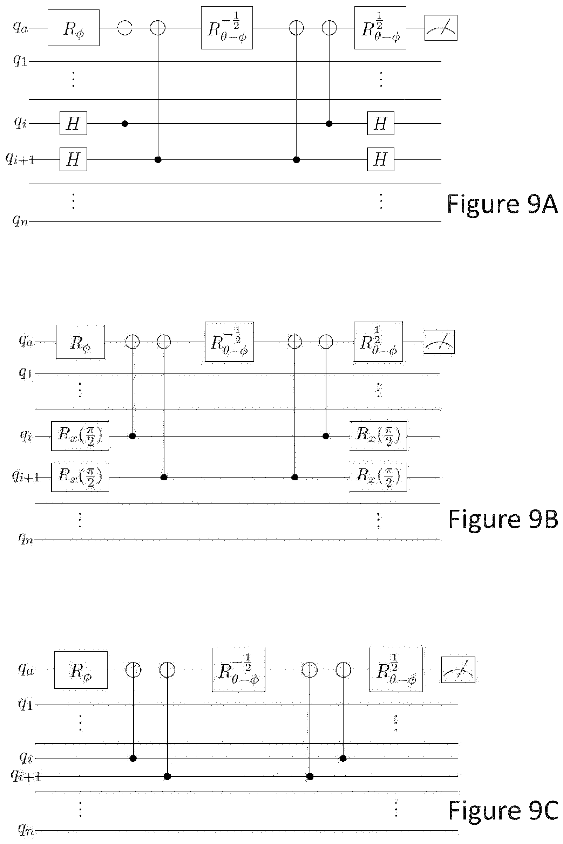

To implement a single step of the algorithm, a circuit shown in Figures 9A to 9C (depending on whether the term is *XX, YY* or *ZZ*) is applied for each term in the Hamiltonian above in any order which is convenient, and then in

reverse. For the $X_iX_{i+1}$ term (Figure 9A) qubits $q_i$ and $q_{i+1}$ are rotated with a Hadamard gate in the correct measurement basis, and CNOT gates are applied between them and an ancilla qubit, $q_a$. Next a $R_{\theta-\varphi}^{-1/2}$ rotation is performed on the ancilla qubit. Finally, the CNOT and Hadamard gates are undone by applying them again in the reverse order and before the ancilla qubit is measured by performing a weak measurement. The rotation angles for the x-rotation on the ancilla qubits are given by:

$$R_x \begin{pmatrix} \cos x & -\sin x \\ \sin x & \cos x \end{pmatrix}, \quad \theta = \cos^{-1}(1-\epsilon), \qquad \varphi = \cos^{-1}\big(1-\epsilon(1+1/n)\big)$$

where $\varepsilon$ is the strength of the weak measurement.

For the $Y_iY_{i+1}$ and $Z_iZ_{i+1}$ terms the corresponding circuits are the same, up to different measurement base changes: $R_x\left(\frac{\pi}{2}\right)$ for the $Y_iY_{i+1}$, and nothing for the $Z_iZ_{i+1}$ case. If a 1 outcome is measured after any local measurement, a resampling operation is applied, which may be either global or local. For the simplest implementations, the entire state is resampled to the maximally mixed state 1/D by discarding the entire state and is reinitialising in a random choice of a computational basis state. Otherwise, if all local measurements return 0, then no resampling is performed. The above is then repeated until the stopping rule (which depends on the choice of algorithm, and is discussed in detail elsewhere herein) is satisfied.

**Further Information and Mathematical proofs**

The methods and apparatus have been described where possible in general terms abstracted from example mathematical formula and algorithms that could be used to implement such methods. This section provides a mathematical description and example mathematical methods that could be used to implement specific examples of the methods described above. In more detail, for any local Hamiltonian $H$ and precision $\varepsilon$, a local CPT map and stopping condition which converges to the target state subspace of H is constructed. This gives a new quantum algorithm for constructing ground states of local Hamiltonians. Like any target state preparation algorithm, this algorithm necessarily has exponential run-time in general (otherwise BQP=QMA), even for gapped, frustration-free Hamiltonians (otherwise BQP2NP). However, the dissipative quantum eigensolver described herein has a number of interesting characteristics, which give advantages over previous ground state preparation algorithms.

- The algorithm is simple, consisting simply of iterating the same local measurements repeatedly.

- The expected overlap with the ground state subspace increases monotonically with the length of time this process is allowed to run.

- It converges to the target state subspace unconditionally, without any assumptions on or prior information about the Hamiltonian.

- The algorithm does not require any variational optimisation over parameters.

- It is often able to find the target state in low circuit depth in practice.

- It has a simple implementation on certain types of quantum hardware, in particular photonic quantum computers.

- The process is immune to errors in the initial state.

- It is inherently error- and noise-resilient, i.e. to errors during execution of the algorithm and also to faulty implementation of the algorithm itself, without incurring any computational overhead: the overlap of the output with the target state subspace degrades smoothly with the error rate, independent of the algorithm's run-time.

Note that the various algorithms, lemmas, theorems, definitions, remarks, etc. described below are labelled sequentially in a single series, for ease of finding a given one of these - so for example definition 4 appears after theorem 3 and before remark 5.

Method 100 can be referred to as a dissipative Quantum Eigensolver (DQE) where it relates to finding a ground state and a Dissipative Gibbs Sampler (DGS) where it relates to finding a Gibbs state.

**The Dissipative Quantum Eigensolver (DQE)**

**Algorithm** 1 (Dissipative Quantum Eigensolver (DQE)). *Let* $K = \sum_i h_i$ *be an Approximate Ground State Projector (AGSP), where $h_i$ are Hermitian operators. Let* $\left\{ \varepsilon_{i,0}^{(t)}, \varepsilon_{i,1}^{(t)} \right\}$ *be the quantum instrument defined by*

$$\varepsilon_{i,0}^{(t)}(\rho) = E_i^{(t)} \rho (E_i^{(t)})^\dagger, \varepsilon_{i,1}^{(t)}(\rho) = (1 - tr(E_i^{(t)} \rho \left( E_i^{(t)} \right)^\dagger)) \mathcal{R}_i^{(t)}(\rho) \; (1)$$

where

$$E_i^{(t)} := (1 - \epsilon_t)\mathbb{1} + \epsilon_t h_i, \; \mathcal{R}_i^{(t)}$$

is a CPT map, and $0 < \varepsilon_t < 1$ is a sequence of real numbers. Let $\tau$ be a stopping rule.

The DQE algorithm consists in successively applying the weak-measurements (local generalized measurements) $\left\{ \varepsilon_{i,0}^{(t)}, \varepsilon_{i,1} \right\}$ and stopping according to the stopping rule $\tau$.

The main result is that this algorithm converges to the ground state for any Hamiltonian, without any spectral or other assumptions on the Hamiltonian.

That is to say that the definition of the quantum instrument above is such that an iteration of the weak measurement protocol (captured in general terms in the detailed description section above, and in detail in equation (1)) repeatedly perturbs the state of at least some of the qudits of the quantum information processor, in a way designed so that the energy of the state is more likely to decrease than to increase if the 0 outcome is obtained. This repeated sampling allows an assessment of whether the sequence of samplings has reduced the energy (so moving closer to the ground state), indicated by the 0 measurement outcomes, or not (i.e., no reduction in energy does not move closer to the ground state) as indicated by the 1 measurement outcome.

A particular feature of note is that while a single measurement may not contain sufficient information to reliably learn anything about the closeness of the new state to the ground state relative to the starting state, a string of multiple consecutive 0 measurements (using the above assignment of 0 being a reduction of energy) does indeed convey such information. The longer the string of 0s, the better the approximation will be to the true ground state. Examples of why single measurements may not provide much information include where local minima frustrate the process or where a dense spectrum allows for progress towards the ground state which is nevertheless too small lead to a confident assertion of an improvement.

**Theorem 2** Let $H = \sum_{i=1}^{m} h_i$ be a $k$-local Hamiltonian on a Hilbert space $\mathbb{C}^D$ with ground state projector $\Pi_0$, and let $C_\lambda(H) = \sum_i h'_i$ be as in <u>Lemma 7</u>.

In <u>Algorithm</u> 24, choose $K = \sum_i h'_i, \; \epsilon_t = \dfrac{\epsilon}{r^{t-t_1}}$ where $t_1$ is the time step at which the last outcome 1 was obtained, with $(1 - \epsilon)^{2m} > \dfrac{1}{r}$. Choose any $\mathcal{R}$ such that $\mathcal{R}(\rho)$ has full support if $\rho$ does (e.g.

$$\mathcal{R}(\rho) = \mathbb{1}/D$$

). Here, when a 0 outcome was obtained in a given time step $t$, it means that the $\varepsilon_{i,0}^{(t)}$ outcome was obtained for all i at that time step in Algorithm 24. Conversely, a 1 outcome is obtained if the outcome $\varepsilon_{i,1}^{(t)}$ is obtained for any *i*.

Let $\tau$ be one of the stopping rules from Theorems 15, 19, and 23 (setting some maximum allowed run-time $t$ and choosing $n$ increasing with $t$ in the Theorem 15 case).

Then the state $\rho_\tau$ at the stopping time after running <u>Algorithm</u> 24 for at most $t$ steps satisfies

$$\lim_{t\to\infty} \mathrm{tr}(\Pi_0 \rho_\tau) = 1. \ (2)$$

Moreover, Algorithm 1 is inherently noise- and fault-resilient:

**Theorem 3** Let $K$ be a $(\Delta, \Gamma, \varepsilon)$-AGSP (Approximate Ground State Projector) for $\Pi_0$ on a Hilbert space of dimension $D$, and let $N := \mathrm{tr}\Pi_0$ be the ground state degeneracy. Let $\{\varepsilon_0, \varepsilon_1\}$ be the quantum instrument of Theorem 15 for $K$, and let $\{\varepsilon_0', \varepsilon_1'\}$ be a noisy or faulty implementation of that quantum instrument such that

$$\|\varepsilon_0' - \varepsilon_0\|_\diamond \leq \frac{\delta}{\sqrt{D}} < \frac{\sqrt{\Gamma}(\sqrt{\Gamma}-\sqrt{\Delta})}{2N\sqrt{D}} \ (3)$$

Consider the stopped process whereby $\{\varepsilon_0, \varepsilon_1'\}$ is iterated, starting from the maximally mixed state

$$\rho_0 = \mathbb{1}/D$$

, and stopped at some point when a run of $n$ 0's has been obtained.

The state $\rho'_n$ at the stopping time satisfies

$$\lim_{t\to\infty} \mathrm{tr}(\Pi_0 \rho'_n) \geq 1 - \epsilon - \frac{2\delta}{\frac{1}{N}\sqrt{\Gamma}(\sqrt{\Gamma}-\sqrt{\Delta})-2\delta}. \ (4)$$

The DQE algorithm described herein has some distinct advantages over previous ground state preparation methods (see <u>Table</u> 1 below for a summary):

- Unlike dissipative state engineering, the DQE algorithm is not restricted to the special class of frustration-free Hamiltonians but works for any Hamiltonian (<u>Theorems</u> 11 and 15).
- Unlike the heuristic VQE algorithm, the DQE algorithm is provably guaranteed to find the correct ground state (<u>Theorem</u> 15).
- Unlike other non-heuristic algorithms, the DQE algorithm is guaranteed to converge to the ground state without any assumptions on or prior information about the Hamiltonian (Theorem 32).
- Unlike a Variational Quantum Eigensolver (VQE), DQE does not require any costly and heuristic optimisation over parameters (Theorems 19 and 23).
- Unlike adiabatic state preparation and phase estimation methods, DQE often finds the ground state quickly and in low circuit depth in practice.
- Unlike adiabatic state preparation, phase estimation, imaginary-time evolution and VQE (and indeed any unitary algorithm), DQE is inherently noise- and fault-resilient, without any additional computational overhead (Theorem 45)
- DQE lends itself particularly well to implementation on certain types of quantum hardware, such as photonic quantum computation.

*Table 1: Overview of advantages and disadvantages of the adiabatic state preparation, quantum phase estimation (QPE), imaginary-time dynamics, VQE, dissipative state engineering and DQE algorithms for preparing ground states of Hamiltonians.*

| Algorithm | Adiabatic | QPE | $i$-time | VQE | Dissipative | DQE |
|---|---|---|---|---|---|---|
| No conditions on $H$ | | | | ✓ | | ✓ |
| Always succeeds | | ✓ | ✓ | | ✓ | ✓ |

(continued)

| Algorithm | Adiabatic | QPE | *i*-time | VQE | Dissipative | DQE |
|---|---|---|---|---|---|---|
| No parameter optimisation | ✓ | ✓ | ✓ | | ✓ | ✓ |
| Low-depth in practice | | | | ✓ | | ✓ |
| Noise- and fault-resilient | | | | | ✓ | ✓ |
| Convenient implementation | | | | ✓ | ✓ | ✓ |

Herein $\|\cdot\|$ denotes the standard operator norm and $\|\cdot\|_\rho$ denotes the Schatten *p*-norm.

**Approximate Ground State Projectors**

**Definition 4 (AGSP)** Let $\Pi_0$ be the projector onto the ground space of a Hamiltonian. A Hermitian operator K is a $(\Delta,\Gamma,\varepsilon)$-approximate ground state projector (AGSP) for $\Pi_0$ if there exists a projector $\Pi$ such that:

(i). $[K, \Pi]=0$,
(ii). $K\Pi \geq \sqrt{\Gamma}\Pi$,
(iii).

$$\|(\mathbb{1} - \Pi)K(\mathbb{1} - \Pi)\| \leq \sqrt{\Delta}$$

(iv). $\|\Pi - \Pi_0\| \leq \varepsilon$

**Remark 5** The AGSPs of ["Itai Arad et al. "An area law and sub-exponential algorithm for 1D systems".(2013). arXiv: 1301.1162 [quant-ph].", Definition 2.1] correspond to the special case of $(\Delta,1,0)$-AGSPs in Definition 4. However, in ["Itai Arad et al."] they also impose an additional condition on the Schmidt-rank blow-up of the AGSP, which is critical to their proof of the 1D area law but is not relevant to this work.

**Lemma 6** ([Itai Arad et al., Section 4]) Let $H = \Sigma_i h_i$ be a local Hamiltonian, with minimum eigenvalue $\lambda_0$ and spectral gap $\delta$. Let $\Pi_0$ be the spectral projector corresponding to $\lambda_0$. Let $C_\ell(x)$ be the rescaled Chebyshev polynomial of degree $\ell$ from [Itai Arad et al, Lemma 4.1]. Then $C_\ell(H)$ is a $(\Delta,1,0)$-AGSP with $\sqrt{\Delta} = 2e^{-2\ell\sqrt{\delta/(\|H\|-\lambda_0)}}$ .

**Lemma 7** Let $H = \Sigma_i h_{i=1}^m$ be a k-local Hamiltonian, and $C_\ell$ be the rescaled Chebyshev polynomial of degree l from [Itai Arad et al, Lemma 4.1]. Then $C_\ell(H) = H' = \sum_{i=1}^{m'} h'_i$ is a $k\ell$-local Hamiltonian, with

$$m' \leq \left(\frac{e}{\ell}\right)^\ell m^\ell = poly(m)\ terms$$

.

**Proof**. Immediate from $C_\ell$ being a degree $\ell$ polynomial and "Justin Melvin. Sum of the first k binomial coefficients for fixed n. Math-Overflow. url: https://mathoverflow.net/q/17217.". A result is shown below that allows new AGSPs to be constructed by perturbing an existing AGSP. For which we need the following variant of the Davis-Kahan sin $\Theta$ Theorem. **Theorem 8** Let A, A' be Hermitian matrices. Let P, P' be the orthogonal projectors onto the eigenspaces associated with the k largest eigenvalues of A and A' respectively. Assume that the spectrum of A satisfies $\lambda_k - \lambda_{k+1} \geq \delta$, where $\lambda_i$ is the i'th largest eigenvalue of A. Then

$$\|P - P'\| \leq \frac{2\sqrt{k}\|A-A'\|}{\delta} \quad (5)$$

**Proof** This is a special case of "A useful variant of the Davis-Kahan theorem for statisticians" Y. YU, T. WANG AND R. J. SAMWORTH Biometrika (2015), 102, 2, pp. 315-323 (Yu *et al.*), together with the fact that $\|P - P'\| = \|P\perp P'\|$

= ‖sin Θ (V, V')‖ and the standard relation ‖X‖ ≤ ‖X‖$_2$.

**Lemma 9** (AGSP perturbation) Let K be a(Δ,Γ,0)-AGSP for Π$_0$ with a ground state degeneracy N: = trΠ$_0$. If K'

is a Hermitian operator such that $\delta := \|K - K'\| < \left|\sqrt{\Gamma} - \sqrt{\Delta}\right|$ , then K' is an (Δ+δ,Γ-δ, $\varepsilon$)-AGSP, with

$$\epsilon = \frac{2\sqrt{N}\delta}{\sqrt{\Gamma}-\sqrt{\Delta}}. \ (6)$$

**Proof.** Since [K,Π$_0$]=0 by Definition 4(i), it decomposes as K=K$_0$⊕K$_1$ with respect to the Π$_0$,

$$(\mathbb{1} - \Pi_0)$$

decomposition of the Hilbert space. By definition 4(ii) and (iii), all eigenvalues of K$_0$ are ≥√Γ and all eigenvalues of K$_1$ are ≤√Δ. Thus, by Theorem 37 noting that K is Hermitian hence diagonalised by a unitary, K' has some eigenvalues ≥√Γ-δ and the rest ≤√Δ+δ. Applying Theorem 8, we have

$$\|\Pi_0' - \Pi_0\| \le \frac{2\sqrt{N}\|K-K'\|}{\sqrt{\Gamma}-\sqrt{\Delta}} \ = \ \epsilon \ (7)$$

Where $\Pi_0'$ is the projector onto the ≥√Γ-δ eigenspace of K'. Thus $\Pi_0'$ fulfils Definition(iv).

Let $K' = K_0' \oplus K_1'$ be the decomposition of K' with respect to

$$\Pi_0', (\mathbb{1} - \Pi_0').$$

By definition of $\Pi_0'$ , $K_0', K_1'$ , we have

$$[K', \Pi_0']=0, \ (8)$$

$$K'\Pi_0' = K_0'\Pi_0' \ge \left(\sqrt{\Gamma} - \delta\right)\Pi_0', \ (9)$$

$$\|(\mathbb{1} - \Pi_0')K'(\mathbb{1} - \Pi_0')\| = \|K_1'(\mathbb{1} - \Pi_0')\| \le \sqrt{\Delta} + \delta. \ (10)$$

Thus K' fulfils 4(i)-(iii).

Note that Lemma 9 can readily be generalised to the case where K is an (Δ,Γ, $\varepsilon$)-AGSP, rather than assuming $\varepsilon$ = 0. However we will not need this generalisation here.

The following result will be important later, in allowing the AGSPs to be implemented using local measurements.

Proposition 10 Let $K = \sum_{i=1}^{m} h_i$ be a (Δ,Γ,0)-AGSP for Π$_0$. Then

$$K' = \prod_{i=1}^{m}\left((1 - \epsilon)\mathbb{1} + \epsilon h_i\right)\prod_{i=m}^{1}\left((1 - \epsilon)\mathbb{1} + \epsilon h_i\right)$$

is a (Δ',Γ',$\varepsilon$')-AGSP with:

$$\Delta' = (1 - \epsilon)^{4m-2}\left(1 - \left(1 - 2\sqrt{\Delta}\right)\epsilon\right)^2 + O(\epsilon^2), \text{ (11)}$$

$$\Gamma' = (1 - \epsilon)^{4m-2}\left(1 - \left(1 - 2\sqrt{\Gamma}\right)\epsilon\right)^2 - O(\epsilon^2), \text{(12)}$$

$$\epsilon' = O(\epsilon^2). \text{ (13)}$$

**Proof.** Let

$$\text{Let } \widetilde{K} := (1 - \epsilon)^{2m}\mathbb{1} + 2\epsilon(1 - \epsilon)^{2m-1}K.$$

We have

$$\widetilde{K}\Pi_0 = (1 - \epsilon)^{2m}\Pi_0 + 2\epsilon(1 - \epsilon)^{2m-1}K\Pi_0 \text{ (14)}$$

$$\geq (1 - \epsilon)^{2m-1}\left(1 - \left(1 - 2\sqrt{\Gamma}\right)\epsilon\right)\Pi_0. \text{ (15)}$$

Similarly,

$$\left\|(1 - \Pi_0)\widetilde{K}(1 - \Pi_0)\right\| \text{ (16)}$$

$$\leq (1 - \epsilon)^{2m}\|(1 - \Pi_0)\mathbb{1}(1 - \Pi_0)\| + 2\epsilon(1 - \epsilon)^{2m-1}\|(1 - \Pi_0)K(1 - \Pi_0)\| \text{ (17)}$$

$$\leq (1 - \epsilon)^{2m-1}\left(1 - \left(1 - 2\sqrt{\Delta}\right)\epsilon\right). \text{ (18)}$$

Thus $\widetilde{K}$ is a $(\widetilde{\Delta}, \widetilde{\Gamma}, 0)$-AGSP with

$$\widetilde{\Delta} = (1 - \epsilon)^{4m-2}\left(1 - \left(1 - 2\sqrt{\Delta}\right)\epsilon\right)^2, \text{ (19)}$$

$$\widetilde{\Gamma} = (1 - \epsilon)^{4m-2}\left(1 - \left(1 - 2\sqrt{\Gamma}\right)\epsilon\right)^2. \text{ (20)}$$

Now, K' is Hermitian and

$$K' = (1 - \epsilon)^{2m}\mathbb{1} + 2\epsilon(1 - \epsilon)^{2m-1}K + O(\epsilon^2), \text{ (21)}$$

so that

$$\left\|K' - \widetilde{K}\right\| = O(\epsilon^2). \text{ (22)}$$

Thus by **Lemma 9**, K' is an $(\widetilde{\Delta} + O(\varepsilon^2), \widetilde{\Gamma} - O(\varepsilon^2), O(\varepsilon^2))$-AGSP, as claimed.

**Dissipative ground state preparation**

**Fixed-point ground state preparation**

**Theorem 11** Let $K$ be a $(\Delta, \Gamma, \varepsilon)$-AGSP for $\Pi_0$ on a Hilbert space of dimension $D$, and let $N := \mathrm{tr}\Pi_0$ be the ground state degeneracy. Define the CPT map

$$\varepsilon(\rho) = K\rho K^{\dagger} + (\operatorname{tr}\rho - \operatorname{tr}(K\rho K^{\dagger}))\frac{1}{D}. \quad (23)$$

The fixed points $\rho\infty$ of $\varepsilon$ satisfy:

$$\operatorname{tr}(\Pi_0\rho_\infty) \geq \frac{1-\Delta}{(\Gamma-\Delta)+\frac{D}{N}(1-\Gamma)} - \epsilon. \quad (24)$$

*Proof.* Let $\Pi$ be as in <u>Definition</u> 4, so $[K, \Pi] = 0$. Then,

$$\operatorname{tr}(K\rho K^{\dagger}) = \operatorname{tr}(K(\Pi + \mathbb{1} - \Pi)\rho(\Pi + \mathbb{1} - \Pi)K^{\dagger}) \quad (25)$$
$$= tr(K\Pi\rho\Pi K^{\dagger}) + \operatorname{tr}((\mathbb{1} - \Pi)K(\mathbb{1} - \Pi)\rho(\mathbb{1} - \Pi)K^{\dagger}(\mathbb{1} - \Pi)) \quad (26)$$
$$\leq \operatorname{tr}(K\Pi\rho\Pi K^{\dagger}) + \Delta(1 - \operatorname{tr}(\Pi\rho)) \quad (27)$$

Noting that $\operatorname{tr}\Pi = \operatorname{tr}\Pi_0 = N$ by **Lemma 9**, for any state $\rho$ we have

$$\operatorname{tr}(\Pi\varepsilon(\rho)) = \operatorname{tr}(\Pi K\rho K^{\dagger}) + \left(1 - \operatorname{tr}(K\rho K^{\dagger})\right)\operatorname{tr}\left(\frac{\Pi}{d}\right) \quad (28)$$
$$\geq \operatorname{tr}(K\Pi\rho\Pi K^{\dagger}) + \frac{N}{D}\left(1 - \operatorname{tr}(K\Pi\rho\Pi K^{\dagger}) - \Delta(1 - \operatorname{tr}(1 - \operatorname{tr}(\Pi\rho)))\right) \quad (29)$$
$$= \left(1 - \frac{N}{D}\right)\operatorname{tr}(K\Pi\rho\Pi K^{\dagger}) + \frac{N}{D}\left(1 - \Delta(1 - \operatorname{tr}(\Pi\rho))\right) \quad (30)$$
$$\geq \left(1 - \frac{N}{D}\right)\Gamma\operatorname{tr}(\Pi\rho) + \frac{N}{D}\left(1 - \Delta(1 - \operatorname{tr}(\Pi\rho))\right) \quad (31)$$
$$= \left(\Gamma - \frac{N}{D}(\Gamma - \Delta)\right)\operatorname{tr}(\Pi\rho) + \frac{N}{D}(1 - \Delta). \quad (32)$$

For a fixed point $\rho_\infty$, we obtain

$$\operatorname{tr}(\Pi\rho_\infty) = \operatorname{tr}(\Pi\varepsilon(\rho_\infty)) \geq (\Gamma - \frac{N}{D}(\Gamma - \Delta))\operatorname{tr}(\Pi\rho_\infty) + \frac{N}{D}(1 - \Delta), \quad (33)$$

thus

$$\operatorname{tr}(\Pi\rho_\infty) \geq \frac{1-\Delta}{(\Gamma-\Delta)+\frac{D}{N}(1-\Gamma)}. \quad (34)$$

Since $\|\Pi - \Pi_0\| \leq \varepsilon$ by <u>Definition</u> **4**(iv), we have

$$\operatorname{tr}(\Pi_0\rho_\infty) = \operatorname{tr}(\Pi\rho_\infty) + \operatorname{tr}((\Pi - \Pi_0)\rho_\infty) \quad (35)$$
$$\geq \frac{1-\Delta}{(\Gamma-\Delta)+\frac{D}{N}(1-\Gamma)} - \epsilon \quad (36)$$

as required.

**Remark 12** Taking $\varepsilon = 0$ for simplicity:

- If $\Gamma = 1$, then $\operatorname{tr}(\Pi_0\rho_\infty) = 1$, i.e. the fixed points are exact ground states.

- If $\Gamma = \Delta$, then $\mathrm{tr}(\Pi_0 \rho_\infty) = \frac{N}{D}$ i.e. the overlap of the fixed points with the ground state subspace is no better than that of the maximally mixed state, i.e. no better than guessing a state uniformly at random.

- If $\Gamma = 1 - \delta$, then $\mathrm{tr}(\Pi_0 \rho) \geq 1 - \frac{D/N}{1-\Delta}\delta$ i.e. if $\Delta = o(1)$ then the fixed point is $0(\delta)$-close to a ground state, albeit with a constant prefactor of order the Hilbert space dimension.

In fact, we can derive an exact expression for the fixed point of this process in terms of its AGSP.

**Theorem 13** Let K be a $(\Delta, \Gamma, \varepsilon)$-AGSP for $\Pi_0$ with $0 \leq \Gamma, \Delta < 1$, and

$$\varepsilon(\rho) = K\rho K^\dagger + (\mathrm{tr}\rho - \mathrm{tr}\left(K\rho K^\dagger\right))\frac{1}{D} \ (37)$$

the CPT map from Theorem 11. Then $\varepsilon$ has a unique fixed point given by

$$\rho_\infty = \frac{\left(\mathbb{1} - K^2\right)^{-1}}{\mathrm{tr}(\mathbb{1} - K^2)^{-1}} \ (38)$$

*Proof.* Fixed points $\rho_\infty$ of $\varepsilon$ satisfy

$$\rho_\infty = \varepsilon(\rho_\infty) = K\rho_\infty K^\dagger + \frac{\mathrm{tr}\rho_\infty - \mathrm{tr}\left(K\rho_\infty K^\dagger\right)}{D}\mathbb{1} \ (39)$$

or, equivalently,

$$K\rho_\infty K^\dagger - \rho_\infty + c\mathbb{1} = 0, c = \frac{\mathrm{tr}\rho_\infty - \mathrm{tr}\left(K\rho_\infty K^\dagger\right)}{D}. \ (40)$$

This is a discrete Lyapunov equation, so has a unique solution given by

$$\rho_\infty = \sum_{n=0}^\infty K^n c\mathbb{1}\left(K^\dagger\right)^n = c\sum_{n=0}^\infty K^{2n} = c(\mathbb{1} - K^2)^{-1}, \ (41)$$

recalling that K is Hermitian by Definition 4.

Since we want $\mathrm{tr}\rho_\infty = 1$, we must have that

$$c = 1/\mathrm{tr}(\mathbb{1} - K^2)^{-1}.$$

. To see this explicitly, note that

$$K\rho_\infty K^\dagger = cK\left(\sum_{n=0}^\infty K^{2n}\right)K = c\sum_{n=1}^\infty K^{2n} = c(\sum_{n=0}^\infty K^{2n} - \mathbb{1}) = c(\mathbb{1} - K^2)^{-1} - c\mathbb{1}, \ (42)$$

so, from the expression for c in Equation 40,

$$cD = \mathrm{tr}\rho_\infty - \mathrm{tr}\left(K\rho_\infty K^\dagger\right) = 1 - c\,\mathrm{tr}(\mathbb{1} - K^2)^{-1} + cD. \ (43)$$

Hence

$$c = \frac{1}{\text{tr}(\mathbb{1}-K^2)^{-1}}. \ (44)$$

The following result is immediate from Theorem 13 and the properties of the AGSP $K$ in Definition 4.

**Corollary 14** Let $\varepsilon$ be as in Theorem 13, with $\Pi$ the projector for K from Definition 4. The fixed point $\rho_\infty$ of $\varepsilon$ has the form

$$\rho_\infty = \frac{X_0 \oplus X_\perp}{\text{tr}X_0 + \text{tr}X_\perp} \quad \text{where} \quad X_0 \geq \frac{1}{1-\Gamma}, \ X_\perp \leq \frac{1}{1-\Delta} \ (45)$$

where the direct sum is with respect to the

$$\Pi, \mathbb{1} - \Pi$$

partition of the Hilbert space.

**Stopped process ground state preparation**

**Theorem 15** Let $K$ be a $(\Delta, \Gamma, \varepsilon)$-AGSP for $\Pi_0$ on a Hilbert space of dimension $D$, and let $N := \text{tr}\Pi_0$ be the ground state degeneracy. Let $\{\varepsilon_0, \varepsilon_1\}$ be the quantum instrument defined by

$$\varepsilon_0(\rho) = K\rho K^\dagger, \quad \varepsilon_1(\rho) = \left(1 - \text{tr}(K\rho K^\dagger)\right)\frac{\mathbb{1}}{D}. \ (46)$$

Consider the stopped process whereby we iterate $\{\varepsilon_0, \varepsilon_1\}$, starting from the maximally mixed state

$$\rho_0 = \frac{\mathbb{1}}{D},$$

until we obtain a sequence of $n$ 0's.

The state $\rho_n$ at the stopping time satisfies

$$\text{tr}(\Pi_0\rho_n) \geq 1 - \frac{1-\text{tr}\Pi\rho_0}{\text{tr}\Pi\rho_0}\left(\frac{\Delta}{\Gamma}\right)^n - \epsilon \geq 1 - \epsilon - \frac{D}{N}\left(\frac{\Delta}{\Gamma}\right)^n. \ (47)$$

*Proof.* Let $\Pi$ be as in Definition 4, so $[K, \Pi] = 0$. Thus

$$\text{tr}\left(K^n\rho(K^\dagger)^n\Pi\right) = \text{tr}\left((K\Pi)^n\rho(\Pi K^\dagger)^n\right) \geq \Gamma^n\text{tr}\Pi\rho \ (48)$$

by Definition 4, and similarly

$$\text{tr}\left(K^n\rho(K^\dagger)^n(\mathbb{1} - \Pi)\right) \leq \Delta^n(1 - \text{tr}\Pi\rho). \ (49)$$

For an initial state $\rho$, after a sequence of $n$ 0's we have

$$\rho_n = \frac{\varepsilon_0^n(\rho)}{\mathrm{tr}\,\varepsilon_0^n(\rho)} = \frac{K^n\rho(K^\dagger)^n}{\mathrm{tr}\left(K^n\rho(K^\dagger)^n\right)}. \quad (50)$$

So

$$\mathrm{tr}\Pi\rho_n = \frac{\mathrm{tr}\left(K^n\rho(K^\dagger)^n\Pi\right)}{\mathrm{tr}\left(K^n\rho(K^\dagger)^n\Pi\right)+\mathrm{tr}\left(K^n\rho(K^\dagger)^n(\mathbb{1}-\Pi)\right)} \quad (51)$$

$$=1-\frac{\mathrm{tr}\left(K^n\rho(K^\dagger)^n(\mathbb{1}-\Pi)\right)}{\mathrm{tr}\left(K^n\rho(K^\dagger)^n\Pi\right)+\mathrm{tr}\left(K^n\rho(K^\dagger)^n(\mathbb{1}-\Pi)\right)} \quad (52)$$

$$\geq 1-\frac{\Delta^n(1-\mathrm{tr}\Pi\rho)}{\Gamma^n\mathrm{tr}\Pi\rho} \quad (53)$$

$$= 1-\frac{1-\mathrm{tr}\Pi\rho}{\mathrm{tr}\Pi\rho}\left(\frac{\Delta}{\Gamma}\right)^n. \quad (54)$$

Since the state immediately before any run of 0's is

$$\frac{\mathbb{1}}{D},$$

we have

$$\mathrm{tr}\Pi\rho_n \geq 1-\frac{1-N/D}{N/D}\left(\frac{\Delta}{\Gamma}\right)^n \geq 1-\frac{D}{N}\left(\frac{\Delta}{\Gamma}\right)^n. \quad (55)$$

Finally, by Definition 4 we have $\|\Pi - \Pi_0\| \leq \varepsilon$, so

$$|\mathrm{tr}\Pi_0\rho_n - \mathrm{tr}\Pi\rho_n| \leq \epsilon, \quad (56)$$

and the Theorem follows.
Theorem 16 For the process of Theorem 15, the expected stopping time-i.e., the time until the process first produces a sequence of $n$ 0's-is given by

$$\mathbb{E}(\tau_n) = \frac{1}{\mathrm{tr}(K^{2n})}\mathrm{tr}\left(\frac{1-K^{2n}}{1-K^2}\right) \leq \frac{1}{\Gamma^n}\left(n+\frac{1-\Delta^n}{1-\Delta}\left(\frac{D}{N}-1\right)\right). \quad (57)$$

*Proof.* Since the state is reset to the maximally mixed state whenever the outcome 1 is obtained, the probability of obtaining another 0 after a run of $k$ 0's since the last 1 is given by

$$\Pr\left(0|0^k 1\ldots\right) = \mathrm{tr}\left(K\frac{(K^{2k}/D)}{\mathrm{tr}(K^{2k}/D)}K\right) = \frac{\mathrm{tr}(K^{2(k+1)})}{\mathrm{tr}(K^{2k})}. \quad (58)$$

Let $X_t$ denote the t'th outcome of the process. Define the stochastic process.

$$M_0 = 0, \qquad M_t = \begin{cases} \frac{M_{t-1}+t}{\Pr(X_t=0|X_{t-1},X_{t-2},\ldots,X_1)} - t & X_t = 0 \\ -t & X_t = 1. \end{cases} \quad (59)$$

Now,

$$\mathbb{E}(M_t|X_{t-1}, \dots, X_1) \quad (60)$$

$$= \Pr(X_t = 0|X_{t-1}, \dots, X_1)\left(\frac{M_{t-1}+t}{\Pr(X_t = 0|X_{t-1}, X_{t-2}, \dots, X_1)} - t\right) - t\Pr(X_t = 1|X_{t-1}, \dots, X_1) \quad (61)$$

$$= M_{t-1}, \quad (62)$$

so $M$ is a Martingale with respect to $X_t$. By Doob's optional stopping theorem, $M_{\tau_n}$ is also a Martingale. Therefore, $\mathbb{E}(M_{\tau_n}) = \mathbb{E}(M_0) = 0$. The process $M$ can be understood intuitively as the net winnings from the following betting strategy on the sequence of random events $X_t$. At time-step $t$, stake all your winnings so far plus an additional $t$ on the outcome $X_t = 0$, at fair odds. If you indeed get the outcome 1 then, because the odds are fair, you get back your stake multiplied by a factor determined by the probability of that outcome given everything that has happened so far. So your net winnings in this case are the amount you get back, minus the additional $t$ you put in. If you get the outcome 0, you lose your whole stake. So your net winnings are 0 minus the $t$ you put in. The fact that you're betting at fair odds means that you expect on average to break even, and overall to walk away with 0 net winnings, i.e. the process is a Martingale.

But at $\tau_n$, we have just had a run of $n$ 0's since the last 1. Thus, by Equation (59),

$$M_{\tau_n - n} = -\tau_n - n, \quad (63)$$

$$M_{\tau_n - k} = \frac{1}{\Pr(0|0^{n-1}1\dots)}\left(M_{\tau_n - 1} + \tau_n - k\right) - \tau_n + k. \quad (64)$$

Solving this recurrence relation, we obtain

$$M_{\tau_n} = \frac{1}{\Pr(0|0^{n-1}1\dots)}\left(\frac{1}{\Pr(0|0^{n-2}1\dots)}\left(\cdots\cdots\left(\frac{1}{\Pr(0|01\dots)}\left(\frac{1}{\Pr(0|1\dots)} + 1\right) + 1\right)\cdots + 1\right) + 1\right) - \tau_n$$

$$(65)$$

$$= \frac{tr(K^{2(n-1)})}{tr(K^{2n})}\left(\frac{tr(K^{2(n-2)})}{tr(K^{2(n-1)})}\left(\cdots\cdots\left(\frac{tr(K^2)}{tr(K^{2\cdot2})}\left(\frac{1}{tr(K^2)} + 1\right) + 1\right)\cdots + 1\right) + 1\right) - \tau_n \quad (66)$$

$$= \frac{tr(\sum_{k=0}^{n-1} K^{2k})}{tr(K^{2n})} - \tau_n \quad (67)$$

$$= \frac{1}{tr(K^{2n})}tr\left(\frac{1-K^{2n}}{1-K^2}\right) - \tau_n. \quad (68)$$

Since $\mathbb{E}(M_{\tau_n}) = 0$, we have

$$\mathbb{E}(\tau_n) = \frac{1}{tr(K^{2n})}tr\left(\frac{1-K^{2n}}{1-K^2}\right) \quad (69)$$

as claimed.

Using $K^2 \geq \Pi\Pi$ and

$$K^2 \leq \Pi + \Delta(1 - \Pi)$$

from Definition 4, we can bound this as

$$\mathbb{E}(\tau_n) = \frac{\mathrm{tr}(\sum_{k=0}^{n-1} K^{2k})}{\mathrm{tr}(K^{2n})} \leq \frac{\sum_{k=0}^{n-1} \mathrm{tr}\left(\left(\Pi + \Delta^k(\mathbb{1} - \Pi)\right)\right)}{N\Gamma^n} \quad (70)$$

$$\leq \frac{nN + \frac{1-\Delta^n}{1-\Delta}(D-N)}{N\Gamma^n} = \frac{1}{\Gamma^n}\left(n + \frac{1-\Delta^n}{1-\Delta}\left(\frac{D}{N} - 1\right)\right), \quad (71)$$

again as claimed.

**Remark 17** When $K = \mathrm{fl}$, we have $\Gamma = 1$, $\Delta = 0$, and <u>Theorem</u> 16 gives $\mathbb{E}(\tau_n) \leq \frac{D}{N} + n - 1$. I.e. when the AGSP is exactly a projector, the expected time to obtain a sequence of $n$ 0's is just the expected number of attempts to project the maximally mixed state onto $\Pi$, plus another $n - 1$ steps to deterministically obtain a further $n - 1$ 0's, as expected.

**Optimally stopped process**

The process of Theorem 15 is guaranteed to stop on the first sufficiently long run of successful applications of the AGSP. But this comes at the cost of a non-deterministic run-time, whose expectation scales exponentially in the system size. In practice, it is more useful to set a fixed maximum run-time and stop on the longest run of AGSPs that occur within that time. However, we cannot know what the longest run is until the process finishes, at which point the state produced by that run has already been destroyed. To address this, we need some results from optimal stopping theory.

**Secretary stopping policy**

The secretary problem is perhaps the best-known example of an optimal stopping problem. In this classic problem, we are tasked with hiring a secretary under the following (somewhat artificial) conditions: the total number of candidates is known in advance; candidates are interviewed one by one and must either be hired or rejected immediately; only the relative rank of the current candidate can be determined, relative to the candidates seen so far; there are no ties. We are tasked with hiring the best candidate; selecting any other candidate is counted as a failure. The optimal strategy for the secretary problem is well known:

**Lemma 18** Let $n$ be the total number of candidates in the secretary problem. For any $n$, the optimal stopping policy is a threshold policy: reject the first $\gamma n$ candidates, where $0 < \gamma < 1$, then accept the first candidate that is better than any seen previously. In the limit $n \to \infty$, $\gamma \to e^{-1}$ and the probability of selecting the best candidate also $\to e^{-1}$.

We can use this to show the following bounded-time version of the dissipative ground state preparation process.

We will use the notation $f(n) \sim g(n)$ to mean $\lim_{n \to \infty} f(n)/g(n) \to 1$. **Theorem 19** Fix $t \in \mathbb{N}$ and let $\{\varepsilon_0, \varepsilon_1\}$ be as in <u>Theorem</u> 15. Consider the stopped process in which we repeatedly measure $\{\varepsilon_0, \varepsilon_1\}$ for $t/e$ steps without stopping, then stop at the first run of 0's that is longer than any previous run, breaking ties uniformly at random.

In the limit $t \to \infty$, with probability $\to e^{-1}$ we will stop on a run of zeros of length $n \sim log_{1/\Gamma}(tN/D)$. The resulting state $\rho_n$ satisfies <u>Equation</u> 47.

To prove this, we will make use of the following standard result:

**Lemma 20** [see "Philippe Flajolet and Robert Sedgewick. Analytic combinatorics. Cambridge University Press, 2009.", Example V.4] Consider a sequence of $t$ two-outcome Bernoulli trials with probability $\Pr(0) = p$. Let $L_t$ denote the longest run of 0's. Then $\mathbb{E}(L_t) \sim \log_{1/p} t$.

*Proof of Theorem 19*. A given run of the process will have some sequence of 0 runs (possibly including some runs of zero length), each terminated by a 1. Since the state at the start of any 0 run is identical (namely the maximally mixed state), the probability of a 0-run depends only on its length. Thus the sequence of 0-run-lengths is a sequence of independent and identically distributed (iid) random variables, each chosen according to the same distribution determined by the AGSP. If we rank longer runs as better than shorter ones, breaking ties at random, we can uniquely rank each run relative to the others. If we were given a sequence of run-lengths one-by-one and restrict ourselves to only making use of the relative rank of a run (not the length of the run itself), then selecting the longest run reduces to the secretary problem. Since the run-lengths are iid, sequences of outcomes that have the same run-lengths, but not necessarily in the same order, occur with equal probability. Thus the expected number of 0-runs occurring in any time interval depends only on the length of that interval. The expected proportion of 0-runs that occur within the first $t/e$ time steps is therefore $\sim 1/e$.

Therefore, as $t \to \infty$, under the stopping policy of Theorem 19, we expect to discard the first $e^{-1}$ fraction of the total number of runs of 0's, and then select the first run longer than any seen previously. I.e. as $t \to \infty$, the stopping policy of Theorem 19 converges in expectation to the optimal stopping policy for the secretary problem, and Pr(stop on longest run) $\to e^{-1}$. Now, by Definition 4, the probability of a run of $n$ 0's is $\text{tr}(K^{2n})/D \geq \Gamma^n N/D$. The latter is equal to the probability of first getting heads on a biased coin with Pr(heads) = $N/D$, and if one gets heads then running a sequence of Bernoulli trials with $p = \Gamma$ and obtaining a run of $n$ successes. The expected length of time required to obtain the initial head before starting a Bernoulli trial sequence is $D/N$. Thus the expected length of the longest 0-run is $\sim \log_{1/\Gamma}(tN/D)$.

The claim on $\rho_n$ follows by exactly the same argument as in Theorem 15.

Remark 21 Theorem 19 tells us that to obtain a sequence of $n$ 0's with constant probability requires $t \sim D/N\Gamma^n$. Which is consistent with the expected time to obtain a sequence of $n$ 0's from Theorem 16, which goes as $D/N\Gamma^n$ to leading order.

**Expected run-length stopping policy**

Although the stopping policy in Theorem 19 is optimal for the secretary problem we reduced it to, we can still do somewhat better for the ground state preparation task (even without any additional knowledge of the AGSP). Rather than stop at the strictly longest run of 0's with constant probability, what we would really like to do is maximise the expected length of the 0-run we stop at. The optimal stopping policy for the minimum-expected-rank variant of the secretary problem is also known: "YS Chow et al. "Optimal selection based on relative rank (the "secretary problem")". Israel Journal of mathematics 2.2 (1964), pp. 81-90"

Lemma 22 Let $n$ be the total number of candidates in the secretary problem. Define recursively

$$s_i = \left\lfloor \frac{i+1}{n+1} c_i \right\rfloor, \qquad c_{k-1} = \frac{1}{k}\left(\frac{t+1}{k+1} \cdot \frac{s_k(s_k+1)}{2} + (k - s_k)c_k\right), \qquad c_n = n. \tag{72}$$

For any $n$, the following stopping policy minimises the expected rank: stop at the first candidate $k \geq 1$ such that $y_k \leq s_k$, where $y_k$ is the relative rank of the /c'th candidate relative to the all the candidates seen so far.

The expected rank is given by $c_0$, and $\lim_{n\to\infty} c_0 = \prod_{k=1}^{\infty}\left(\frac{k+2}{k}\right)^{1/k+1} < 3.8695$ .

Employing this stopping policy gives, by similar arguments to Theorem 19, the following variant.

**Theorem 23** Fix $t \in \mathbb{N}$ and let $\{\varepsilon_0, \varepsilon_1\}$ be as in Theorem 15. Consider the stopped process in which we repeatedly measure $\{\varepsilon_0, \varepsilon_1\}$ and stop on the j'th run of 0's, where i is the first 0-run such that $y_i \leq s_i$. Here, $y_i$ is the relative rank of the i'th 0-run relative to all previous 0-runs, ranking the runs by length (longer is better) and breaking ties randomly.

In the limit $t \to \infty$, we will stop on a run of zeros of length $n \sim \log_{1/\Gamma}(tN/D)$. The resulting state $\rho_n$ satisfies Equation (47).

**The Dissipative Quantum Eigensolver (DQE)**

We first formulate a general definition of the Dissipative Quantum Eigensolver: **Algorithm 24** (DQE). *Let K =* $\sum_i h_i$ *be an AGSP, where $h_i$ are Hermitian operators. Let* $\{\varepsilon_{i,0}^{(t)}, \varepsilon_{i,1}^{(t)}\}$ *be the quantum instrument defined by*

$$\varepsilon_{i,0}^{(t)}(\rho) = E_i^{(t)}\rho(E_i^{(t)})^{\dagger}, \varepsilon_{i,1}^{(t)}(\rho) = \left(1 - tr\left(E_i^{(t)}\rho\left(E_i^{(t)}\right)^{\dagger}\right)\right)\mathcal{R}_i^{(t)}(\rho) \tag{73}$$

*where* $E_i^{(t)} := (1 - \epsilon_t)\mathbb{1} + \epsilon_t h_i$, $\mathcal{R}_i^{(t)}$ *is a CPT map, and $0 < \epsilon_t < 1$ is a sequence of real numbers. Let $\tau$ be a stopping rule.*

*The DQE algorithm consists of successively applying the weak-measurements* $\varepsilon_i^{(t)} := \{\varepsilon_{i,0}^{(t)}, \varepsilon_{i,1}^{(t)}\}$ *and stopping according to the stopping rule $\tau$.* Applying Theorems 11, 15, 19, 23 to the local AGSP from Lemma 7 and Proposition 10 immediately gives instances of the DQE algorithm, which prepares the ground state using only *local* measurements: **Collaroy 25** Let $H = \sum_i h_i$ be a k-local Hamiltonian on a Hilbert space $\mathbb{C}^D$, and let $C_A(H) = \sum_{i=1}^{m} h'_i$ be as in <u>Lemma</u> 7. In Algorithm 24, choose $K = \sum_i h'_i$, $\varepsilon_t = \varepsilon$,

$$\mathcal{R}(\rho) = \frac{1}{D}$$

and no stopping rule (i.e. we run the process of Algorithm 24 indefinitely). In each time step t, apply weak measurements $\varepsilon_i^{(t)}$ in the order i=1,...,m and then the reverse order i=m,... ,1.

Then <u>Algorithm</u> 24 can be implemented by local (generalised) measurements, and its fixed point $\rho_\infty$ satisfies

$$tr(\Pi_0 \rho_\infty) \geq \frac{1-\Delta'}{(\Gamma'-\Delta')+\frac{D}{N}(1-\Gamma')} - \epsilon^2. \ (74)$$

where $\Gamma'$, $\Delta'$ are as in Proposition 10.

**Corollary 26** Let $H = \sum_i h_i$ be a *k*-local Hamiltonian on a Hilbert space $\mathbb{C}^D$, and let $C_A(H) = \sum_i h'_i$ be as in Lemma 7. In <u>Algorithm</u> 24, choose $K = \sum_i h'_i$, $\varepsilon_t = \varepsilon$,

$$\mathcal{R}(\rho) = \frac{1}{D}$$

and $\tau$ to be one of the stopping rules from Theorems 15, 19 and 23. In each time step t, apply weak measurements $\varepsilon_i^{(t)}$ in the order i=1,...,m and then the reverse order i=m,... ,1.

Then Algorithm 24 can be implemented by local (generalised) measurements, and the state $\rho_n$ at the stopping time satisfies

$$tr(\Pi_0 \rho_n) \geq 1 - O(\epsilon^2) - \frac{D}{N}\left(\frac{\Delta'}{\Gamma'}\right)^n, \ (75)$$

where $\Gamma'$, $\Delta'$ are as in Proposition 10.

**Remark 27** The resampling map $\mathcal{R}$ in Algorithm 24 and Corollaries 25 and 26 used to update the state on failure can be chosen to be anything that has positive overlap with the ground state; the maximally mixed state is just one convenient choice. Another natural choice would be to replace with the maximally mixed state *locally* on the measured qubits, leaving the rest of the state unchanged.

For the processes in Corollaries 25 and 26 to succeed, $\varepsilon$ must be chosen sufficiently small that $\Gamma' > \Delta'$ in Proposition 10. However, $\Gamma'$ and $\Delta'$ ultimately depend on the spectrum of the Hamiltonian, which one typically does not know. So it is not clear what $\varepsilon$ one should choose when applying the algorithm to a given Hamiltonian unless one has prior knowledge of its spectral properties.

Similar issues occur in most ground state preparation algorithms. The standard approach is to make some assumption on the spectrum of *H*, e.g. a lower-bound on the spectral gap and/or the density of states and show that the algorithm succeeds on Hamiltonians satisfying those assumptions. As $\Gamma - \Delta$ is directly related to the spectral gap of *H,* in our case any lower-bound on the spectral gap allows a sufficiently small $\varepsilon$ to be chosen to guarantee success. However, determining the spectral gap of a Hamiltonian is in general harder than finding the ground state in the first place! (The spectral gap problem is $P^{QMA}$log-complete for Hamiltonians on finite numbers of particles, and even becomes undecidable in the asymptotic limit). Furthermore, as there is in general no way to determine whether a given quantum state is close to the ground state or not, it is not possible to run such algorithms with some guess at suitable parameters, and then verify at the end whether they succeeded or not.

For the dissipative quantum eigensolver of Algorithm 24, we can do better. We will prove that if, instead of a

constant $\varepsilon$, we choose it according to a suitable decreasing sequence, then Algorithm 24 will always converge to the ground state of the Hamiltonian, without any assumptions on or prior knowledge about the Hamiltonian.

**Lemma 28** *Let $K_t$ be a family of $(\Gamma_t, \Delta_t, \epsilon_t)$-AGSPs for the same ground state projector $\Pi_0$. Let* $K = \prod_{t=n}^{1} K_t$ *. Then*

$$\text{tr}\left(K\rho K^\dagger \Pi_0\right) \geq \text{tr}(\rho\Pi_0) \prod_{t=1}^{n} \Gamma_t - 2 \sum_{t=1}^{n} \epsilon_t \prod_{s=t+1}^{n} \Gamma_s \quad (76)$$

$$\text{tr}\left(K\rho K^\dagger (1 - \Pi_0)\right) \leq \text{tr}\left(\rho(\mathbb{1} - \Pi_0)\right) \prod_{t=1}^{n} \Delta_t + 2 \sum_{t=1}^{n} \epsilon_t \prod_{s=t+1}^{n} \Delta_s. \quad (77)$$

*Proof.* Denote $K^{(k)} = \prod_{t=k}^{1} K_i$ . Noting that $\|\Pi_t - \Pi_s\| \leq \|\Pi_t - \Pi_0\| + \|\Pi_s - \Pi_0\| \leq \varepsilon_t + \varepsilon_s$ , we have

$$\text{tr}\left(K^{(k)}\rho K^{(k)}\Pi_0\right) = \text{tr}\left(K_k K^{(k-1)}\rho K^{(k-1)} K_k \Pi_0\right) \quad (78)$$

$$\geq \text{tr}\left(K_k K^{(k-1)}\rho K^{(k-1)} K_k \Pi_k\right) - \epsilon_k \quad (79)$$

$$= \text{tr}\left((K_k \Pi_k) K^{(k-1)}\rho K^{(k-1)} (K_k \Pi_k)\right) - \epsilon_k \quad (80)$$

$$\geq \Gamma_k \text{tr}\left(K^{(k-1)}\rho K^{(k-1)}\Pi_k\right) - \epsilon_k \quad (81)$$

$$\geq \Gamma_k \text{tr}\left(K^{(k-1)}\rho K^{(k-1)}\Pi_0\right) - 2\epsilon_k, \quad (82)$$

where we have used Definition 4 in Equation (81) and $\Gamma_k \leq 1$ in the final line. Applying this repeatedly to $\text{tr}(K\rho K^\dagger \Pi_0) = \text{tr}(K^{(n)}\rho K^{(n)}\Pi_0)$ gives the first inequality in the Lemma.

The second inequality follows by a very similar argument.

Lemma 29 Let $\Gamma_t$ be a monotonically increasing sequence that converges to 1 from below. Let r > 1. Then $\exists k < \infty$ such that

$$\sum_{t=k+1}^{n} \frac{1}{r^t} \prod_{s=1}^{t} \frac{1}{\Gamma_s} < \frac{1}{(r\Gamma_k)^k} \cdot \frac{1 - (r\Gamma_k)^{-n}}{1 - r\Gamma_k}. \quad (83)$$

*Proof.* Let *k* be the first *i* such that $1/r < \Gamma_i$ which is guaranteed to be finite since *r* > 1 and $\Gamma_i$ monotonically increases to 1. The follows straightforwardly by bounding $\Gamma_k \leq \Gamma_t$ for $t \geq k$ and summing the geometric series.

The following is immediate from Lemma 29.

**Corollary 30** Let $\Delta_t$ be a monotonically increasing sequence that converges to 1 from below. Let r > 1. Then

$$\sum_{t=1}^{\infty} \frac{1}{r^t} \prod_{s=1}^{t} \frac{1}{\Delta_s} < \infty. \quad (84)$$

**Lemma 31** Let $\Gamma_t$ be a monotonically increasing sequence that converges to 1 from below. Let $1/r < \eta < 1$ and c > 0. Then $\exists k < \infty$ such that

$$\eta^k - c \sum_{t=k+1}^{\infty} \frac{1}{r^t} \prod_{s=1}^{t} \frac{1}{\Gamma_s} > 0. \quad (85)$$

*Proof.* By Lemma 29, $\exists k_0 < \infty$ such that $\forall k \geq k_0$

$$\eta^k - c \sum_{i=k+1}^{\infty} \frac{1}{r^i} \prod_{j=1}^{i} \frac{1}{\Gamma_j} \;\; > \eta^k - \frac{c}{1-r\Gamma_k} \cdot \left(\frac{1}{r\Gamma_k}\right)^k . \quad (86)$$

Since $\eta > 1/r$ and $\Gamma_i$ converges monotonically to 1, the second term converges to 0 faster than the first term. Thus there exists some sufficiently large $k < \infty$ such that the right-hand side becomes positive.

We are now in a position to prove that the DQE Algorithm 24 converges to the ground state unconditionally, for suitable choices of the parameters.

**Theorem 32** Let $H = \sum_i h_i$ be a $k$-local Hamiltonian on a Hilbert space $\mathbb{C}^D$ with ground state projector $\Pi_0$, and let $C_\ell(H) = \sum_{i=1}^{m} h_i'$ be as in Lemma 7.

In Algorithm 24, choose $K = \sum_i h_i'$, $\varepsilon_t = \varepsilon/r^{t-t_1}$ where $t_1$ is the time step at which the last outcome 1 was obtained, with $(1 - \varepsilon - \lambda_0\varepsilon)^{4m} > 1/r$ where $\lambda_0 = |\min_i\{0, \lambda_{min}(h_i')\}|$. Choose any $\mathcal{R}$ such that $\mathcal{R}(\rho)$ has full support if $\rho$ does (e.g.

$$\mathcal{R}(\rho) = \frac{1}{D}$$

). Let $\tau$ be one of the stopping rules from Theorems 15, 19, and 23 (setting some maximum allowed run-time $t$ in the Theorem 15 case and choosing $n$ increasing with t). In each time step t, apply weak measurements $\varepsilon_i^{(t)}$ in the order i=1,...,m and then the reverse order i=m,...,1.

Here, when we say a 0 outcome was obtained in a given time step t, we mean that the $\varepsilon_{i,0}^{(t)}$ outcome was obtained for all i at that time step in Algorithm 24. Conversely, a 1 outcome is obtained if the outcome $\varepsilon_{i,1}^{(t)}$ is obtained for any i.

Then the state $\rho_\tau$ at the stopping time after running Algorithm 24 for at most $t$ steps satisfies

$$\lim_{t\to\infty} \mathrm{tr}(\Pi_0\rho_\tau) = 1. \quad (87)$$

*Proof.* The argument is reminiscent of Theorem 15.

Denote $K_{(k,n)} = \prod_{t=n}^{k} K_t$, with

$$K_t = \prod_{i=1}^{m}\big((1 - \epsilon_t)\mathbb{1} + \epsilon_t h_i'\big) \prod_{i=m}^{1}\big((1 - \epsilon_t)\mathbb{1} + \epsilon_t h_i'\big).$$

By Proposition 10, $K_t$ are $(\Gamma_t, \Delta_t, \epsilon_t)$ - AGSPs with $\Gamma_t, \Delta_t, \epsilon_t$ given by Equations (11)-(13). For any initial state $\rho_0$ at the start of a run of $n$ 0's, the state at the end of the run is

$$\rho_n = \frac{K_{(1,n)}\rho_0 K_{(1,n)}^{\dagger}}{\mathrm{tr}\big(K_{(1,n)}\rho_0 K_{(1,n)}^{\dagger}\big)} = \frac{K_{(k+1,n)}\rho_k K_{(k+1,n)}^{\dagger}}{\mathrm{tr}\big(K_{(k+1,n)}\rho_k K_{(k+1,n)}^{\dagger}\big)} \quad (88)$$

where $\rho_k = K_{(1,k)}\rho_0 K_{(1,k)}^{\dagger}$.

Since

$$(1 - \epsilon_t)\mathbb{1} + \epsilon_t h_i' \geq (1 - \epsilon_t - \lambda_0\epsilon_t)\mathbb{1}$$

and $\varepsilon_t = \varepsilon/r^t$ is monotonically decreasing, we have

$$tr(\rho_k \Pi_0) = tr\left(K_{(1,k)} \rho_0 K^{\dagger}_{(1,k)} \Pi_0\right) \geq (1 - \epsilon_t - \lambda_0 \epsilon_t)^{4mk} tr\Pi_0 \rho_0. \quad (89)$$

Using Lemma 28,

$$tr\Pi_0 \rho_n = 1 - \frac{tr\left(K_{(k+1,n)} \rho_k K^{\dagger}_{(k+1,n)} (\mathbb{1} - \Pi_0)\right)}{tr\left(K_{(k+1,n)} \rho_k K^{\dagger}_{(k+1,n)} \Pi_0\right) + tr\left(K_{(k+1,n)} \rho K^{\dagger}_{(k+1,n)} (\mathbb{1} - \Pi_0)\right)} \quad (90)$$

$$\geq 1 - \frac{(1 - tr\Pi_0 \rho_k) \prod_{t=k+1}^{n} \Delta_t + 2 \sum_{t=k+1}^{n} \epsilon_t \prod_{s=t+1}^{n} \Delta_s}{tr\Pi_0 \rho_k \prod_{t=k+1}^{n} \Gamma_t - 2 \sum_{t=k+1}^{n} \epsilon_t \prod_{s=t+1}^{n} \Gamma_s} \quad (91)$$

$$= 1 - \frac{(1 - tr\Pi_0 \rho_k) + 2 \sum_{t=k+1}^{n} \epsilon_t \prod_{s=k+1}^{t} \frac{1}{\Delta_s}}{tr\Pi_0 \rho_k - 2 \sum_{t=k+1}^{n} \epsilon_t \prod_{s=k_1}^{t} \frac{1}{\Gamma_s}} \left(\prod_{t=k+1}^{n} \frac{\Delta_t}{\Gamma_t}\right) \quad (92)$$

$$\geq 1 - \frac{(1 - tr\Pi_0 \rho_k) + 2\epsilon \sum_{t=k+1}^{n} \frac{1}{r^t} \prod_{s=k+1}^{t} \frac{1}{\Delta_s}}{(1 - \epsilon - \lambda_0 \epsilon)^{4mk} tr\Pi_0 \rho_0 - 2\epsilon \sum_{t=k+1}^{n} \frac{1}{r^t} \prod_{s=k+1}^{t} \frac{1}{\Gamma_s}} \left(\prod_{t=k+1}^{n} \frac{\Delta_t}{\Gamma_t}\right) \quad (93)$$

By <u>Corollary</u> 30 and Lemma 31, as long as $(1 - \varepsilon - \lambda_0 \varepsilon)^{4m} > 1/r$ and $tr\Pi_0 \rho_0 > 0$, which are guaranteed by the choices in the Theorem , there exists some $k < \infty$ and constants $c, d > 0$ such that

$$tr\Pi_0 \rho_n \geq 1 - \frac{c}{d} \prod_{t=k+1}^{n} \frac{\Delta_t}{\Gamma_t}. \quad (94)$$

Since for some sufficiently small $\varepsilon_t$ we have $\Delta_t < \Gamma_t$ by Proposition 10, and $\varepsilon_t$ is monotonically decreasing, it follows that $\lim_{n\to\infty} tr\Pi_0 \rho_n \to 1$.

All of the stopping rules from Theorems 15, 19 and 23 stop after a run of some number $n$ of 0's, with $n \to \infty$ as $t \to \infty$. Thus we have $\lim_{t\to\infty} tr\Pi_0 \rho_\tau = \lim_{n\to\infty} tr\Pi_0 \rho_n \to 1$, as claimed.

**Error-and Fault-Resilience**

In the presence of noise and without any error correction, the probability of obtaining the correct output of a computation decreases exponentially with time, limiting the maximum run-time of computations to some constant determined by the error rate. Error correction enables a success probability arbitrarily close to 1 in the presence external noise, independent of the length of the computation or the error rate, assuming the computational steps themselves can be carried out perfectly. Fault-tolerance enables the success probability to be maintained even when the computational steps themselves are faulty and themselves introduce errors, as long the error rate is below some threshold. However, quantum error correction and fault-tolerance come at a large cost in resource overhead (qubits and gates).

I will show that the dissipative ground state algorithms of Theorems 11, 15, 19, 23, and 32 achieve a limited form of error correction and fault-tolerance inherently, without any additional overhead. Specifically, as long as the error rate $\delta$ is below a threshold related to $\Gamma - \Delta$, the output of the algorithm from Theorems 15, 19, 23 and 32 is $O(\delta)$-close to the correct output, *independent of the run-time of the algorithm.* However, unlike full error correction and fault-tolerance, the error in the output cannot be made arbitrarily small independent of the error rate $\delta$. I will call this weaker version of fault-tolerance, where the output error is independent of the run-time but not of the error rate, fault resistance.

As in fault-tolerant quantum computation, to give a rigorous proof of fault-resilience, we must fix an error model. As in the standard fault-tolerance threshold theorems, we will assume errors occur at each step of the algorithm, and that these errors are iid in time. However, unlike the basic fault-tolerance threshold theorems, we will not assume the errors are iid "in space"-i.e. iid over the qudits making up the system-to prove our results.

**Definition 33** (Noise model) Let $\{\varepsilon_0, \varepsilon_1\}$ be the quantum instrument of Theorem 15, and $\varepsilon = \varepsilon_0 + \varepsilon_1$ the quantum process of <u>Theorem</u> 11. In each iteration of the algorithm, the maps $\{\varepsilon'_0, \varepsilon'_1\}$ or $\varepsilon' = \varepsilon'_0 + \varepsilon'_1$ are applied instead. We say that the *error rate* is $\|\varepsilon' - \varepsilon\|_{\diamond}$. Note that this noise model encompasses external noise, as well as faulty implementations of $\varepsilon$. If an additional, external noise map $\mathcal{N}$ is applied at each step of the algorithm, we can take $\varepsilon' = \mathcal{N} \circ \varepsilon$, and

$$\|\varepsilon' - \varepsilon\|_{\diamond} = \|\mathcal{N} \circ \varepsilon - \varepsilon\|_{\diamond} \leq \|\mathcal{N} - \mathcal{I}\|_{\diamond}\|\varepsilon\|_{\diamond} = \|\mathcal{N} - \mathcal{I}\|_{\diamond}.$$

Also note that this error model does not assume that the same error occurs at each step of the process, only that the probability distribution over the different errors that can occur is iid: if the noise is given by an ensemble $\{p_i \varepsilon^{(i)}\}$ where $p_i$ is the probability that the CP(T) map $\varepsilon^{(i)}$ is applied, by linearity this is equivalent to applying the CP(T) map $\varepsilon' = \Sigma_i p_i \varepsilon^{(i)}$.

In the following, we will make use of the fact that the action of a CP map $\varepsilon(\rho) = \sum_i A_i \rho A_i^{\dagger}$ as a linear map on a $D$-dimensional density matrix $\rho$ can be represented as multiplication of the vectorised density matrix $\rho\rangle = vec\ \rho$ by the $D^2$-dimensional transfer matrix $E = \sum_i A_i \otimes \overline{A}_i$, where $A_i$ are the Kraus operators of $\varepsilon$. Perturbations of the transfer matrix $E$ are related to perturbations of the map $\varepsilon$ up to a dimension factor:

**Lemma 34** If $\varepsilon$ and $\varepsilon'$ are CP maps on $\mathcal{B}(\mathcal{H}^D)$ satisfying $\|\varepsilon - \varepsilon'\|_{\diamond} \leq \delta$, then their transfer matrices E and $E'$ satisfy $\|E - E'\| \leq \sqrt{D}\delta$.

*Proof.* This follows from the standard relation $\|x\|_2 \leq \|x\|_1 \leq \sqrt{D}\|X\|_2$ on Schatten p-norms of $D \times D$ matrices:

$$\|E - E'\| = \max_{X \neq 0} \frac{\|(\varepsilon - \varepsilon')(X)\|_2}{\|X\|_2} \leq \sqrt{D} \max_{\rho \neq 0} \frac{\|(\varepsilon - \varepsilon')(\rho)\|_1}{\|\rho\|_1} \quad (95)$$

$$\leq \sqrt{D}\|\varepsilon - \varepsilon'\|_{\diamond}. \quad (96)$$

**Fixed-point process resilience**

We first prove fault-resilience for the fixed-point ground state preparation algorithm of Theorem 11.

**Theorem 35** Let $K$ be a $(\Delta, \Gamma, \varepsilon)$-AGSP for $\Pi_0$ on a Hilbert space of dimension $D$, and let $N := tr\Pi_0$ be the ground state degeneracy. Let $\varepsilon$ be the CPT map of Theorem 11 for $K$, and let $\varepsilon'$ be a CPT map such that $\|\varepsilon - \varepsilon'\|_{\diamond} \leq \delta$.

The fixed points $\rho'_\infty$ of $\varepsilon'$ satisfy:

$$tr(\Pi_0 \rho'_\infty) \geq \frac{1 - \Delta - \frac{D}{N}\delta}{(\Gamma - \Delta) + \frac{D}{N}(1 - \Gamma)} - \epsilon. \quad (97)$$

*Proof.* Let $\Pi$ be as in Definition 4. For any state $\rho$, we have

$$tr\left(\Pi \varepsilon'(\rho)\right) = tr\left(\Pi \varepsilon(\rho)\right) - tr\left(\Pi\,(\varepsilon - \varepsilon')(\rho)\right) \geq tr\left(\Pi \varepsilon(\rho)\right) - \delta. \quad (98)$$

From the proof of <u>Theorem</u> 11, we also have

$$tr\left(\Pi \varepsilon(\rho)\right) \geq \left(\Gamma - \frac{N}{D}(\Gamma - \Delta)\right) tr(\Pi\rho) + \frac{N}{D}(1 - \Delta). \quad (99)$$

Applying these to the perturbed fixed point $p'_\infty$, we obtain

$$tr(\Pi\rho'_\infty) = tr\big(\Pi\varepsilon'(\rho'_\infty)\big) \ (100)$$

$$\geq tr\big(\Pi\varepsilon(\rho'_\infty)\big) - \delta \ (101)$$

$$\geq \left(\Gamma - \tfrac{N}{D}(\Gamma - \Delta)\right)tr(\Pi\rho'_\infty) + \tfrac{N}{D}(1 - \Delta) - \delta, \ (102)$$

thus

$$tr(\Pi\rho'_\infty) \geq \frac{1 - \Delta - \frac{D}{N}\delta}{(\Gamma - \Delta) + \frac{D}{N}(1-\Gamma)}, \ (103)$$

and the follows from $\|\Pi - \Pi_0\| \leq \varepsilon$.

**Stopped process resilience**

To prove fault-resilience for the stopped process of Theorem 15 requires a little more work. We will make use of the following Perron-Frobenius-type result from "Michael Wolf. Quantum Channels & Operations Guided Tour. url: https ://www-m5.ma.tum.de/foswiki/pub/M5/Allgemeines/MichaelWolf/QChannelLecture.pdf.".

Theorem 36 [Michael Wolf. Quantum Channels & Operations Guided Tour, Theorem 6.5]. Let $\varepsilon$ be a positive map with spectral radius r. Then r is an eigenvalue of $\varepsilon$ and there is an $X \geq 0$ of $\varepsilon$ such that $\varepsilon(X) = $ rX.

We will also need some standard perturbation results for eigenvalues and eigenspaces. **Theorem 37** If $\mu$ is an eigenvalue of $A + E \in \mathcal{M}_n(\mathbb{C})$ and $X^{-1}AX = diag(\lambda_1,...,\lambda_n)$, then

$$\min_{\lambda \in \lambda(A)} |\lambda - \mu| \leq \|X\|\|X^{-1}\| \ \|E\|. \ (104)$$

**Theorem 38** [Gilbert W Stewart. Error and perturbation bounds for subspaces associated with certain eigenvalue problems". SIAM review 15.4 (1973), pp. 727-764, Theorems 4.11]

Let

$$UAU^\dagger = \begin{pmatrix} A_{11} & A_{12} \\ 0 & A_{22} \end{pmatrix}, \quad U = (V_1 \mid V_2) \ (105)$$

be a Schur decomposition of $A \in \mathcal{M}_n\mathbb{C}$. Let $E \in \mathcal{M}_n(\mathbb{C})$ be partitioned as

$$UEU^\dagger = \begin{pmatrix} E_{11} & E_{12} \\ E_{21} & E_{22} \end{pmatrix}. \ (106)$$

Let

$$s = sep(A_{11}, A_{22}) - \|E_{11}\| - \|E_{22}\|. \ (107)$$

If

$$\frac{\|E_{21}\|(\|A_{12}\| + \|E_{12}\|)}{s^2} \leq \tfrac{1}{4}, \ (108)$$

there is a matrix Q satisfying

$$\|Q\| \le 2\frac{\|E_{21}\|}{s} \quad (109)$$

such that the columns of

$$V_1' = (V_1 + V_2 Q)\left(\mathbb{1} + Q^\dagger Q\right)^{-1/2}$$

span an invariant subspace of $A + E$. The following relates $\|Q\|$ to the difference between the orthogonal projectors onto the unperturbed and perturbed invariant subspaces.

**Lemma 39** [Gilbert W Stewart. "Error and perturbation bounds for subspaces associated with certain eigenvalue problems". SIAM review 15.4 (1973), pp. 727-764, Theorems 2.2 and 2.7].

Let $U = (V_1|V_2)$ be unitary, and

$$V_1' = (V_1 + V_2 Q)\left(\mathbb{1} + Q^\dagger Q\right)^{-1/2}.$$

If $P$, $P'$ are the orthogonal projectors onto the subspaces spanned by the columns of $V_1$, $V'_1$, respectively, then

$$\|P - P'\| \le \|Q\|. \quad (110)$$

From these, we can derive the following useful perturbation bounds.

**Corollary 40** Let $\varepsilon$ be a CP map whose transfer matrix $E$ is normal. Let $\varepsilon'$ be a CP map satisfying $\|E - E'\| \le \delta$, with corresponding transfer matrix $E'$. Then the spectral radii $r(E)$ and $r(E')$ satisfy

$$|r(E') - r(E)| \le \delta. \quad (111)$$

*Proof.* Follows immediately by combining Lemma 34 and Theorems 36 and 37, noting that a normal matrix is diagonalisable by a unitary $U$ and $\|U\| = 1$.

**Corollary 41** Let $K$ be a $(\Delta, \Gamma, \varepsilon)$-AGSP for $\Pi_0$ on a Hilbert space of dimension $D$, $N := tr\Pi_0$ the ground state degeneracy, and $E_0$ the transfer matrix of the CP map $\varepsilon_0(\rho) = K\rho K^\dagger$. Let $\varepsilon_0'$ be a CP map with transfer matrix $E'$ such that

$$\|E_0' - E_0\| \le \delta < \frac{\sqrt{\Gamma}(\sqrt{\Gamma} - \sqrt{\Delta})}{2N}. \quad (112)$$

Let P be the orthogonal projector onto the invariant subspace spanned by the generalised right-eigenvectors of E associated with eigenvalues of magnitude $\le \sqrt{\Gamma\Delta}$.

Then there exists an orthogonal projector P' onto the invariant subspace spanned by the generalised right-eigenvectors of $E'$ associated with eigenvalues of magnitude $\ge \sqrt{\Gamma\Delta} - \delta$, which satisfies

$$\|P' - P\| \le \frac{2\delta}{\frac{1}{N}\sqrt{\Gamma}(\sqrt{\Gamma} - \sqrt{\Delta}) - 2\delta}. \quad (113)$$

*Proof.* Since $E_0 = K \otimes \overline{K}$, by Definition 4 the eigenvalues of $E_0$ can be partitioned into two sets: those with magnitudes $\ge \Gamma$ and those with magnitudes $\le \sqrt{\Gamma\Delta}$.

Let $U = (V_1 \mid V_2)$ be unitary, with the columns of $V_1$ spanning the $N^2$-dimensional invariant subspace associated with the eigenvalues with magnitude $\leq \sqrt{\Gamma\Delta}$ and $V_2$ spanning the $N^2$-dimensional subspace associated with those of magnitude $\geq \Gamma$, so that $P = V_1 V_1{}^\dagger$. Since $E_0$ is Hermitian, we have that $U^\dagger E_0 U = diag(A_{11}, A_{22})$ is block diagonal, with (see Gilbert W Stewart. "Error and perturbation bounds for subspaces associated with certain eigenvalue problems". SIAM review 15.4 (1973), pp. 727-764.)

$$\operatorname{sep}(A_{11}, A_{22}) \geq \frac{1}{N} \sqrt{\Gamma}\left(\sqrt{\Gamma} - \sqrt{\Delta}\right). \ (114)$$

Noting that $\|E_{12}\| \leq \|E\|$, we see that the conditions of <u>Theorem</u> 38 are fulfilled by $A = E_0$ and $E = E'_0 - E_0$, implying existence of an isometry

$$V_1' = (V_1 + V_2 Q)\left(\mathbb{1} + Q^\dagger Q\right)^{-1/2} \ (115)$$

whose columns span an invariant subspace of $E'_0$ corresponding to eigenvalues of magnitude $\geq \sqrt{\Gamma\Delta} - \delta$, with

$$\|Q\| \leq \frac{2\delta}{\sqrt{\Gamma}(\sqrt{\Gamma} - \sqrt{\Delta}) - 2\delta}. \ (116)$$

The Corollary follows by Lemma 39.

We will also need the following result from "Michael Wolf. Quantum Channels & Operations Guided Tour. url: https://www-m5.ma.tum.de/foswiki/pub/M5/Allgemeines/MichaelWolf/QChannelLecture.pdf."

Lemma 42 ("Michael Wolf. Quantum Channels & Operations Guided Tour", Lemma 8.5) Let $X \in \mathcal{M}_D(\mathbb{C})$ have Schur decomposition $UXU^\dagger = \Lambda + T$, where $\Lambda$ is diagonal with $\|\Lambda\| \leq 1$, $T$ is strictly upper-triangular, and $U$ unitary. Then, for $n \in \mathbb{N}$,

$$\|X^n\| \leq \|\Lambda^n\| + C_{D,n}\|\Lambda\|^{n-D+1} \max\left(\|T\|, \|T\|^{D-1}\right), \ (117)$$

with $C_{D,n} = (D-1)_n^{D-1}$. If in addition $2(D-1) \leq n$ then this holds with $C_{D,n} = (D-1)\binom{n}{D-1}$. With this, we can prove the following contraction upper-bound.

**Proposition 43** Let $E \in \mathcal{M}_D(\mathbb{C})$ be a (not necessarily normal) matrix of spectral radius $\leq 1$, with Jordan decomposition $E = VJV^{-1}$. Let $P$ be the orthogonal projector onto the $d$-dimensional invariant subspace spanned by the generalised eigenvectors of $E$ associated with eigenvalues of magnitude $\leq \Delta$.

Then

$$\|PE^n\| \leq \kappa_J^2 \left(1 + (d-1) n^{d-1} \Delta^{-d+1}\right) \Delta^n. \ (118)$$

where $\kappa_J = \|V\|\|V^{-1}\|$ is the Jordan condition number.

*Proof.* Write the Jordan decomposition $VEV^{-1} = J_1 \oplus J_2$ where $J_1$ contains all the Jordan blocks for eigenvalues with magnitude $\leq \Delta$. The first d rows of V span the invariant subspace onto which P projects, so $P = V(S_1 \oplus 0)^{-1}$ for some invertible matrix $S_1$, Thus

$$PE^n = V(S_1 \oplus 0)(J_1 \oplus J_2)^n V^{-1} = V(S_1 J_1^n \oplus 0)V^{-1}. \ (119)$$

Now,

$$\|S_1\| \; = \; \|S_1 \oplus 0\| \; = \; \|V^{-1} P V\| \; \le \kappa_J \|P\| \; = \; \kappa_J. \; (120)$$

So

$$\|P E^n\| \le \kappa_J \|S_1\| \|J_1^n\| \le \kappa_J^2 \|J_1^n\|. \; (121)$$

Since $J_1 = \Lambda + T$ is a $d$-dimensional upper-triangular matrix with diagonal part

$$\Lambda \le \Delta \mathbb{1}$$

and $T$ the matrix with 1's along the off-diagonal, we can apply Lemma 42 to obtain

$$\|P E^n\| \le \kappa_J^2 \left( \left( \|\Lambda^n\| \; + \; C_{d,n} \|\Lambda^{n-d+1}\| \right) \max\left( \|T\|, \|T^{d-1}\| \right) \right) \; (122)$$

$$\le \kappa_J^2 (1 \; + \; (d-1) n^{d-1} \Delta^{-d+1}) \Delta^n. \; (123)$$

We will also need a lower-bound on the contraction of the trace under $\varepsilon_0'$ , which follows straightforwardly from Theorem 36.

**Lemma 44** Let $\varepsilon$ be a positive map with spectral radius $\ge r$. Then

$$tr\left( \varepsilon^n(\mathbb{1}) \right) \ge r^n.$$

*Proof.* Let $p = X/tr(X)$ with the $X \ge 0$ from Theorem 36. Then

$$\mathbb{1} - \rho \ge 0$$

and

$$tr\left( \varepsilon^n(\mathbb{1}) \right) = tr\left( \varepsilon^n(\rho) \right) + tr\left( \varepsilon^n(\mathbb{1}-\rho) \right) \ge tr\left( \varepsilon^n(\rho) \right) \ge r^n tr(\rho) = r^n. \; (124)$$

We are now in a position to prove fault-resilience of the stopped process ground state preparation algorithms of Theorems 15, 19 and 23.

**Theorem 45** Let $K$ be a $(\Delta, \Gamma, \varepsilon)$-AGSP for $\Pi_0$ on a Hilbert space of dimension $D$, and let $N := tr\Pi_0$ be the ground state degeneracy. Let $\{\varepsilon_0, \varepsilon_1\}$ be the quantum instrument of Theorem 15 for K, and let $\{\varepsilon_0', \varepsilon_1'\}$ be a quantum instrument such that

$$\|\varepsilon_0' - \varepsilon_0\|_\diamond \le \frac{\delta}{\sqrt{D}} < \frac{\sqrt{\Gamma}(\sqrt{\Gamma}-\sqrt{\Delta})}{2N\sqrt{D}}. \; (125)$$

Consider the stopped process whereby we iterate $\{\varepsilon_0', \varepsilon_1'\}$ , starting from the maximally mixed state

$$\rho_0 = \frac{\mathbb{1}}{D},$$

and stop at some point when we have just obtained a run of $n$ 0's.

The state $\rho'_n$ at the stopping time satisfies

$$tr\Pi_0\rho'_n \geq 1 - \epsilon - \frac{2\delta}{\frac{1}{N}\sqrt{\Gamma}(\sqrt{\Gamma}-\sqrt{\Delta})-2\delta} \ (126)$$

$$- \left(\frac{\sqrt{\Delta}+\delta/\sqrt{\Gamma}}{\sqrt{\Gamma}-\delta/\sqrt{\Gamma}}\right)^n \kappa_J D \left(1 + (D^2 - N^2 - 1) n^{D^2-N^2-1}\Delta'^{-D^2+N^2+1}\right), \ (127)$$

where $\kappa_J$ is the Jordan condition number of the transfer matrix of $\varepsilon'_0$ .

In particular,

$$\lim_{n\to\infty} tr(\Pi_0\rho'_n) \geq 1 - \epsilon - \frac{2\delta}{\frac{1}{N}\sqrt{\Gamma}(\sqrt{\Gamma}-\sqrt{\Delta})-2\delta}. \ (128)$$

*Proof.* Let $\Pi$ be the projector for $K$ from <u>Definition</u> 4, and let $E_0$ and $E'_0$ be the transfer matrices for $\varepsilon_0$ and $\varepsilon'_0$, respectively. Since $E_0 = K \otimes \overline{K}$, by <u>Definition</u> 4 $\Pi \otimes \Pi$ is the orthogonal projector onto the $N^2$-dimensional eigenspace of $E_0$ with eigenvalues $\geq \Gamma$, and

$$P = \mathbb{1} - \Pi \otimes \Pi$$

is the orthogonal projector onto the $D^2$ - $N^2$-dimensional eigenspace with eigenvalues $\leq \sqrt{\Gamma\Delta}$ .

Noting that

$$\|E'_0 - E_0\| \leq \sqrt{D} \|\varepsilon' - \varepsilon\|,$$

by Lemma 34, Corollary 41 implies that there is an orthogonal projector P' with

$$\|P' - P\| \leq \frac{2\delta}{\frac{1}{N}\sqrt{\Gamma}(\sqrt{\Gamma}-\sqrt{\Delta})-2\delta} \ (129)$$

such that P' projects onto the ($D^2$ - $N^2$)-dimensional subspace corresponding to eigenvalues of magnitude $\leq \Delta' := \sqrt{\Gamma\Delta} + \delta$. Note that, since $\delta < \sqrt{\Gamma}(\sqrt{\Gamma} - \sqrt{\Delta})/2$, this implies that *rankP' = rankP = N.*

Using <u>Proposition</u> 43, we have

$$\left|\left\langle \mathbb{1}\left|P'E'^n_0\right|\frac{\mathbb{1}}{D}\right\rangle\right| = \left|\left\langle \frac{\mathbb{1}}{\sqrt{D}}\left|P'E'^n_0\right|\frac{\mathbb{1}}{\sqrt{D}}\right\rangle\right| \ (130)$$

$$\leq \kappa_J \left(1 + (D^2 - N^2 - 1) n^{D^2-N^2-1}\Delta'^{-D^2+N^2+1}\right)\Delta'^n, \ (131)$$

By <u>Lemma</u> 44 and Corollary 40, we also have

$$\left|\left\langle \mathbb{1}\left|E'^n_0\right|\frac{\mathbb{1}}{D}\right\rangle\right| = \frac{1}{D} tr\left(\varepsilon'^n_0(\mathbb{1})\right) \geq \frac{\Gamma'^n}{D}. \ (132)$$

Proceeding similarly to Theorem 15, using Equations 131 and 132 we obtain

$$|\langle \mathbb{1}|P'|\rho_n'\rangle| = \frac{\left\| \langle \mathbb{1}|P'E_0'^n|\frac{\mathbb{1}}{D}\rangle \right\|}{\left\| \langle \mathbb{1}|E_0'^n|\frac{\mathbb{1}}{D}\rangle \right\|} \quad (133)$$

$$\leq D\left(\frac{\Delta'}{\Gamma'}\right)^n \kappa_J \left(1 + (D^2 - N^2 - 1)\, n^{D^2-N^2-1}\Delta'^{-D^2+N^2+1}\right) \quad (134)$$

$$= D\left(\frac{\sqrt{\Delta}+\delta/\sqrt{\Gamma}}{\sqrt{\Gamma}-\delta/\sqrt{\Gamma}}\right)^n \kappa_J \left(1 + (D^2 - N^2 - 1)\, n^{D^2-N^2-1}\Delta'^{-D^2+N^2+1}\right) \quad (135)$$

But

$$tr(\Pi_0\rho_n') \geq tr(\Pi\rho_n') - \|\Pi - \Pi_0\| \quad (136)$$

$$= \langle \mathbb{1}|\Pi \otimes \Pi|\rho_n'\rangle - \|\Pi - \Pi_0\| \quad (137)$$

$$= 1 - |\langle \mathbb{1}|P|\rho_n'\rangle| - \|\Pi - \Pi_0\| \quad (138)$$

$$\geq 1 - |\langle \mathbb{1}|P'|\rho_n'\rangle| - \|P - P'\| - \|\Pi - \Pi_0\|, \quad (139)$$

and the Theorem follows.

**Hardware implementation**

We work out explicit implementation details for the DQE Algorithm 24 on Pauli Hamiltonians, i.e. Hamiltonians whose local terms are tensor products of Pauli operators. Since almost all quantum computers act on qubits, it makes sense to focus on this case when working out implementation details. This is in any case without loss of generality, since qudits of any dimension can be embedded into log$d$ qubits, and all qubit Hamiltonians can be decomposed in terms of Paulis.

Consider a Pauli Hamiltonian

$$H = \sum_v \alpha_v\, h_v, \quad h_v = \bigotimes_{i \in v} \sigma_v^{(i)}, \quad (140)$$

where $\alpha_v \in \mathbb{R}$ and $\sigma_v \in \{X, Y, Z\}$. Note that

$$h_v^2 = \mathbb{1}.$$

If we take $\ell = 1$ in Lemma 7, we have $C_1(x) = 1 - x$ and

$$H' = C_1(H) = \sum_v \alpha_v \frac{1 - h_v}{2} = \sum_v \alpha_v \Pi_v, \quad (141)$$

where

$$\Pi_v := \frac{\mathbb{1} - h_v}{2}$$

is a projector since we have

$$h_v^2 = \mathbb{1}.$$

Thus we need to implement generalised measurements of the form

$$E_0 = (\mathbb{1} - \epsilon\alpha)\mathbb{1} + \epsilon\alpha\Pi. \ (142)$$

To form a complete set of measurement operators $\{E_0, E_1\}$, we require

$$E_1^\dagger E_1 = \mathbb{1} - E_0^\dagger E_0 = \epsilon(2 - \epsilon)(\mathbb{1} - \Pi), \ (143)$$

hence

$$E_1 = \sqrt{\epsilon(2 - \epsilon)}(\mathbb{1} - \Pi). \ (144)$$

The Steinspring dilation of the generalised measurement $\{E_0, E_1\}$ is the isometry

$$V = 0\rangle \otimes E_0 + 1\rangle \otimes E_1 = \begin{pmatrix} 1 & 0 \\ 0 & (1-\epsilon)\mathbb{1} \\ 0 & 0 \\ 0 & \sqrt{\epsilon(2-\epsilon)}\mathbb{1} \end{pmatrix} \begin{matrix} 0\rangle\Pi \\ 0\rangle\Pi^\perp \\ 1\rangle\Pi \\ 1\rangle\Pi^\perp \end{matrix}, (145)$$

followed by a projective measurement of the ancilla qubit in the computational basis. This can be completed to the unitary

$$U = \begin{pmatrix} \mathbb{1} & 0 & 0 & 0 \\ 0 & (1-\epsilon)\mathbb{1} & 0 & -\sqrt{\epsilon(2-\epsilon)}\mathbb{1} \\ 0 & 0 & \mathbb{1} & 0 \\ 0 & \sqrt{\epsilon(2-\epsilon)}\mathbb{1} & 0 & (1-\epsilon)\mathbb{1} \end{pmatrix} \begin{matrix} 0\rangle\Pi \\ 0\rangle\Pi^\perp \\ 1\rangle\Pi \\ 1\rangle\Pi^\perp \end{matrix} (146)$$

$$= \mathbb{1} \otimes \Pi + R \otimes (\mathbb{1} - \Pi), \ (147)$$

where

$$R = \begin{pmatrix} 1 - \epsilon & -\sqrt{\epsilon(2 - \epsilon)} \\ \sqrt{\epsilon(2 - \epsilon)} & 1 - \epsilon \end{pmatrix}. \ (148)$$

But $U$ is a controlled-$R$ operation on the ancilla qubit, controlled by the outcome of a

$$\{\Pi, \mathbb{1} -$$

$\Pi\}$ projective measurement on the main qubits. Since $\Pi$ is the projector onto the +1 eigenspace of a Pauli string $\otimes_{i=1}^{k}\sigma_i$, this can be implemented by [*"M. A. Nielsen and I. L. Chuang. Quantum computation and quantum information. Cambridge University Press, 2000."*,section 4.3] a Clifford circuit plus two single-qubit rotations:

This is shown in Figure 4 where $H_\sigma$ are the single-qubit unitaries that rotate into the $\sigma$ eigenbasis, i.e.

$$H_{\mathbb{1}} = \mathbb{1},$$

$H_x = H$, $H_y = SH$ and

$$H_z = \mathbb{1}.$$

.

The circuit in Figure 4 and described above implements the required weak measurement of a single local Hamiltonian term $h_v$ in Equation 140. To implement one complete step of Algorithm 24, a circuit of this form must be replicated for each local term in Equation 140. Note that for Hamiltonian terms acting on disjoint sets of qubits, these circuits can be implemented in parallel. So the for a local Hamiltonian on a lattice, the total circuit depth for a single step of Algorithm 24 is constant, independent of the number of qubits. (More generally, the optimal circuit depth is proportional to the chromatic number of the interaction graph of the Hamiltonian.)

This whole quantum circuit must then be applied repeatedly, until the stopping condition of Algorithm 24 is satisfied. After each circuit application, depending on the measurement outcomes in that step, the resampling operation $\mathcal{R}$ of Algorithm 24 may need to be applied before applying the next iteration of the circuit. If simple replacement (either global or local) with the maximally mixed state is used as the resampling rule, this can be implemented straightforwardly, e.g. by discarding the appropriate qubits and bringing in fresh ones initialised in a random computational basis state. For global resampling, the entire quantum state is discarded and replaced; for local resampling, only those qubits involved in the specific local term(s) that gave outcome 1 in the weak measurement are discarded and replaced. In both cases, local and global, the resampling can also be applied immediately after a 1 outcome is obtained for a local term, rather than waiting until all local terms have been measured in the current time step. If the resampling is applied after each local measurement, then only a single ancilla qubit is required; this ancilla can be reused in every measurement. The overall structure of Algorithm 24 is illustrated in Figure 1.

Although this algorithm can be implemented on any quantum hardware able to carry out intermediate measurements during the circuit, the structure of the DQE Algorithm 24 lends itself particularly well to hardware architectures with "flying" qubits which can readily be cycled through the same circuit repeatedly. In particular, many of the features of integrated photonic quantum hardware seem especially well-suited to DQE:

- Repeatedly cycling photonic qubits through the same quantum circuit module is a natural part of photonic quantum computing hardware.
- Clifford circuits are inherently less costly to implement in the measurement- and fusion-based quantum computation schemes being implemented on photonic hardware; most of the DQE circuit consists of Clifford gates.
- The only non-Clifford gate required-the single-qubit $R$ rotation-is the natural single-qubit gate produced by a non-equal beam-splitter.
- Moreover, this single-qubit rotation is always applied to the same ancilla qubit (if the same ancilla is reused for each measurement, as described above). So the non-Clifford gate in the circuit only needs to be implemented for this one qubit line.

Photonic quantum computers also do not operate by continuous supply of control signals. Instead, they are implemented on a chip, by fabricating an integrated photonic circuits (using similar processes to conventional chips) where the quantum gates and detectors are physical structures on the chip that the photons pass through. This means that where the same circuit is used repeatedly as in the present case, a single circuit can be used repeatedly on successive loops. The encoding simply requires preparing the photons in a manner which represents the Hamiltonian of interest and the procedure is then to loop the prepared photons through the circuit in accordance with the principles set out herein until a stopping condition is met.

**Variational DQE**

Whilst the DQE of Algorithm 24 does not require any optimisation over parameters to succeed (Theorem 32), there is also a natural extension to a variational version of the algorithm. This may have advantages in achieving faster convergence to the ground state on certain systems, albeit at additional computation cost in implementing the variational optimisation step.

In the variational version of the DQE algorithm (VDQE), the total number of iterations is fixed in advance to some value $t$, e.g. determined by what is feasible on available hardware, and an initial sequence of $\varepsilon_i$ in Algorithm 24 is chosen. The DQE algorithm is then run, and the energy of the output state measured as in VQE. The sequence of $\varepsilon_i$ values are then variationally optimised over to minimise the energy, as in VQE.

The above examples are to be understood as illustrative examples. Further examples are envisaged. It is to be understood that any feature described in relation to any one example may be used alone, or in combination with other features described, and may also be used in combination with one or more features of any other of the examples, or any combination of any other of the examples. Furthermore, equivalents and modifications not described above may also be employed without departing from the scope of the invention, which is defined in the accompanying claims.

**Dissipative Gibbs Sampler (DGS)**

In developing the discussion of Gibbs states, the following notation is used

- $\|O\|$ to denote the operator norm of operators
- $\|\rho\|_1$ to denote the trace norm of quantum states
- $\rho_G = (e^{-\beta H})/\mathrm{tr}(e^{-\beta H})$ to denote the Gibbs state of a Hamiltonian $H$ at inverse temperature $B$ ($\beta = 1/k_B T$ where $k_B$ is the Boltzmann constant and T is the temperature - in some cases herein the relation $\beta = 1/T$ may be used, signifying that natural units are used in which $k_B = 1$), whenever H is clear from the context and $\rho_G(H)$ when it is not.

The Gibbs states may be achieved by altering the stopping conditions discussed above. Specifically, by applying a probabilistic stopping condition (i.e. stopping or continuing according to a probability, $p$, each loop of the algorithm), Gibbs states can be achieved. In particular, a probability which depends on the length of a string of previously accepted perturbations drives the system towards a Gibbs state. An example format is:

$$p(n) = \frac{\lambda^{2n}/(2n)!}{\cosh(\lambda) - \sum_{j=1}^{n-1} \lambda^{2j}/(2j)!}$$

in which

$$\lambda = \frac{\beta \kappa}{\epsilon (1-\epsilon)^{2m-1}}$$

and

$$\kappa = \sum_{i=1}^{m} \|h_i\|$$

and this is proved to approach the Gibbs state below.

We first give a general but precise definition of the dissipative Gibbs sampling (DQS) algorithm.

**Algorithm 46** (Dissipative Gibbs Sampler). Let $H = \Sigma_i h_i$ be a local Hamiltonian, and $\{\varepsilon_0, \varepsilon_1\}$ be the quantum instrument defined by:

$$\varepsilon_0(\rho) = K\rho K \quad \varepsilon_1(\rho) = \left(1 - \mathrm{tr}\left(K\rho K\right)\right)\rho_0$$

$$(149)$$

where $K$ is a Hermitian AGSP of $H$ and $K^2 \leq I$ (the identity matrix). Let $0 \leq r_n \leq 1$ for $n \in \mathbb{N}_0$. As above, the DGS algorithm consists of successively applying the quantum instrument $\{\varepsilon_0, \varepsilon_1\}$ to an initial state $\rho_0$ and stopping according to a stopping condition. Here, however, after a run of $n$ zeros, the stopping condition is probabilistic with probability $r_n$ of stopping or continuing running with probability $1 - r_n$.

We will show that, for suitable choices of parameters, the DGS Algorithm 46 samples from the Gibbs state $\rho_G = e^{-\beta H}/Z$ at inverse temperature $\beta = 1/k_B T$, where $Z = \mathrm{tr}(e^{-\beta H})$. Here $k_B$ is the Boltzmann constant - note that in some cases herein natural units are used in which $k_B = 1$, and $\beta$ is expressed as simply $1/T$.

**Theorem 47**. Consider the process of Algorithm 46, and choose:

$$K = \prod_{i=1}^{m}\big((1-\epsilon)\mathbb{1} + \epsilon\kappa_i k_i\big) \prod_{i=m}^{1}\big((1-\epsilon)\mathbb{1} + \epsilon\kappa_i k_i\big)$$

$$(150)$$

where

$$k_i = \frac{\mathbb{1} - h_i/\|h_i\|}{2} \;\;;\;\; \kappa = \sum_i \|h_i\| \;\;;\;\; \kappa_i = \frac{\|h_i\|}{\kappa}$$

$$(151)$$

Further, choose the probabilities (here $r_n$ is used, although this is equivalent to $p(n)$ used elsewhere herein):

$$r_n = \frac{\dfrac{\lambda^{2n}}{(2n)!}}{\cosh(\lambda) - \sum_{j=1}^{n-1} \lambda^{2j}/(2j)!}$$

$$(152)$$

where

$$\lambda = \frac{\beta\kappa}{\epsilon(1-\epsilon)^{2m-1}}$$

and the initial state

$$\rho_0 = \mathbb{1}/D.$$

Then the expected state $\mathbb{E}_{\rho_\tau}$ at the stopping time $\tau$ satisfies:

$$\big\|\mathbb{E}_{\rho_\tau} - \rho_G\big\|_1 = O(\beta\epsilon\kappa m^2) \qquad\qquad (153)$$

and the expected stopping time $\mathbb{E}_\tau$ is given by:

$$\mathbb{E}_\tau = \frac{\cosh(\lambda)\,\mathrm{tr}\Big(\dfrac{1}{1-K^2}\Big)}{\mathrm{tr}\big(\cosh(\lambda K)\big)} + \frac{\mathrm{tr}\Big(\dfrac{\cosh(\lambda K)}{1-K^{-2}}\Big)}{\mathrm{tr}\big(\cosh(\lambda K)\big)}$$

$$(154)$$

Note that taking $K$ above implies that the quantum instrument has the desirable property of consisting of weak-measuring *local* terms in the Hamiltonian in sequence. We now collect some results required to prove Theorem 47.

**Lemma 48.** The expected output state of Algorithm 46 is given by:

$$\rho_\tau = \frac{\sum_{n=0}^{\infty} r_n R_n \mathcal{E}_0^n(\rho_0)}{\sum_{n=0}^{\infty} r_n R_n \operatorname{tr}\mathcal{E}_0^n(\rho_0)}$$

$$(155)$$

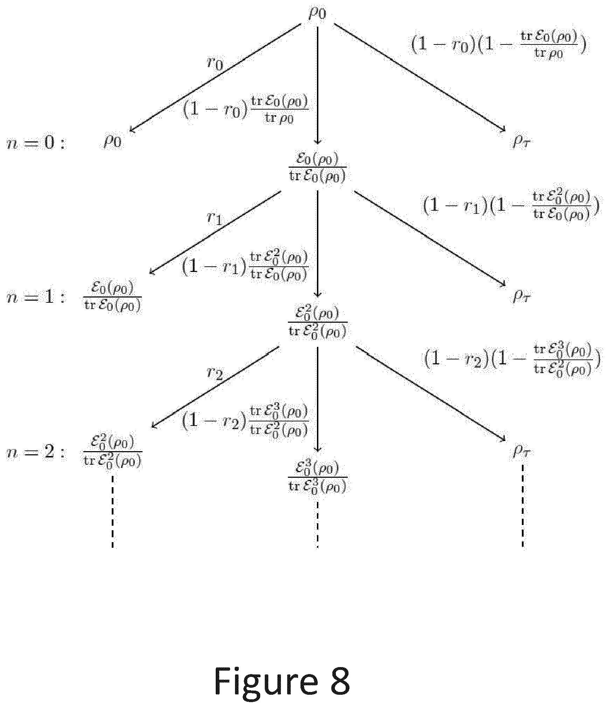

where $R_n = \prod_{j=0}^{n-1}\left(1 - r_j\right)$ . The proof of this is as follows. We compute the expected state recursively, using the fact that if we measure 1 at any point, Algorithm 46 dictates we reset to the maximally mixed state $\rho_0$ and begin the process all over again. The stopped process may be visualised as the probability tree in Figure 8, where we have replaced the maximally mixed state (which we reset to $\rho_0$ if we measure 1) with $\rho_\tau$ . We have:

$$\rho_\tau = r_0\rho_0 + (1 - r_0)\left(1 - \frac{\operatorname{tr}\mathcal{E}_0(\rho_0)}{\operatorname{tr}\rho_0}\right)\rho_\tau$$

$$+(1 - r_0)r_1\frac{\operatorname{tr}\mathcal{E}_0(\rho_0)}{\operatorname{tr}\rho_0} + (1 - r_0)(1 - r_1)\left(\frac{\operatorname{tr}\mathcal{E}_0(\rho_0)}{\operatorname{tr}\rho_0} - \frac{\operatorname{tr}\mathcal{E}_0^2(\rho_0)}{\operatorname{tr}\rho_0}\right)\rho_\tau$$

$$+(1 - r_0)(1 - r_1)r_2\frac{\operatorname{tr}\mathcal{E}_0^2(\rho_0)}{\operatorname{tr}\rho_0} + (1 - r_0)(1 - r_1)(1 - r_2)\left(\frac{\operatorname{tr}\mathcal{E}_0^2(\rho_0)}{\operatorname{tr}\rho_0} - \frac{\operatorname{tr}\mathcal{E}_0^3(\rho_0)}{\operatorname{tr}\rho_0}\right)\rho_\tau$$

$$+\cdots$$

$$= \sum_{n=0}^{\infty} r_n R_n \frac{\operatorname{tr}\mathcal{E}_0^n(\rho_0)}{\operatorname{tr}\rho_0} + \rho_\tau \sum_{n=0}^{\infty} R_{n+1}\left(\frac{\operatorname{tr}\mathcal{E}_0^n(\rho_0)}{\operatorname{tr}\rho_0} - \frac{\operatorname{tr}\mathcal{E}_0^{n+1}(\rho_0)}{\operatorname{tr}\rho_0}\right)$$

$$(156)$$

Where for convenience we define $R_n = \prod_{l=0}^{n-1}(1 - r_l)$ . Noting that:

$$\sum_{n=0} R_{n+1}\left(\operatorname{tr}\mathcal{E}_0^n(\rho_0) - \operatorname{tr}\mathcal{E}_0^{n+1}(\rho_0)\right)$$

$$= \sum_{n=0} R_n (1 - r_n)\operatorname{tr}\mathcal{E}_0^n(\rho_0) - \sum_{n=0} R_n \operatorname{tr}\mathcal{E}_0^n(\rho_0) + R_0\operatorname{tr}\rho_0$$

$$= \sum_{n=0} r_n R_n \mathcal{E}_0^n(\rho_0) + \operatorname{tr}(\rho_0)$$

$$(157)$$

we arrive at Eq. (155) as claimed. The following Corollary follows immediately.

**Corollary 49.** If the probabilities $\{r_n\}$ are chosen such that $r_n R_n \propto \lambda^{2n}/(2n)!$ , and $\rho_0 = \mathbb{1}/D$ , then the state produced by Algorithm 46 is

$$\rho_\tau = \frac{\cosh(\lambda K)}{\operatorname{tr}\cosh(\lambda K)}$$

$$(158)$$

We show that such a choice of $\{r_n\}$ exists in the following Lemma.

**Lemma 50.** If we choose the $\{r_n\}$ (or $p(n)$) as:

$$r_n = \frac{\lambda^{2n}/(2n)!}{\cosh(\lambda) - \sum_{j=1}^{n-1} \lambda^{2j}/(2j)!}$$

(159)

then we have that $r_n R_n = \lambda^{2n}/[(2n)! \cosh(\lambda)]$, as required of Corollary 49. This is because demanding that $r_n R_n \propto \lambda^{2n}/(2n)!$ is equivalent to:

$$\frac{r_{n+1} \prod_{j=0}^{n}(1-r_j)}{r_n \prod_{j=0}^{n-1}(1-r_j)} = r_{n+1} \frac{1-r_n}{r_n} = \frac{\lambda^2}{(2n+2)(2n+1)}$$

(160)

Straightforward induction shows that this recursive formula for $r_n$ is solved by:

$$r_n = \frac{r_0 \frac{\lambda^{2n}}{(2n)!}}{1 - \sum_{j=1}^{n-1} r_0 \frac{\lambda^{2j}}{(2j)!}}$$

(161)

Additionally, recall that the $\{r_n\}$ must satisfy $0 \leq r_n \leq 1$ for all $n$ (since $r_n = p(n)$ is a probability). It is simple to check that this condition is satisfied if and only if $r_0 \leq 1/\cosh(\lambda)$. We will later see, and it is also intuitively clear, that the expected stopping time is minimised if the $\{r_n\}$ are maximal. As the $\{r_n\}$ are increasing with $r_0$, we choose $r_0 = 1/\cosh(\lambda)$ to minimize the runtime.

**Lemma 51.** If we use $K = (1 - \varepsilon)^{2m-1}(1 - (\varepsilon/\kappa)H)$ and $\lambda = \frac{\beta\kappa}{\epsilon(1-\epsilon)^{2m-1}}$ in Corollary 49 the expected output state of Algorithm 1 satisfies:

$$\|\rho_\tau - \rho_G\|_1 O\left(e^{-\frac{\beta\kappa}{\epsilon}}\right)$$

(162)

Proof. Plugging $K$ and $\lambda$ as above into Corollary 49 allows us to calculate

$$\rho_\tau = \frac{\cosh(\lambda K)}{\operatorname{tr}\cosh(\lambda K)} = \frac{e^{\frac{\beta\kappa}{\epsilon}-\beta H} + e^{-\frac{\beta\kappa}{\epsilon}+\beta H}}{\operatorname{tr}\left(e^{\frac{\beta\kappa}{\epsilon}-\beta H} + e^{-\frac{\beta\kappa}{\epsilon}+\beta H}\right)}$$

$$= \frac{e^{-\beta H} + e^{-2\frac{\beta\kappa}{\epsilon}}e^{\beta H}}{\operatorname{tr}e^{-\beta H}\left(1 + e^{-2\frac{\beta\kappa}{\epsilon}}\frac{\operatorname{tr} e^{\beta H}}{\operatorname{tr} e^{-\beta H}}\right)}$$

$$= \frac{\rho_G}{1 + e^{-2\frac{\beta\kappa}{\epsilon}}\frac{\operatorname{tr} e^{\beta H}}{\operatorname{tr} e^{-\beta H}}} + \frac{e^{-2\frac{\beta\kappa}{\epsilon}}e^{\beta H}}{\operatorname{tr}\left(e^{-\beta H} + e^{-2\frac{\beta\kappa}{\epsilon}}e^{\beta H}\right)}$$

$$(163)$$

which implies

$$\|\rho_\tau - \rho_G\|_1 = \left\|\rho_G\left(\frac{e^{-2\frac{\beta\kappa}{\epsilon}}\operatorname{tr} e^{\beta H}}{\operatorname{tr} e^{-\beta H}}\right) + e^{\beta H}\frac{e^{-2\frac{\beta\kappa}{\epsilon}}}{\operatorname{tr}\left(e^{-\beta H} + e^{-2\frac{\beta\kappa}{\epsilon}}e^{\beta H}\right)}\right\|_1$$

$$(164)$$

Using that

$$\|\rho_G\|_1 = 1 \text{ and } De^{-\beta\kappa} \le \operatorname{tr} e^{\beta H} \le De^{\beta\kappa}$$

$$(165)$$

as well as the usual operator norm inequalities gives the desired result.
**Lemma 52.** The expected stopping time of Algorithm 1 is

$$\tau = \frac{\sum_{n=0}^{\infty} R_n \operatorname{tr}\mathcal{E}_0^n(\rho_0)}{\sum_{n=0}^{\infty} r_n R_n \operatorname{tr}\mathcal{E}_0^n(\rho_0)}$$

$$(166)$$

Proof. This proceeds similarly to the derivation of the expected state. Consider again Fig. 8 but replace each leaf on the nth level on the left with n + 1 (the number of steps from the root) and the leaf on the right with $\tau + n + 1$. The expected run time $\tau$ is then given by summing over the values of all leaves weighted by the probability of the path to reach them:

$$\tau = \sum_{n=0}^{\infty} (n+1)\, r_n R_n \frac{\operatorname{tr}\mathcal{E}_0^n(\rho_0)}{\operatorname{tr}\rho_0} + (\tau + n + 1)R_{n+1}\left(\frac{\operatorname{tr}\mathcal{E}_0^n(\rho_0)}{\operatorname{tr}\rho_0} - \frac{\operatorname{tr}\mathcal{E}_0^{n+1}(\rho_0)}{\operatorname{tr}\rho_0}\right) \quad (167)$$

and thus:

$$\tau = \frac{\sum_{n=0}(n+1)\,r_n R_n \mathrm{tr}\mathcal{E}_0{}^n(\rho_0) + (n+1)R_{n+1}\left(\mathcal{E}_0{}^n(\rho_0)\text{-}\,\mathrm{tr}\mathcal{E}_0{}^{n+1}(\rho_0)\right)}{\mathrm{tr}\rho_0 - \sum_{n=0} R_{n+1}\left(\mathrm{tr}\mathcal{E}_0{}^n(\rho_0)\text{-}\,\mathrm{tr}\mathcal{E}_0{}^{n+1}(\rho_0)\right)}$$

(168)

The denominator may be simplified identically as in Lemma 48, and the numerator as (by using $R_{n+1} = (1 - r_n)R_n$):

$$\sum_{n=0}(n+1)\,r_n R_n(\mathrm{tr}\mathcal{E}_0{}^n(\rho_0)\tau + n + 1)R_n(1-r_n)\mathrm{tr}\mathcal{E}_0{}^n(\rho_0) - nR_{n\mathrm{tr}\mathcal{E}_0{}^n(\rho_0)}$$

$$= \sum_{n=0} R_n\,\mathrm{tr}\mathcal{E}_0{}^n(\rho_0)$$

(169)

Note that Eq. (168) is indeed well defined, i.e. the numerator and denominator are both finite, for $\varepsilon_0$ corresponding to the operator $K$ in both Theorem 47 and Lemma 51. This is because by construction the eigenvalues of either K are in (0, 1) for any Hamiltonian with more than one term i.e. $m > 1$. Thus, we can bound $\mathrm{tr}K^{2n} \leq D\lambda_{\max}^{2n}$ max and hence if $\lambda_{\max} < 1$ then both numerator and denominator converge as $r_n R_n$ and $R_n$ are bounded by 1.

We will also need the following two Lemmas (Lemmas 53 and 55:

**Lemma 53**. Let $H,H'$ be two Hamiltonians such that $\|H - H'\| \leq \varepsilon$.

Then

$$F(\rho_G(H'), \rho_G(H)) \geq e^{-\beta\epsilon}$$

(170)

**Corollary 54**.
Standard bounds of the trace norm in terms of the fidelity allow us to write:

$$\|\rho_G(H) - \rho_G(H')\|_1 \leq \sqrt{1 - e^{-\beta\epsilon}} = O(\beta\epsilon)$$

(171)

if $\|H' - H\| \leq \varepsilon$.

**Lemma 55**. Let:

$$\widetilde{K} = (1 - \epsilon)^{2m-1}\left(1 - \frac{\epsilon}{\kappa}H\right)$$

(172)

and

$$K = \prod_{i=1}^{m}\left((1-\epsilon)\mathbb{1} + \epsilon\kappa_i k_i\right)\prod_{i=m}^{1}\left((1-\epsilon)\mathbb{1} + \epsilon\kappa_i k_i\right)$$

(173)

with $\kappa_i$ and $k_i$ as in Theorem 47. Then

$$\left\|\widetilde{K} - K\right\|_1 = O(\epsilon^2 (1 - \epsilon)^{2m-2} m^2)$$

(174)

Proof. Expanding $K$ in powers of $\varepsilon$ directly shows that the 0th and 1st coincide with those of $\widetilde{K}$. Applying the triangle inequality and using that $\|k_i\| = 1$ then gives the desired result.

We are now finally in a position to prove the main Theorem 47: Let

$$\widetilde{K} = (1 - \epsilon)^{2m-1} \left(1 - \frac{\epsilon}{\kappa} H\right)$$

(175)

as in Lemma 55 and

$$K = \prod_{i=1}^{m} \left((1 - \epsilon)\mathbb{1} + \epsilon \kappa_i k_i\right) \prod_{i=m}^{1} \left((1 - \epsilon)\mathbb{1} + \epsilon \kappa_i k_i\right)$$

(176)

as in Theorem 47. We use Lemma 55 to implicitly define Q via $K - \widetilde{K} = \varepsilon^2 (1 - \varepsilon)^{2m-2} m^2 Q$, with $\|Q\| = O(1)$ and may write:

$$H' = H + \frac{\epsilon \kappa m^2}{1 - \epsilon} Q \quad \text{and} \quad K = (1 - \epsilon)^{2m-1} \left(1 - \frac{\epsilon}{\kappa} H'\right)$$

(177)

Lemma 51 asserts that running Algorithm 46 with $\widetilde{\varepsilon}_0 (\rho) = \widetilde{K} \rho \widetilde{K}^\dagger$ or $\varepsilon_0 = K \rho K^\dagger$ and the $\{r_n\}$ from Lemma 50 can produce states $\widetilde{\rho}_\tau$ and $\rho_\tau$ respectively that satisfy:

$$\|\widetilde{\rho}_\tau - \rho_G(H)\|_1 = O\left(e^{-\beta \kappa / \epsilon}\right) \quad \text{and} \quad \|\rho_\tau - \rho_G(H')\|_1 = O\left(e^{-\beta \kappa / \epsilon}\right)$$

(178)

Furthermore, Corollary 54 together with Eq. (177) imply that:

$$\|\rho_G(H') - \rho_G(H)\|_1 = O(\beta \epsilon \kappa m^2)$$

(179)

which combined with Eq. (178) and the triangle inequality finally yields:

$$\|\rho_\tau - \rho_G(H)\|_1 = O(\beta \epsilon \kappa m^2) + O\left(e^{-\beta \kappa / \epsilon}\right)$$

(180)

This shows the first part of Theorem 47.

To compute the expected stopping time recall from Lemma 52 that

$$\tau = \frac{\sum_{n=0}^{\infty} R_n \mathrm{tr} K^{2n}}{\sum_{n=0}^{\infty} r_n R_n \mathrm{tr} K^{2n}}$$

$$(181)$$

and from Lemma 50 that:

$$\sum_n r_n R_n K^{2n} = \frac{\cosh(\lambda K)}{\cosh(\lambda)}$$

$$(182)$$

with the $\{r_n\}$ from Corollary 49. Using $R_{n+1} = R_n - r_n R_n$ we find that:

$$\sum_{n=0}^{\infty} R_n K^{2n} = K^{-2} \sum_{n=0}^{\infty} R_{n+1} K^{2n+2} + \sum_{n=0}^{\infty} r_n R_n K^{2n}$$

$$(183)$$

so that:

$$(1 - K^{-2}) \sum_{n=0}^{\infty} R_n K^{2n} = \sum_{n=0}^{\infty} r_n R_n K^{2n} - K^{-2}$$

$$(184)$$

and thus:

$$\sum_{n=0}^{\infty} R_n K^{2n} = \frac{\sum_{n=0}^{\infty} r_n R_n K^{2n} - K^{-2}}{(1 - K^{-2})}$$

$$(185)$$

Evaluating Eq. (181) by substituting in equation Eqs. (182) and (184) one arrives at

$$\tau = \frac{\mathrm{tr}\left(\frac{\cosh(\lambda K) - \cosh(\lambda) K^{-2}}{1 - K^{-2}}\right)}{\mathrm{tr}\left(\cosh(\lambda K)\right)}$$

$$(186)$$

which shows the second part of Theorem 47.

**Proposition 56.** The expected runtime $\mathbb{E}\tau$ of Algorithm 46 for the choice of $K$, $\lambda$, $r_n$ and $\rho_0$ of Theorem 47 is bounded by:

$$\mathbb{E}\tau \le \frac{\dfrac{\cosh\lambda}{\cosh(\lambda(1-\epsilon)^{2m})}}{1-\left(1-\dfrac{m-1}{m}\epsilon\right)^{4m}} - \frac{(1-\epsilon)^{4m}}{1-(1-\epsilon)^{4m}}$$

(187)

## Claims

1. A method of approximating a ground state or a Gibbs state of a k-local Hamiltonian using a quantum computer system comprising a set of data qudits, the method comprising:

   (a) providing a set of local generalised measurements corresponding to the terms of the k-local Hamiltonian,
   (b) initialising the set of data qudits into an initial state;
   (c) performing a local generalised measurement from the set of local generalised measurements, wherein step (c) perturbs a subset of the data qudits from the initial state to a perturbed state;
   (d) accepting or rejecting the perturbation based on the measurement outcome of said local generalised measurement,
   (e) repeating steps (c) to (d) for another local generalised measurement unless or until a stopping condition has been met.

2. The method of claim 1 wherein a stopping condition comprises repeating steps (c) to (d) until all of the local generalised measurements in the set have been performed.

3. The method of claim 1 or 2, wherein if the perturbation is rejected a subset or all of the data qudits are reinitialised.

4. The method of any preceding claim wherein the stopping condition is dependent on the number of successive perturbations that are accepted.

5. The method of claim 4, wherein the stopping condition comprises:

   recording each instance in a first time period in which at least two consecutive perturbations have been accepted and the number of successive perturbations in each such instance;
   noting the number of consecutive accepted perturbations in the instance with the largest number of consecutive accepted perturbations;
   and stopping during a time after the first time period after the first subsequent instance of accepted perturbations that is as long as or longer than any one of the recorded instances; or wherein the stopping condition comprises:
   recording each instance in which at least two consecutive perturbations have been accepted and the number of successive perturbations in each such instance;
   noting the number of consecutive accepted perturbations in the instance with the largest number of consecutive accepted perturbations; and
   stopping after N*F number of instances at the first subsequent instance of accepted perturbations that is as long as or longer than any one of the recorded instances,
   wherein N is a user selected number of instances and F is a fraction; optionally wherein the stopping condition comprises stopping once a number, n of consecutive perturbations have been accepted; or wherein the stopping condition comprises:
   selecting a sequence of thresholds nt;
   recording each instance in which one or more consecutive perturbations have been accepted and the number of successive accepted perturbations in each such instance; and stopping on an accepted perturbation if the accepted perturbation occurred in a $t^{\text{th}}$ repetition of step (d) and the most recent number of consecutive accepted perturbations is at least as large as $n_t$; or wherein the stopping condition comprises:

   selecting a sequence of thresholds $s_i$ where i is a positive integer;
   recording each instance in which one or more consecutive perturbations have been accepted and the number of successive accepted perturbations in each such instance; and
   stopping on an accepted perturbation if the current instance of consecutive accepted perturbations is the i$^{th}$ such instance and the number of consecutive accepted perturbations in the current instance is the same length or shorter than at most $s_i$ - 1 of the previously recorded such instances.

6.  The method of any one of claims 1 to 4, wherein the stopping condition comprises, each time a perturbation is accepted after *n* prior acceptances, stopping with a probability $0 < p < 1$ or repeating steps (c) and (d) for a further iteration with a probability $(1-p)$.

7.  The method of claim 6, wherein the stopping condition comprises:

    recording each instance in which one or more consecutive perturbations have been accepted and the number *n* of successive accepted perturbations in each such instance; and
    stopping with probability $p = p(n)$ or repeating steps (c) and (d) for a further iteration with probability $(1-p(n))$ where the probability $p(n)$ depends on the number n of successive accepted perturbations.

8.  The method of any preceding claim wherein the perturbation is tuneable by enacting a unitary matrix having terms dependent on a tuning parameter epsilon, $\varepsilon$.

9.  The method of claim 8 comprising, after an acceptance in step (d), reducing the magnitude of $\varepsilon$, followed by repeating the method using the reduced magnitude of $\varepsilon$ as a parameter controlling the perturbation; or comprising:
    variationally optimising a sequence of values of epsilon, by performing the method with an initial sequence of values of epsilon; measuring an energy the k-local Hamiltonian; and updating the sequence of values of epsilon to reduce the value of said energy.

10. The method of any preceding claim wherein the initialising step (b) comprises initialising one or more ancilla qudit(s), and wherein the measuring step (c) of the method comprises interacting each data qudit on which the local generalised measurement is to be performed with an ancilla qudit and measuring the state of the ancilla qudit.

11. The method of claim 10, wherein the perturbing step (c) comprises:

    performing a unitary rotation on an ancilla qudit;
    interacting again each data qudit on which the local generalised measurement is to be performed with the ancilla qudit;
    performing an inverse of the unitary rotation on the ancilla.

12. The method of any previous claim wherein step (a) comprises the transformation from the terms of the k-local Hamiltonian into a set of local generalised measurements.

13. The method according to any previous claim wherein each of the provided local generalised measurements is k'-local such that the local generalised measurement of step (c) perturbs a subset of data qudits comprising no more than k' data qudits.

14. A quantum computing system adapted to perform the method of any of claims 1 to 13.

15. A non-transient computer readable medium comprising instructions which cause a computer to enact the method steps of any one of claims 1 to 13.

EP 4 290 425 A1

**100**

| | |
|---|---|
| Providing a set of local generalised measurements corresponding to the terms of a k-local Hamiltonian | **110** |
| Initialising a set of data qudits into an initial state | **120** |
| Performing a local generalised measurement from the set of local generalised measurements on a subset of the data qudits | **130** |
| Accepting or rejecting the perturbation of the subset based on the measurement outcome of said local generalised measurement | **140** |
| Repeating the performing and accepting or rejecting steps 130 and 140 for another local generalised measurement unless or until a stopping condition has been met | **150** |

stopping condition not met

# Figure 1

**200**

| 210 |
| Computing a polynomial function of the matrices representing the terms in the k-local Hamiltonian and expanding the result into a sum of monomials |

| 220 |
| Grouping the monomials into sets, such that the sum over all the monomials in any such set is a Hermitian matrix whose eigenvalues are greater than or equal to 0 and less than or equal to 1 |

| 230 |
| Selecting the set of local generalised measurements to be the local generalised measurements represented by these Hermitian matrices |

## Figure 2

130

132
Perform a unitary rotation on an ancilla qudit

134
Interact each data qudit on which the local generalised measurement is to be performed with the ancilla qudit

136
Perform an inverse of the unitary rotation on the ancilla qudit

138
Measure the state of the ancilla qudit

# Figure 3

Figure 4

Figure 5

Figure 6

Input

Quantum Computer (comprising a set of data qudits)

810

Output

840

Controller (Classic Computer)

820

830

800

Figure 7

Figure 8

Figure 9A

Figure 9B

Figure 9C

# EUROPEAN SEARCH REPORT

| | Application Number |
|---|---|
| | EP 23 17 8301 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | A. GILYÉN, O. SATTATH: "On preparing ground states of gapped Hamiltonians: an efficient quantum Lovász local lemma", ARXIV.ORG, CORNELL UNIVERSITY LIBRARY, 201 OLIN LIBRARY CORNELL UNIVERSITY ITHACA, NY 14853, 25 November 2016 (2016-11-25), XP080734638, DOI: 10.48550/arXiv.1611.08571 * sections 1-4 * | 1-15 | INV. G06N10/60 G06N10/20 ADD. G06N10/40 |
| A | F. G. S. L. BRANDÃO, M. J. KASTORYANO: "Finite correlation length implies efficient preparation of quantum thermal states", COMMUNICATIONS IN MATHEMATICAL PHYSICS, vol. 365, no. 1, 15 May 2018 (2018-05-15), pages 1-16, XP036678288, DOI: 10.1007/S00220-018-3150-8 * the whole document * | 1-15 | |
| A | M. OZOLS ET AL: "Quantum rejection sampling", ACM TRANSACTIONS ON COMPUTATION THEORY (TOCT), vol. 5, no. 3, 22 August 2013 (2013-08-22), pages 1-33, XP058030860, DOI: 10.1145/2493252.2493256 * the whole document * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 14 October 2023 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

## EUROPEAN SEARCH REPORT

**Application Number**

EP 23 17 8301

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | T. S. CUBITT: "Dissipative ground state preparation and the dissipative quantum eigensolver", ARXIV.ORG, CORNELL UNIVERSITY LIBRARY, 201 OLIN LIBRARY CORNELL UNIVERSITY ITHACA, NY 14853, 21 March 2023 (2023-03-21), XP091465374, DOI: 10.48550/arXiv.2303.11962 * sections 4-9 * | 1-5,8-15 | |
| X,P | D. ZHANG ET AL: "Dissipative quantum Gibbs sampling", ARXIV.ORG, CORNELL UNIVERSITY LIBRARY, 201 OLIN LIBRARY CORNELL UNIVERSITY ITHACA, NY 14853, 10 April 2023 (2023-04-10), XP091480713, DOI: 10.48550/arXiv.2304.04526 * section 2 * | 1-15 | |

**TECHNICAL FIELDS SEARCHED (IPC)**

The present search report has been drawn up for all claims

| Place of search | Date of completion of the search | Examiner |
|---|---|---|
| The Hague | 14 October 2023 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Fast quantum algorithms for traversing paths of eigenstates. *arXiv: 1005.3034,* 2010
- **FRANK VERSTRAETE ; MICHAEL M. WOLF ; J. IGNACIO CIRAC.** Quantum computation, quantum state engineering, and quantum phase transitions driven by dissipation. *Nature Physics,* 2009, vol. 5, 633-636, https://arxiv.org/abs/0803.1447
- Cooling and its Demon-like Algorithmic Quantum Cooling and its Realization with Quantum Optics. *arXiv: 1208.2256,* 2012
- **XU.** Cooling and its Demon-like Algorithmic Quantum Cooling and its Realization with Quantum Optics. *arXiv: 1208.2256,* 2012
- **ITAI ARAD et al.** An area law and sub-exponential algorithm for 1D systems. *arXiv: 1301.1162,* 2013
- **JUSTIN MELVIN.** Sum of the first k binomial coefficients for fixed n. *Math-Overflow, https://mathoverflow.net/q/17217*
- **Y. YU ; T. WANG ; R. J. SAMWORTH.** A useful variant of the Davis-Kahan theorem for statisticians. *Biometrika,* 2015, vol. 102 (2), 315-323
- **PHILIPPE FLAJOLET ; ROBERT SEDGEWICK.** Analytic combinatorics. Cambridge University Press, 2009
- **YS CHOW et al.** Optimal selection based on relative rank (the "secretary problem"). *Israel Journal of mathematics,* 1964, vol. 2 (2), 81-90
- **MICHAEL WOLF.** *Quantum Channels & Operations Guided Tour, https ://www-m5.ma.tum.de/foswiki/pub/M5/Allgemeines/MichaelWolf/QChannelLecture.pdf.*
- **MICHAEL WOLF.** *Quantum Channels & Operations Guided Tour*
- **GILBERT W STEWART.** Error and perturbation bounds for subspaces associated with certain eigenvalue problems. *SIAM review,* 1973, vol. 15 (4), 727-764
- **M. A. NIELSEN ; I. L. CHUANG.** Quantum computation and quantum information. Cambridge University Press, 2000